(19) Europäisches Patentamt
European Patent Office
Office européen des brevets

(11) EP 1 740 629 B1

(12) EUROPEAN PATENT SPECIFICATION

(45) Date of publication and mention of the grant of the patent:
**30.03.2011 Bulletin 2011/13**

(21) Application number: **05735790.7**

(22) Date of filing: **29.04.2005**

(51) Int Cl.:
*C08F 220/30* (2006.01) *C08F 220/06* (2006.01)
*C08G 63/00* (2006.01) *C08G 65/00* (2006.01)
*C08G 69/00* (2006.01) *C08G 71/00* (2006.01)
*C08G 64/02* (2006.01) *C08G 64/04* (2006.01)
*G02C 7/10* (2006.01) *G02C 7/04* (2006.01)
*G02C 7/02* (2006.01) *G02B 3/00* (2006.01)

(86) International application number:
**PCT/AU2005/000619**

(87) International publication number:
**WO 2005/105875 (10.11.2005 Gazette 2005/45)**

(54) **PHOTOCHROMIC COMPOSITIONS AND ARTICLES COMPRISING SILOXANE, ALKYLENE OR SUBSTITUTED ALKYLENE OLIGOMERS**

PHOTOCHROME ZUSAMMENSETZUNGEN UND GEGENSTÄNDE MIT SILOXAN-; ALKYLEN-ODER SUBST.-ALKYLENOLIGOMEREN

COMPOSITIONS PHOTOCHROMES ET ARTICLES COMPRENANT DES OLIGOMERES DE SILOXANE, D'ALKYLENE OU D'ALKYLENE SUBSTITUE

(84) Designated Contracting States:
**AT BE BG CH CY CZ DE DK EE ES FI FR GB GR HU IE IS IT LI LT LU MC NL PL PT RO SE SI SK TR**

(30) Priority: **30.04.2004 AU 2004902302**
**02.09.2004 US 606664 P**

(43) Date of publication of application:
**10.01.2007 Bulletin 2007/02**

(73) Proprietor: **Advanced Polymerik Pty Ltd**
**Notting Hill VIC 3168 (AU)**

(72) Inventors:
- **EVANS, Richard, Alexander**
  **Glen Waverley, Victoria 3158 (AU)**
- **SUCH, Georgina, Kate**
  **Richmond, Victoria 3121 (AU)**
- **MALIC, Nino**
  **Rowville, Victoria 3178 (AU)**
- **DAVIS, Thomas, Paul**
  **Randwick, New South Wales 2031 (AU)**
- **LEWIS, David, Andrew**
  **Marion, South Australia 5043 (AU)**

(74) Representative: **Hübner, Gerd et al**
**Rau, Schneck & Hübner**
**Patentanwälte**
**Königstrasse 2**
**90402 Nürnberg (DE)**

(56) References cited:
**WO-A-2004/041961** **WO-A1-00/15629**
**WO-A1-97/05213** **WO-A1-2004/041961**
**JP-A- 7 134 356** **US-A- 3 918 972**
**US-A- 5 623 040** **US-A- 5 821 287**
**US-A1- 2003 099 910**

- **DATABASE WPI Week 198847, Derwent Publications Ltd., London, GB; Class A89, AN 1988-335669, XP003018452 & JP 63 250 381 A (EPSON CORP) 18 October 1988**
- **DATABASE WPI Week 199012, Derwent Publications Ltd., London, GB; Class A41, AN 1990-088039, XP003018453 & JP 2 042 084 A (TORAY IND INC) 13 February 1990**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 740 629 B1

## Description

### Field

The present invention relates to polymerizable composition and a polymeric article exhibiting photochromic response, which article comprises a polymeric matrix formed from said polymerizable composition.

### Background

Photochromism is a property which has been used in the manufacture of light transmissible articles for many years. A compound is said to be photochromic if it changes colour when irradiated and reverts to its original colour when irradiation ceases. The use of photochromics in the manufacture of spectacle lenses is a particular benefit as it enables the efficiency with which radiation is filtered to be varied with the intensity of radiation. Photochromics also have potential for use in a range of other polymeric compositions in products or in applications such as windows, automotive windshields, automotive and aircraft transparencies, coating compositions, optical switches and data storage devices. Photochromics could also be used to improve the security of documents and currency, for example by providing a security check under UV light or by indicating exposure to light during photocopying.

Despite the use of photochromic compounds in applications such as lenses there have been a number of problems which reduce the versatility and potential of this technology.

It is advantageous to control the rate at which photochromic polymeric compositions colour when exposed to radiation and fade on cessation of this exposure. In many situations, it is important to provide rapid colouring and fading kinetics particularly for lenses and spectacles. In some, however, the rate of coloration and fade is slow so that a compromise needs to be made in the components and properties of the substrate to enhance the rate of coloration and fade. For example, many photochromics colour and fade more rapidly in soft materials and yet, for applications such as spectacles or structural panels, abrasion resistance and hardness are important. This trade off between rate of transformation and hardness produces a dilemma for manufacturers between toughness and photochromic efficiency. In polymeric lenses many photochromics exhibit a slower rate of fade than is desirable. It is desirable to be able to control the fade kinetics of photochromic compounds in a wide range of media.

Another examples of cases where control of fade is desirable is with a mixture of photochromic compounds. It is sometimes necessary to use a mixture of photochromic compounds to achieve the desirable colour such as brown or grey. However, the different photochromic dyes used in combination of achieve these colours often differ slightly in the rate of fade so that the mixture undergoes an unattractive variation in colour during fade. In other cases it may be desirable to reduce the rate of fade so that colouration or fade is gradual and controlled. For example in optical switches it may be desirable for the photochromic article to undergo a very gradual change.

Another problem of photochromic polymeric compositions is the tendency of photochromic dyes to migrate within the matrix or "bloom" to the substrate surface. This may result in loss or significant reduction in photochromism over time. In order to fix a photochromic into a matrix it is possible to functionalise a photochromic with an unsaturated group. This results in the photochromic dye being tethered to the matrix if the unsaturated group is involved in the polymerization reactions that form the matrix. However unless the resulting matrix is relatively soft the rate of fade is adversely effected. Hu et al Pure Appl. Chem. AA(6) pp 803-810 (1996) also reported that tethering of a photochromic leads to the decolouration rate remaining almost constant with increasing dye concentration. In contrast untethered dyes undergo a significant change of rate with concentration. Further the fade observed is significantly slower when this photochromic is tethered at concentrations less than 15 wt %. As commercial application will generally have dye concentrations below 15wt%, the tethering of a dye to a polymer matrix is expected to slow the fade speed.

A number of other workers have examined tethering of photochromics.

International Publication No. 97/05213 (Sola International Holdings Ltd) describes a photochromic monomer which contains an organic spacer group which is in the preferred aspect a polyalkylene oxide of from 0 to 5 repeating units.

International Publication No. WO01/15629 (PPG Industries) discloses napthopyran photochromic compounds comprising a substituent

$$-A[(C2H_4O)_x(C_3H_6O)_y(C_4H_8O)Z]D$$

where the total of x, y and z is 1 to 50 and D is a polymerisable group.

The range of "contemplated napthopyrans" disclosed on page 3 is limited to compounds containing up to 4 ethylene oxide groups and result in a reduction in fade speed of up to 28%. The polyalkylene glycols are used to increase the compatibility of the dye resin with the matrix and the resins and oligomer are chosen for their compatibility. There is little reduction in fade speed as a result of varying the number of alkoxy units. Indeed 3 units provides the best fade speed of the exemplified 1 to 4 units.

In their subsequent application (US Pub. 2003/0141490) PPG Industries attempt to provide a photochromic which is less dependant on the matrix in which it is used. The application also has the aim of modifying the photochromic so it can be more compatible with the host matrix. In order to reduce the half llife, polymerisable photochoromic compounds of the type disclosed in International Application WO97/05213 (Sola) and polymerisable napthopyrans disclosed in the previous PPG Industries application are reacted with a copolymerisable material to form a polymer of a glass transition temperature less than 23˚C. The subsequent incorporation of the low Tg photochromic copolymer (which is free of polymerisable groups), into a rigid polymer matrix is said to provide a fade speed which is less dependant on the nature of the matrix.

Another example of cases where control of fade is desirable is with a mixture of photochromic compounds. It is sometimes necessary to use a mixture of photochromic compounds to achieve the desirable colour such as brown or grey. However, the different photochromic dyes used in combination to achieve these colours often differ slightly in the rate of fade so that the mixture undergoes an unattractive variation in colour during fade. In other cases it may be desirable to reduce the rate of fade so that colouration or fade is gradual and controlled. For example in optical switches it may be desirable for the photochromic article to undergo a very gradual change.

Another problem associated with photochromic compounds is their lifetime. Many photochromic compounds have a relatively short lifetime before they fatigue, due to chemical degradation, and either no longer undergo reversible colour change or become less efficient. This is a problem, for example, in more hostile chemical environments such as in high index lenses containing sulfur-containing polymers or the surface of paper.

The WO 2004/041961 A1 (prior art under Art. 54(3) EFC) relates to a photochromic polymeric composition comprising a polymer matrix and a photochromic compound which is an adduct comprising a photochromic moiety and at least one pendant oligomer group to provide a rate of fade of the photochromic polymeric composition which is significantly changed when compared with the corresponding composition comprising the photochromic compound without said pendent oligomer.

There is no teaching in this prior art to use a dye having a group reactive with a matrix monomer and indeed, this is said to be avoided.

## Summary

We have now found that the photochromic properties of photochromic dyes in a polymeric substrate can be controlled by using polymerisable dye monomer which is reactive during the polymerization process wherein the dye monomer comprises a photochromic moiety and one or more pendant oligomer groups each having a terminal reactive group so that the photochromic dye becomes tethered to the host matrix during curing. We have found that by using certain oligomer groups rapid fade characteristics can be obtained. This result is achieved even when the resulting cured polymer incorporating the dye monomer has a relatively high Tg. Without wishing to be bound by theory we believe that certain oligomer provide a nanoenvironment for the photochromic moiety to produce a significant change in the rate of fade particularly when the host matrix and oligomer linking group are chemically different. The one or more pendant oligomer groups which are reactive with the host matrix change the rate of fade of the photochromic moiety in the polymeric matrix.

According to claim 1 the invention provides a polymerizable composition for forming a photochromic article of glass transition temperature of at least 50˚C on curing, the composition comprising:

(a) a polymerizable composition comprising a monomer component or resin formed therefrom; and
(b) a photochromic dye monomer comprising a photochromic moiety and at least one oligomeric group having at least one group reactive with the monomer component during or following curing wherein the oligomer group comprises at least three monomer units selected from siloxane and substituted alkylene of formula III

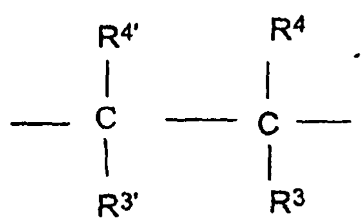

III

wherein

$R^4$ is selected from the group consisting of hydrogen, halogen, alkyl, hydroxy, hydroxy alkyl, nitrile and alkoxy;

$R^3$ is selected from the group consisting of halogen, hydroxy, alkoxy, aryloxy, heterocyclic, carboxyl, nitrile, alkoxycarbonyl, substituted alkoxycarbonyl, carbamoyl, N-alkylcarbamoyl, N,N-dialkylcarbamoyl, carbaniloyl, alkylphenylaminocarbonyl, alkoxyphenylaminocarbonyl, acyl, substituted acyl and the groups of formula:

$$-L-(O)_q-(Z-O)_p-ZY';$$

and

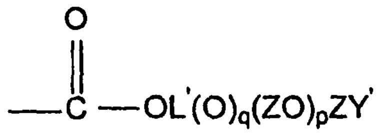

wherein
p is the number of (ZO) units and is preferably from 1 to 20 and more preferably 2 to 15, q is 0 or 1, Z is selected from the group consisting of $C_2$-$C_4$ alkylene, dialkylsilyl, diarylsilyl and diaryloxysilyl; L is a bond or a linking group such as $C_1$ to $C_6$ alkylene, aryl, alkaryl and aralkyl; and Y is a terminal group selected from the group consisting of hydrogen, alkyl, hydroxyl and alkoxy, alkoxyalkoxy, hydroxyalkoxy and aryloxy, tri-($C_1$ to $C_6$ alkyl) silane, di($C_1$ to $C_6$ alkyl)phenyl silane;
$R^{4'}$ is hydrogen or halogen;
$R^{3'}$ is hydrogen or halogen and $R^3$ and $R^{3'}$ may together form a group of formula

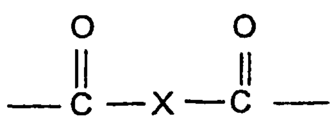

wherein
X is selected from the group consisting of oxygen and the group $NR^5$ wherein $R^5$ is selected from the group of hydrogen, alkyl, aryl, substituted alkyl and substituted aryl.

In the preferred aspect the invention provides a polymerizable composition for forming a photochromic article of glass transition temperature of at least 50°C on curing,
wherein the polymerizable composition comprises a monomer component.

The polymerizable composition preferably comprises a photochromic dye monomer of formula I:

$$(PC)_q-(LR_n)_m \qquad I$$

wherein:

- PC is a photochromic moiety;
- L is a bond or linking group;
- R is an oligomer;
- m and n are independently selected integers from 1 to 3;
- q is 1 or 2;
- R is independently selected from oligomers comprising at least 3 monomeric units selected from the group consisting of alkylene, substituted alkylene, and di-(hydrocarbyloxy)siloxane; and

wherein at least one oligomer R comprises at least one group which is reactive with the monomer component on curing of the polymerisable composition.

In a particularly preferred embodiment the invention provides a composition for forming a photochromic light transmissible article the composition comprising:

- a polymerizable composition comprising a monomer component including a crosslinking monomer; and
- a photochromic dye monomer of formula I reactive with the monomer component during curing.

The polymerizable composition may comprise one or more of monomers, prepolymers, crosslinking monomers and binders.

In a second aspect the invention provides a photochromic compound which is an adduct comprising a photochromic moiety and at least one pendant oligomers comprising a functional group reactive with a monomer composition for forming a photochromic polymeric article.

In a third aspect the invention provides a photochromic article having a Tg of at least 50˚C. comprising a polymeric matrix formed by polymerization of a monomer composition comprising a photochromic monomer comprising a photochromic moiety which is tethered to a reactive group which has undergone reaction to become part of the polymer via a pendant oligomer comprising at least 3 and more preferably at least 5 and more preferably at least 7 monomeric units selected from the group consisting of alkylene, substituted alkylene, and di-(hydrocarbyloxy)siloxane.

The polymeric substituent may be a homopolymer, a copolymer of two or more units of formula I or a copolymer comprising one or more units of formula I and additional monomeric units derived from optionally substituted olefinic compounds where the oligomer is a copolymer the monomers may be in blocks or randomly distributed. It may be preferred to use blocking of specific monomer at the end of the polymer chain remote from the photochromic to enhance nanoencapsulation.

As a result of the oligomer tether the rate of fade of the photochromic is significantly increased compared with the corresponding composition comprising an electrically equivalent dye without the pendant oligomer. Generally the photochromic article is solid at ambient temperature and typically it has a Tg of at least 50˚C, preferably at least 70˚C, and most preferably at least 80˚C.

The disclosure provides a process for preparing a photochromic article comprising:

(a) forming a polymerizable composition as hereinabove described;
(b) casting the photopolymerizable composition or applying it as a coating to a substrate;
(c) polymerizing the polymerizable composition to provide a polymeric matrix incorporating a photochromic monomeric unit comprising a photochromic moiety covalently tethered to the matrix polymer via an oligomer comprising at least 3 more Preferably at least 5 and still more preferably at least 7 monomeric units selected from the group consisting of , alkylene, substituted alkylene, and di-(hydrocarbyl)siloxane.

In the preferred embodiment of the invention the oligomer significantly increases the rate of fade so that the fade half life and/or the time taken to reach a ¾ reduction in absorbance is reduced by at least 30% compared with the corresponding composition in absence of the oligomers and preferably at least 50%.

The advantage of the photochromic compound of the invention (comprising at least one oligomer having at least one reactive functional group) is that the oligomer chain may coil about or near the photochromic group to provide nanoencapsulation facilitating more rapid conversion between ring-open and ring-closed forms. The oligomer chains may provide a low Tg nanoenvironment or otherwise favourably alter the local environment. Accordingly for faster colouration and fade, it is preferred that the oligomer attached to the photochromic compound of the invention has a relatively low Tg. For example the Tg is preferably less than 25˚C. More preferably the compounds of the invention are non-crystalline at room temperature and more preferably liquid at room temperature, this making them easier to disperse and dissolve in the monomeric composition.

Another method of slowing the colouration and fade is to use high Tg oligomers. This will restrict switching by providing a local rigid nano-environment to give slower colouration and fade. This is in contrast to low Tg oligomers that provide a local soft, flexible environment that provide rapid switching.

Preferably the oligomer will be of sufficient length to provide a rate of fade for the photochromic which is significantly greater (that is, fade occurs more quickly) than the corresponding reactive photochromic without the oligomer.

The compatibility of the oligomer chain with the host matrix may also influence the rate of fade.

The trend in compatibility of an oligomer with the polymer matrix in many cases is consistent with polarity. Thus, an oligomer of similar polarity to the polymer matrix is regarded as compatible. For example polyalkylene glycol oligomer groups are compatible with polar polymeric hosts such as acrylate and polyalkylene and poly(arylalkylene) oligomers are compatible with non-polar resins such as polyolefins and styrenic polymers (eg polystyrene, SBR etc).

Contrary to what may be expected from the prior art we have found that the reduction in half-life is generally greater for oligomers when the constituent monomers are less compatible with the host matrix.

We have also found that the nanoenvironment provided by the presence of one or more oligomer chains significantly improves the photochromic life of compounds of the invention when compared with unsubstituted Photochromic compounds.

## Detailed Description

The invention relates to dye monomers comprising a photochromic moiety and at least one pendant oligomer

group selected from the group consisting of polyalkylene oligomers, substituted polyalkylene oligomers, polyfluroalkylene oligomers, polydialkylsilyloxy oligomers, polysilicic acid oligomers (silicates) or derivatives thereof, poly ($ZSi(OH)_3$) oligomers and derivatives thereof, poly ($ZSiCl_3$) oligomers and derivatives thereof, poly ($ZSi(OMe)_3$) oligomers and derivatives thereof, and mixtures thereof. Wherein Z is an organic group, preferably Z is selected from the group consisting of hydrogen, alkyl, optionally substituted alkyl, haloalkyl, cycloalkyl, optionally substituted cycloalkyl, hydroxy, amino, optionally substituted amino, alkoxy, aryloxy, aryl, optionally substituted aryl, carboxylic acid and derivatives thereof.

The combined number of monomer units of the defined type in the oligomers is generally at least 3 preferably at least 5 and more preferably at least 7. In some cases it is still more preferable that the oligomer comprise at least 10 of said units. The relative compatibility of the units and active will influence the number of units required to achieve a significant reduction in half-life. Where the monomers and relatively compatible longer chains may be required whereas when the monomers are relatively incompatible with the matrix shorter chains may be sufficient to achieve the same reduction.

At least one oligomer has at least one group reactive with the monomer composition for forming the polymer matrix. In this way the dye becomes tethered to the backbone of the polymer matrix via one or more reactive oligomer and yet has a rate of fade which is enhanced when compared with a corresponding electrically identical photochromic compound without a tether between the dye and reactive group.

The dye may comprise additional non-reactive or reactive oligomer groups and may comprise one, two, three or more reactive groups in an oligomer chain. It is preferred that at least one reactive group is a terminal reactive group and to optimise nanoencapsulation in many instances it is preferred to use a single terminal reactive group.

The modified photochromics of the invention generally are of formula I

$$(PC)_q\text{-}(L(R)_n)_m \qquad \text{I}$$

wherein

PC is the photochromic moiety;
L is a bond or linking group;
R is an oligomer chain comprising at least one group reactive with a monomer composition during curing;
n is an integer of from 1 to 3;
m is an integer of from 1 to 3; and
q is 1 or 2; and

wherein the total number of monomer units in the oligomer groups (R) is typically at least 3 and more preferably at least 5 and more preferably at least 7.

Preferably R is independently selected from oligomers comprising at least 3 and more preferably at least 5 and still more preferably at least 7 monomeric units selected from the group consisting of alkylene, substituted alkylene, and di-(hydrocarbyloxy)siloxane; and wherein at least one oligomer R comprise at least one group for polymerizing with the monomer composition on curing of the polymerizable composition.

The nature of the polymerizable group may be chosen having regard to the nature of the polymer matrix and the monomers to be used in preparation of the polymer matrix. The terminal group will be reactive with the monomer composition used to prepare the polymer matrix under the required curing conditions.

The terminal reactive group may polymerize with the polymer matrix by any of a range of reaction types such as radical polymerization, ionic polymerization, step growth addition reactions, condensation polymerisation reactions or sol-gel type reactions.

The optimum reaction type and reactive group will depend on the host matrix and the matrix of the modified photochromics.

In some cases (particularly where stepwise addition polymerization is required) it is preferred that the photochromic monomer of the invention comprise a plurality of reactive groups. A plurality of reactive groups may enable a significant number of photochromic monomers to be copolymerized or reacted into the backbone without terminating polymer growth. For example, the terminal reactive groups may together provide a plurality of active hydrogen containing groups such as alcohol, thiol, amine or acid groups for allowing chain growth by addition or condensation polymerization to prepare polyamides, polyurethanes, polyesters, thiol-ene polymers, epoxide polymers and phenolic resins.

The photochromic monomer may be incorporated into an existing polymer, for example by reactive processing of the polymer during extrusion or other processing step. Examples of reactive processing include grafting and transesterification.

Examples of preferred polymerizable reactive groups may be selected from the group consisting of amino; alkylamino (including mono and di-alkylamino); hydroxyl; thio; mercapto; epoxy; carbamate; alkylhalo; unsaturated groups (such as acryloyl, methacryloyl, acryloyloxy and methacryloyloxy), maleimides; the group of formula $-SiX^1X^2X^3$

wherein $X^1$, $X^2$ and $X^3$ are independently selected from the group consisting of hydrogen, halogen, hydrocarbyl and hydrocarbyloxy and wherein at least one of $X^1$, $X^2$ and $X^3$ is selected from hydrogen, halogen and hydrocarbyloxy; dithioester (-S-C=S-R); trithiocarbonate (-S-C=S-S-R); dithiocarbamate (-S-C=S-NRR); xanthate (-S-C=S-O-R); carboxylic acids; carboxylic esters; and $C_1$ to $C_6$ alkyl substituted with a group selected from hydroxy, thio, amino, alkyl amino, carboxyl, ($C_1$ to $C_6$ alkoxy)carboxyl, acryloyl, methacryloyl, acryloyloxy and methacryloyloxy.

In one embodiment the reactive group is a radical capping group adopted to be reversibly cleared from the compound under activity conditions to provide a reactive radical. Such radical groups will be known to those skilled in the art for use in living free radical polymerisation and include groups such as dithioester (-S-C=S-R); trithiocarbonate (-S-C=S-S-R); dithiocarbamate (-S-C=S-NRR); xanthate (-S-C=S-O-R); carboxylic acids; carboxylic esters and nitroxide.

Preferably halogen is chloro; preferred hydrocarbyl is $C_1$ to $C_6$ alkyl and phenyl; preferred hydrocarbyloxy is $C_1$ to $C_6$ alkoxy.

The reactive group may be an unsaturated group. Most preferably the unsaturated group is selected from the group consisting of (meth)acryloyl, (meth)acryloyloxy, allyl, allyloxy, maleimides, styryl and norbornenyl. The reactive group may also be of formula $SiX^1X^2X^3$ wherein $X^1$, $X^2$ and $X^3$ are independently selected from the group consisting of hydrogen, $C_1$ to $C_4$ alkyl, halogen and $C_1$ to $C_4$ alkoxy and at least one of $X^1$, $X^2$ and $X^3$ is selected from hydrogen, halogen and $C_1$ to $C_4$ alkoxy.

Examples of suitable oligomer groups R include groups of formula II:

$$-(X)_p\,(R^1)_q\text{-}X'\,(R^2)_w \qquad \text{II}$$

wherein

X is selected from oxygen, sulfur, amino, substituted amino and $C_1$-$C_4$ alkylene;
X' is a bond or an attachment group for the one or more reactive groups; p is 0 or 1;
q is the number of monomer units;
$R^1$ which may be the same or different are selected from the group consisting of:

- substituted $C_2$ to $C_4$ alkylene;
- substituted $C_2$ to $C_4$ alkylene;
- halo ($C_2$ to $C_4$ alkylene) such as perfluoroethylene, perfluoropropylene, and perfluorobutylene;
- di($C_1$ to $C_{10}$ hydrocarbyl)silyloxy;

$R^2$ is selected from the group consisting of hydroxy, mercapto, optionally substituted amino, (meth)acryl, (meth) acryloxy, allyl, allyloxy, epoxy and isocyanato, ketone, aldehyde, carboxylic acid, trithiocarbonates, xanthates, dithiocarbamates, dithioesters, ortho esters, (mono, di and tri) alkoxy silane, (mono, di and tri) halo silanes, (mono, di and tri) hydro silanes, alkyl halide, maleimido and other unsaturated C=C containing groups and radical capping groups adapted to provide free radical polymerisation under activating conditions; and
w is the number of reactive groups and is preferably from 1 to 3.

The oligomer may comprise substituted alkylene groups. Examples of preferred substituted $C_2$ to $C_4$ alkylene include units of formula III above.

The polymer comprising the monomeric unit of formula III above may be a homopolymer or copolymer. It may be a copolymer of two or more units of formula Ib or a copolymer of at least one unit of formula III and one or more comonomer units derived from unsaturated compounds. Where the polymer is a copolymer suitable comonomer units may include one or more distinct units of formula III or comonomers of formula IV:

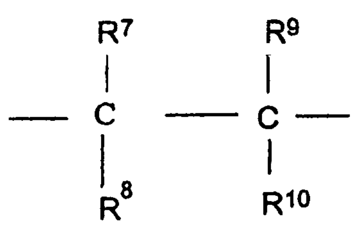

IV

wherein $R^7$, $R^8$, $R^9$ and $R^{10}$ are independently selected from the group consisting of hydrogen, halogen, alkyl, substituted

alkyl, aryl, substituted aryl and haloalkyl. The copolymer may be a random or block copolymer.

Examples of the group R include polymers of formula V

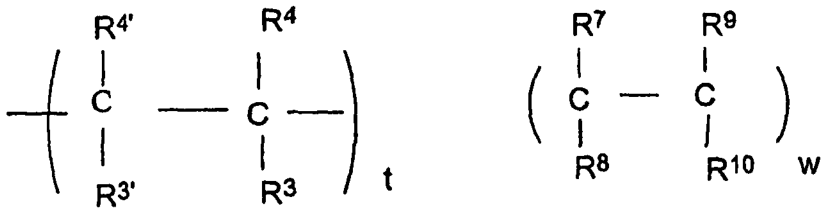

V

wherein t is from 2 to 500, preferably 2 to 200 more preferably 2 to 100 and most preferably from 5 to 50 and w is from 0 to 500 preferably 0 to 100 and more preferably 0 to 50.

When the polymer is a copolymer the distinct units may be present as blocks or randomly distributed.

The photochromic comprising a polyalkylene substituent may be formed by a chain growth polymerization method. A particularly preferred method of chain growth is by living polymerisation particularly living free radical polymerization.

The polymer comprising the monomer of formula III may be a homopolymer or copolymer where the polymer is a copolymer it may be a copolymer of two or more units or a copolymer of at least one unit of formula I with an unsaturated monomer other than of formula III. Where the polymer is a copolymer suitable comonomer units may include one or more distinct units of formula IV or comonomers of formula

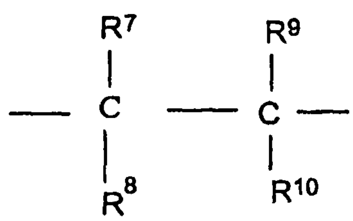

IV

wherein $R^7$, $R^8$, $R^9$ and $R^{10}$ are independently selected from the group consisting of hydrogen, halogen, alkyl and haloalkyl. The copolymer may be a random or block copolymer.

Examples of the group R include polymers of formula V

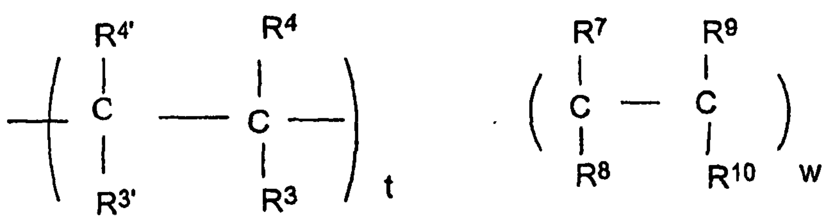

V

wherein t is from 2 to 500 preferably from 2 to 200 more preferably from 2 to 100 and most preferably from 5 to 50 and w is from 0 to 500 preferably from 0 to 200 more preferably from 0 to 100 and most preferably from 0 to 50.

When the polymer is a copolymer the distinct units may be present as blocks or randomly distributed.

The compounds of the invention can be designed to tailor the photochromic properties for specific applications. The length, population and distribution of monomer types (in particular the type, population and distribution of function substituents) can be used to control one or more properties of the photochromic article selected from fatigue resistance, fade, activation speed and temperature sensitivity.

The type and properties of the polymeric substituent may also be used to protect the photochromic from adverse chemical environments encountered during formation or processing of the host matrix. For example, the initiator systems used in curing polymerizable compositions to form photochromic articles such as spectacles and glazing panels typically

have an adverse effect on a photochromic dye, in some cases even destroying photochromism. It may be possible to reduce this deleterious effect by choosing a polymeric substituent which protects the photochromic moiety under such conditions.

The invention allows both coarse and fine-tuning of photochormic performance. For example coarse tuning of photochromic switching speed may be achieved by the *choice* of polymeric substituent (eg poly(styrene),poly(methyl methacrylate)) with those of high Tg giving slower switching speeds and those of lower Tg (below room temperature) giving faster switching speeds. Once the coarse switching speed is chosen, then the speed may be fine tuned by the *length* of the polymeric substituent. To obtain optimum control over photochromic performance it is preferred that compounds of the invention have polymeric substituents of a narrow molecular weight distribution.

Without wishing to be bound by theory, the use of a tether with known properties can be thought of as providing a statistical or probabilistic encapsulation (SoPE) in contrast to a guaranteed encapsulation process. It is thought the protection of the dye or dye aggregates from the host matrix relies on the coiling of the attached oligomer/polymer to create a free volume or a localised matrix of controlled properties. This of course means that the efficiency of the SoPE is likely to vary with the dye's steric requirements for switching, the length of the oligomer, the compatibility of the oligomers with the matrix and the matrix itself.

The oligomer's compatibility is likely to influence the efficiency of the process. At one extreme, a highly incompatible oligomer would maximise the SoPE effect but the risk of gross phase separation increases. At the other extreme, if the oligomer is highly compatible with the matrix, then it may be less localised near the dye and thus a longer chain length of oligomer may be needed to provide the same protection or effect obtained by a shorter but less compatible oligomer. Thus the choice of oligomer and its size must be chosen taking such factors into account. Typically faster switching speeds are required thus oligomer/polymer tethers with low Tg's (< room temperature) are needed.

The method is an "add-on" type modification and has the flexibility to accommodate the steric requirements of different classes of the photochromics. A particularly sterically demanding dye may need longer oligomers or ones of different geometry. Typically, the size of the oligomer should be as small as possible to maximize the photochromic content while still providing the desired photochromic switching speed and minimizing any effect on the mechanical properties of the host matrix.

Particularly preferred examples of the dye monomer are of formula VIa to VIf:

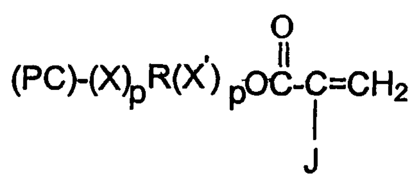

VIa

$(PC)\text{-}(X)_pR(X')_p\text{-}CH{=}CH_2$ VIb

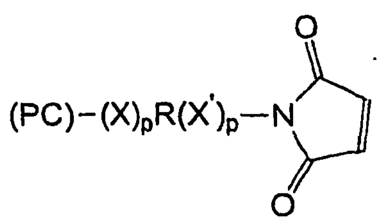

VIc

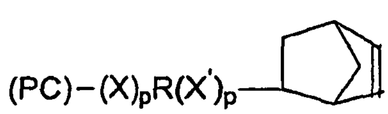

VId

$(PC)\text{-}(X)_pR(X')_p(YH)_w$ VIe

$(PC)\text{-}X_pR(X')_p(NR'R'')_w$ VIf

wherein:

X is a linking group for the oligomer;
X' is bond or attachment group for the one more reactive groups and is preferably selected from the group consisting of $C_1$ to $C_4$ alkylene;
where Y is oxygen or sulphur;
w is the number of hydroxy or thiol groups at the terminal end of the oligomer and is preferably 1 to 3;
p is independently selected from 0 and 1;
PC is a photochromic moiety;
J is hydrogen or $C_1$ to $C_4$ alkyl (preferably hydrogen or methyl);
R is an oligomer;
R' is hydrogen, $C_1$ to $C_6$ alkyl or substituted ($C_1$ to $C_6$) alkyl; and
R'' is hydrogen ($C_1$ to $C_6$) alkyl or substituted ($C_1$ to $C_6$) alkyl.

Preferably L is selected from the group consisting of a bond or the polyradical selected from the group of formula VIIa through to VIIp

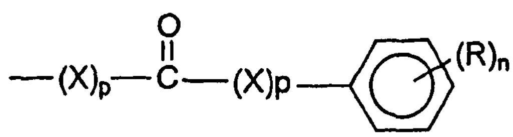

VIIa

wherein n is from 1 to 3;

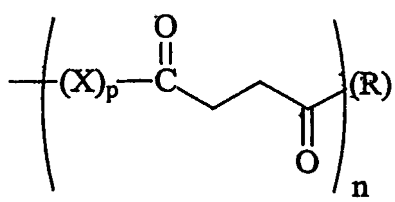

VIIb

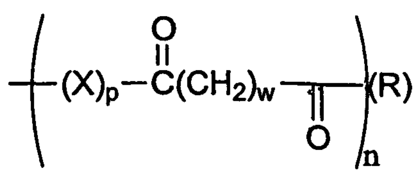

VIIc

$-(X)_p(CH_2)_nCHR^{11}(R)$ VIId

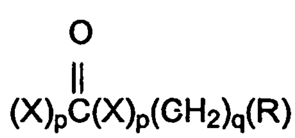

VIIe

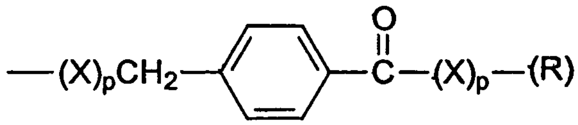

VIIf

-$(X)_p(C_2$ to $C_6$ alkylene) -$(X)_p$ -(R) VIIg

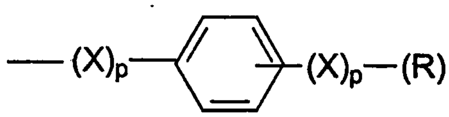

VIIh

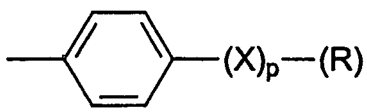

VIIi

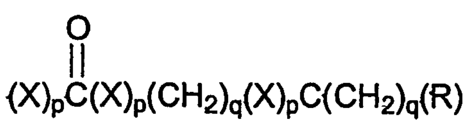

VIIj

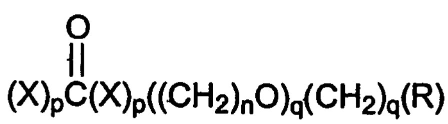

VIIk

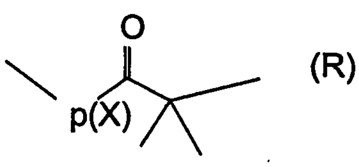

VIIl

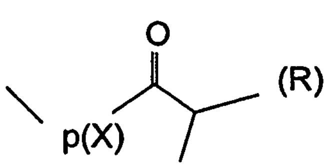

VIIm

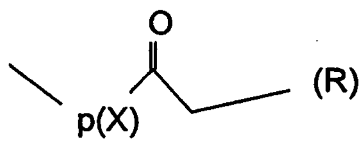

VIIn

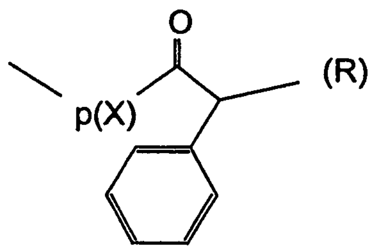

VIIo

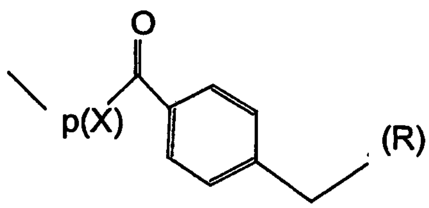

VIIp

wherein in the formula VIIa to VIIp:

X which may be the same or different is as hereinbefore defined;
$R^{11}$ is selected from the group consisting of hydroxy, alkoxy, amino and substituted amino such as alkyl amino;
n is an integer from 1 to 3;
w is an integer from 1 to 4;
q is an integer from 0 to 15;
p which when there is more than one may be the same or different is 0 or 1; and
(R) shows the radial for attachment of oligomer R.

The purpose of the linking group is to join the oligomer(s) to the photochromic moiety. A linking group may be needed when the oligomer has a functional group that cannot be used directly to join to the dye. For example polyethylene glycol methacrylate can be converted to an acid by reaction with succinic anhydride. This could then be readily joined to the hydroxy group on a photochromic moiety such as 9'-hydroxy-1,3,3-trimethylspiro[indoline-2,3'-93H]naphtha[2,1-b][1,4]oxazine].

The linking group may in some cases be available as part of the oligomer.

Specific examples of linker groups L include:

(i) a bond

(ii)

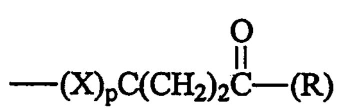

(iii)

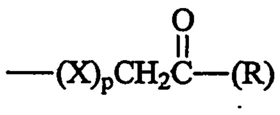

(iv)

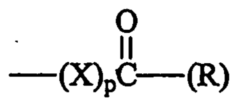

(v)

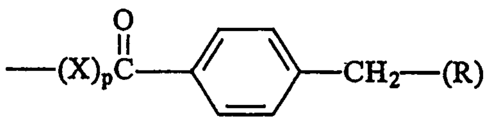

(vi)

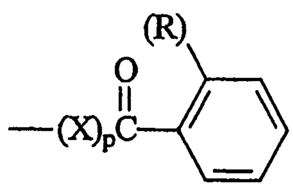

(vii)

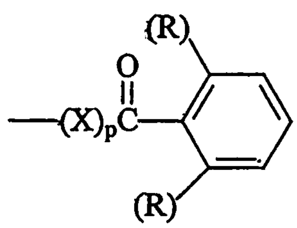

(viii)

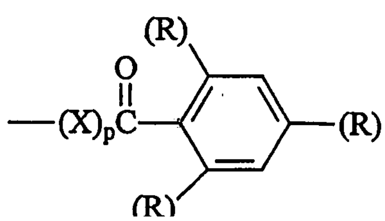

(ix)

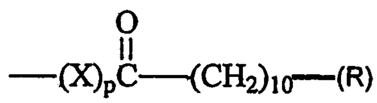

(x)

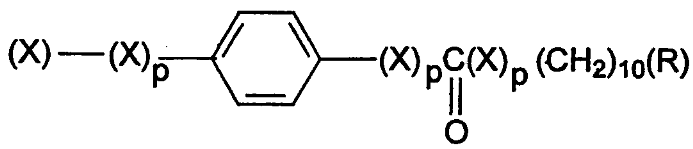

(xi)

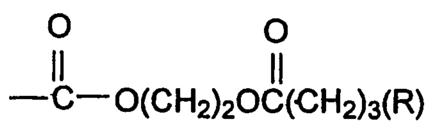

(xii)

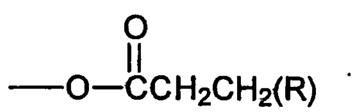

The compounds of the present invention comprise oligomer groups wherein the total number of monomeric units is as least 5, preferably at least 7, and most preferably at least 9.

The oligomer(s) may be in the form of linear chains, branched chains, copolymers including block or random -copolymers; however, it is particularly preferred that each oligomer comprise at east 5 monomer units of the same type, and more preferably at least 7 and most preferably at least 9.

Preferably, the monomer units are selected from the groups consisting of perfluruoalkylene, alkyleneoxy, haloalkyleneoxy, and dihydrocarbylsilyloxy (e.g. di-$C_1$ to $C_{10}$ hydrocarbyl such as aliphatic aromatic and combinations thereof). More preferred monomer units are alkyleneoxy, and dialkylsilyloxy and even more preferred are ethyleneoxy, propyleneoxy and random and block copolymers thereof and dialkylsilyloxy.

The photochromic compound of the invention of formula I includes up to three groups each of which may include one, two or three oligomer groups R.

Examples of preferred oligomer groups include:

(i)

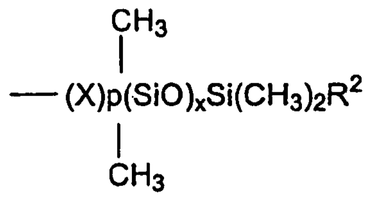

(ii)

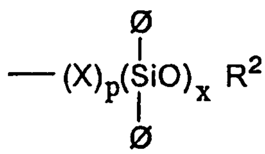

wherein Ø is alkyl or aryl and includes at least a portion of aryl groups

(iii) $-X_p(CF_2CF_2O)_x-(CF_2)_nR^2$

(iv)

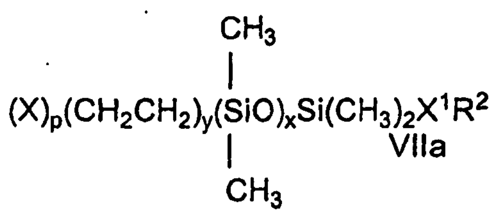

VIIa

wherein X, X' and $R^2$ and p are hereinbefore defined and x, v and y are the number of repeating units, and alkyl is $C_1$ to $C_{20}$ alkyl, preferably $C_1$ to $C_{10}$ alkyl such as methyl, ethyl, propyl, butyl, pentyl or hexyl. Preferably the compounds of the invention include at least one oligomer group wherein the number of monomer units (x or y+v in the above examples) is at least 3 and are most preferably at least 5.

The most preferred oligomer groups contain at least 9 monomer units. The monomer units may be up to thirty or more units in length but we have found the range of from 9 to 30 to be particularly suitable.

It will be appreciated by those skilled in the art that the presence and nature of the group X is dependent on the linker group. When the linker group is a bond and the oligomer is linked to a heteroatom such as nitrogen, then p is preferably zero.

However, when the group $L-(R)_n$ is attached to a carbon radical of the photochromic moiety, or a linker of formula VIIa to IIp then in the oligomer group R the integer, p is preferably 1.

In one embodiment of the invention the oligomer substituents generally comprise a plurality of monomer units of formula III.

Preferably in the monomeric group of formula III, the group $R^4$ is selected from the group consisting of hydrogen, halogen, $C_1$ to $C_6$ alkyl, $C_1$ to $C_6$ alkoxy, $C_1$ to $C_6$ hydroxyalkyl and $C_1$ to $C_6$ alkoxy. More preferably $R^4$ is hydrogen or $C_1$ to $C_6$ alkyl and most preferably $R^4$ is hydrogen or methyl.

Preferably in the monomeric group of formula III the substituent $R^3$ is selected from the group consisting of hydroxy, $C_1$ to $C_6$ alkoxy, carboxydecayl, heterocyclic, aryloxy, heterocyclic comprising from 5 to 10 ring members and one or two rings and from one to three heteroatoms selected from nitrogen, oxygen and sulfur and optionally substituted by $C_1$ to $C_6$ alkyl, caroboxyl, nitrile, $C_1$ to $C_{10}$ alkoxycarbonyl, alkoxycarbonyl substituted with a substituant selected from halogen, $C_1$ to $C_6$ alkoxy akoxy, hydroxy, carbamoyl, N-($C_1$ to $C_6$ alkyl)carbamoyl, N,N-di($C_1$ to $C_6$ alkyl)carbamoyl, carbaniloyl ($C_1$ to $C_6$ alkyl)phenylaminocarbonyl, ($C_1$ to $C_6$ alkoxy)phenylaminocarbonyl, formyl, aroyl, ($C_1$ to $C_6$ alkoxy) carbonyl substituted by a substituent selected from the group of hydroxy and $C_1$ to $C_6$ alkoxy; and the groups of formula: .

-L'-(O)$_q$-(Z-O)$_p$-ZY';

and

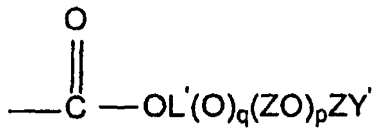

wherein

q is 0 or 1, Z is selected from the group consisting of ethylene, propylene and dimethylsilyl and p is an integer from 2 to 20; L is a bond on a linking group selected from $C_1$ to $C_6$ alkylene and Y' is selected from the group consisting of $C_1$ to $C_6$ alkyl, $C_1$ to $C_6$ alkyl substituted with a group selected from hydroxy, $C_1$ to $C_6$ alkoxy carboxyl, and ($C_1$ to $C_6$ alkoxy) carboxyl ($C_1$ to $C_6$ alkyl)dimethylsilyl and phenyldimethylsilyl.

More preferably $R^3$ is selected from the group consisting of carboxyl, heterocyclic of from 5 to 10 ring members comprising one or two rings and from one to three ring members optionally substituted by $C_1$ to $C_6$ alkyl, $C_1$ to $C_6$ alkoxy carbonyl, ($C_1$ to $C_6$ alkoxy) substituted ($C_1$ to $C_6$ alkoxy)carbonyl, carbamoyl, ($C_1$ to $C_6$ alkyl)carbamoyl, formyl, ($C_1$ to $C_6$ alkyl)carbonyl and the group of formula:

-L'-(O)$_q$-(Z-O)$_p$-ZY';

and

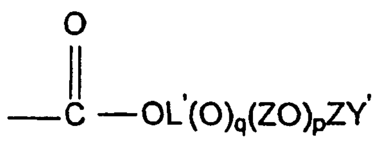

wherein

p is from 2 to 20, q is 0 or 1, Z is ethylene, propylene, dimethylsilyl and dimethoxysilyl; L is a bond or $C_1$ to $C_4$ alkyl; and Y is selected from the group consisting of hydrogen, $C_1$ to $C_6$ alkyl, $C_1$ to $C_6$ haloalkyl, aryl, and $C_1$ to $C_6$ alkyl substituted with a substituent selected from $C_1$ to $C_6$ alkoxy, carboxyl, ($C_1$ to $C_6$ alkoxy)carbonyl, ($C_1$ to $C_6$ alkyl)dimethylsilyl and phenyldimethylsilyl;

$R^{3'}$ is hydrogen or methyl; and

$R^3$ and $R^{3'}$ may together form a bridging group of formula:

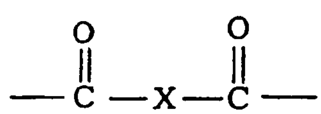

where X is selected from oxygen and $NR^7$, wherein $R^7$ is selected from $C_1$ to $C_6$ alkyl, $C_1$ to $C_6$ alkoxy, ($C_1$ to $C_6$ alkyl).

In one embodiment the compound of the invention comprises a polymeric substituent R of formula I wherein $R^2$ is a substituent of formula:

-L'-(O)$_q$-(Z-O)$_p$-ZY';

and

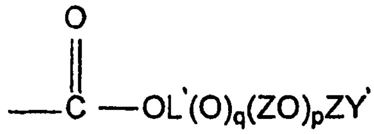

Examples of monomers which may be used to provide such monomeric units include:

(i) Monomers of formula

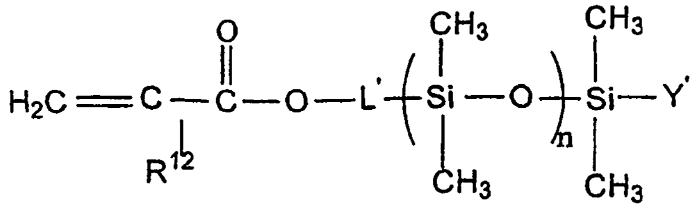

wherein $R^{12}$ is hydrogen $C_1$ to $C_6$ alkyl such as methyl, L' is $C_1$ to $C_6$ alkylene, Y' is $C_1$ to $C_6$ alkyl and n is an integer from 2 to 30 preferably from 4 to 20; monomers of the type such as monomethacryloxypropyl terminated polydimethylsiloxone are commercially available;

(ii)

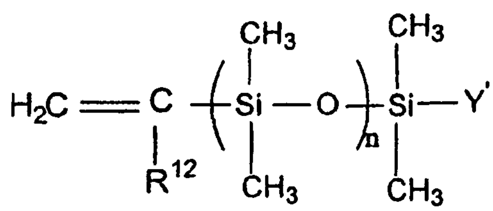

wherein $R^{12}$ is hydrogen or $C_1$ to $C_6$ alkyl such as methyl, Y' is $C_1$ to $C_6$ alkyl and n is from 2 to 30 and preferably 4 to 20;

(iii)

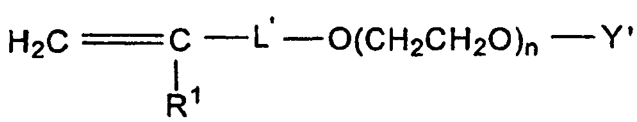

wherein $R^1$ is hydrogen or $C_1$ to $C_6$ alkyl such as methyl, L' is $C_1$ to $C_6$ alkylene and Y' is $C_1$ to $C_6$ alkyldimethylsilyl. Specific examples of such compounds include monoalkylmonotrimethylsiloxy-terminated polyethylenenoxide.

(iv)

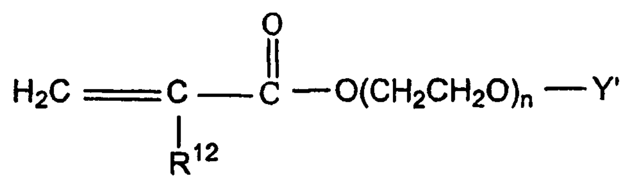

wherein $R^{12}$ is hydrogen or $C_1$ to $C_6$ alkyl such as methyl, n is from 2 to 30 and preferably 4 to 20 and Y' is $C_1$ to $C_6$ alkyl or ($C_1$ to $C_6$ alkyl)dimethylsilyl. Specific examples of suitable monomers of this type include monomethacryloxy,monomethylsiloxy-terminated polyethyloxide.

Further examples of polydemiethysiloxane groups and their synthesis for dialkyl aminoaryl compounds are shown in *Casey et al Macromolecules 2004 37* 6657 6059. The procedures disclosed in the paper may be used for the preparation of polydimethyl silane oligomers from appropriately substituted photochromic compounds.

Specific examples of monomers that may comprise the polymeric substituent may be selected from the group consisting of acrylic acid, methyl acrylate, ethyl acrylate, propyl acrylate, butyl acrylate, hexyl acrylate, isohexyl acrylate, cyclohexyl acrylate, isobomyl acrylate, ethoxyethyl acrylate, allyl acrylate, acrolein, acrylamide, acryloyl chloride, poly (ethylenegylcol) acrylate, methacrylic acid, methyl methacrylate, ethyl methacrylate, propyl methacrylate, butyl methacrylate, hexyl methacrylate, isohexyl methacrylate, cyclohexyl methacrylate, isobornyl methacrylate, ethoxyethyl methacrylate, methacrylamide, methacryloyl chloride, allyl methacrylate, 1H, 1H, 2H, 2H-perfluorodecyl methacrylate (and other fluorinated alkyl methacrylates), 1H, 1H, 2H, 2H-perfluorodecyl methacrylate, 4,4,5,5,6,6,7,7,8,9,9,9-dodecafluoro-2-hydroxy-8-(trifluoromethyl)nonyl methacrylate, 3,3,4,4,5,5,6,6,7,8,8,8-dodecafluoro-7-(trifluoromethyl)octyl methacrylate, 3,3,4,4,5,5,6,6,7,7,8,8,9,9,-10,10,11,12,12,12-eicosafluoro-11-(trifluoromethyl)- dodecyl methacrylate, benzyl methacrylate, 2-butoxyethyl methacrylate, 2-(tert-Butylamino)ethyl methacrylate, butyl 3-butoxymethylacrylate, 9*H*-carbazole-9-ethylmethacrylate, 3-chloro-2-hydroxypropyl methacrylate, dyclohexyl methacrylate, decyl methacrylate, 3-(diethoxymethylsilyl)propyl methacrylate, 2-(diethylamino)ethyl methacrylate, 2-(dimethylamino)ethyl methacrylate, 3-(dimethylchlorosilyl)propyl methacrylate, Disperse Red 1 methacrylate, Disperse Red 13 methacrylate, Disperse yellow 7 methacrylate, ethylene glycol dicyclopentenyl ether methacrylate, ethylene glycol methacrylate phosphate, ethylene glycol methyl ether methacrylate, ethylene glycol monoacetoacetate monomethacrylate, fluoresceinO-methacrylate, glycidyl methacrylate, 3-[(3,5,7,9,11,13,15-heptacyclopentylpentacyclo[9.5.1.1$^{3,9}$.1$^{5,15}$.1$^{7,13}$]octasiloxan-1-yloxy)-dimethylsilyl]propyl methacrylateylate (dimethylsilyloxy(propyl)methacrylate-POSS), hexyl methacrylate, 2-hydroxyethyl methacrylate, hydroxypropyl methacrylate, Isobornyl methacrylate, Isodecyl methacrylate, lauryl methacrylate, 2-(methacryloyloxy)ethyl acetoacetate, [2-(methacryloyloxy)ethyl]dimethyl-(3-sulfopropyl)ammonium hydroxide, 2-naphthyl methacrylate, 2-(4-Nitrophenoxy)ethyl methacrylate, pentabromobenzyl methacrylate, 2,2,3,3,3-Pentafluoropropyl methacrylate, 3-sulfopropyl methacrylate potassium salt, 2-(tert-butylamino)-ethyl methacrylate, tetrahydrofurfuryl methacrylate, 2,4,6-tribromophenyl methacrylate, tridecyl methacrylate, 3-(trimethoxysilyl)propyl methacrylate, 3,3,5-trimethylcyclohexyl methacrylate, trimethylsilyl methacrylate, 3-[tris(trimethylsiloxy)silyl]propyl methacrylate, 3-[tris (trimethylsiloxy)silyl]propyl methacrylate, ZONYL®TM fluoromonomer, 2-methylacrylamide methacrolein, vinyl methyl ketone, 3-methyl-3-buten-2-one, 2-methylacryloyl chloride, polyethyleneglycol) behenyl ether methacrylate , polyethyleneglycol) mhacrylate, polyethyleneglycol) methyl ether, malaimides, styrene, styrenics, acrylonitrile, methacrylonitrile, acrylamide, methacrylamide, dimethylacrylamide, maleic anhydride.

Examples of preferred classes of monomers include alkylacrylates, alkylmethacrylates, hydroxyalkylacrylates, hydroxyalkylmethacylates, haloalkylacrylates, haloalkylmethacrylates. alkoxyalkylacrylates, alkoxyalkylmeth acrylates, optionally mono N-substituted or di-N-substituted aminoalkylmethacrylates, cycloalkylaerylates, cycloalkylmethacrylates, phenoxyacrylate, phenoxymethacylate, alkylene glycolacrylate, alkylene glycol methacrylate, polyalkyleneglycolacrylate, polyalkyleneglycolmethacrylate, acrylamides, methacrylamides, derivatives of acrylamides and methacylamides, esters of fumaric acid, maleic acid and maleic acid anhydride and esters of maleic acid, N-vinyl carbazole, N-vinylpyrrolidone, vinyl pyridine, benzyl acrylate and benzyl methacrylate.

The polymeric substituent can be made in at least three different ways. The polymeric substituent may be grown from photochromic dye possessing a suitable initiation group. Another method is that the polymer substituent is grown or added to a precursor molecule of the photochromic moiety and the photochromic moiety is subsequently made. In another method the polymeric substituent is formed and is joined to the photochromic dye by any appropriate suitable organic synthetic procedure.

The polymeric substituent is synthesised (either from the photochromic dye or independently) by a chain growth or ring-opening polymerization method. This includes but not limited to

Radical polymerization (non-living, living)
Ionic polymerization (cationic and anionic)
Group transfer polymerization.

If the polymeric substituent is prepared separately then it will preferably possess at least one reactive functional group to allow it to be coupled to a photochromic dye. The functional group may include such groups such as hydroxy, thiol, ketone, aldehyde, amino (primary or secondary), carboxylic acid, carboxylic acid chloride, isocyanate, isothiocyanate, alkyl halo, vinyl, allyl, silyl hydride, silyl chloride etc. Typically one or two suitable functional groups may be present but there can be more. The reactive functional group(s) is preferred to be at the end or middle of the substituent polymer but may be at other points along the chain.

When the polymeric substituent is grown from the photochromic dye, the dye will preferably act as a point of initiation either directly or as part of a chain transfer mechanism. Thus, the dye will act as an initiator or chain transfer agent. The dye may act as a termination agent. The dye is not a monomer and will not posses a conventional polymerizable

group such as a methacryl or trialkoxy silyl group that is utilized as a polymerizable group. (Note the group may be used in a non-polymerizable way to allow the attachment of the polymeric substituent. For example, the dye may have a methacrylate group that is reacted with a thiol (ie thiolene reaction)).

The photochromic compound of the invention comprising a polymeric substituent may posses a reactive group (for example at the free end of the polymeric substituent) that will allow it to react into a subsequent polymerization reaction. This group may arise directly from the polymeric substituent preparation process (i.e. when an polymeric substituent is grown from the dye.) or may be attached in a separate process. Typically this reactive group will be at the end of the polymeric substituent away from the photochromic dye. This group may be a RAFT or iniferter type group such as dithioester, trithiocarbonate, dithiocarbamate or xanthate, an ATRP group such as a halogen or alkoxyamine for the polymeric substituent grown by a living free radical method. These groups may themselves be converted to other groups using standard chemistry. RAFT agents can be converted to thiols or hydrogen and ATRP end groups may be converted to hydrogen and amines etc.

The polymeric substituent may be a homopolymer, block, random or gradient co-polymer. The polymeric substituent is preferentially made by a radical polymerization. Of the free radical methods it is preferred that living radical and chain transfer methods of radical polymer synthesis are used.

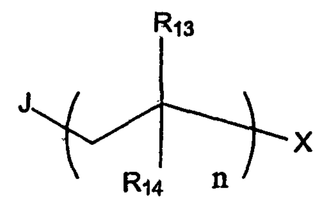

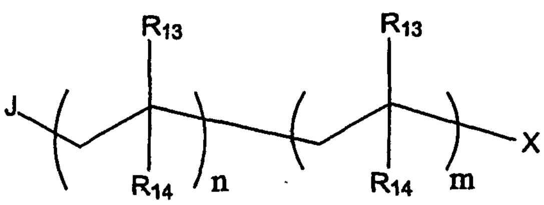

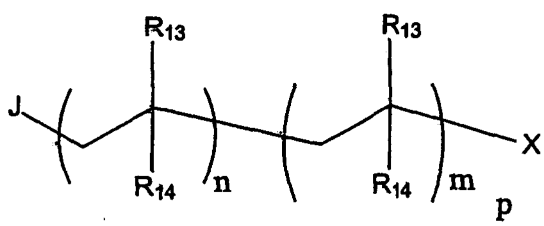

The polymeric substituent is generally derived from one or more types of radical polymerizable monomer. Typical monomers may be selected from acrylates, methacrylates, acrylamides, methacrylamides, vinyl esters, vinyl ethers, n-vinyl monomers, styrenes, cyanoacrylates, maleimides and maleic anhydride.

In a particularly preferred embodiment:

$R^{13}$ may be selected from hydrogen, methyl alkyl, aryl, nitrile, carboxylic acid, carboxylic esters, halogen, H, $CH_3$, alkyl, aryl, $-COOR^{15}$ CN, etc.

$R^{14}$ = $-OR^{15}$, $-COOR^{15}$, phenyl, CN, halogen, amides (-CONRR, where R is independently selected from hydrogen, alkyl, aryl)

$R^{15}$ = H, alkyl, aryl

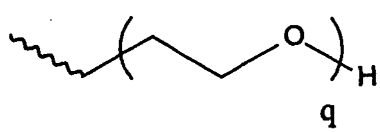

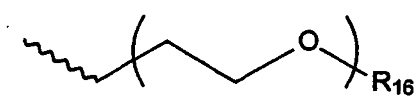

$R_{16}$ = alkyl

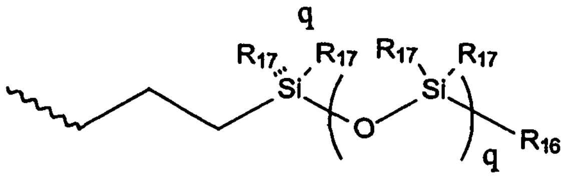

$R_{17}$ = independantly selected from methyl, alkyl, phenyl

J is a selected from photochromic compounds, derivatives of photochromic compounds and reactive groups for subsequent attachment of a photochromic group;

X is the terminal group and may be selected from hydrogen, methyl, butyl, alkyl, halogen, dithioester (-S-C=S-R), trithiocarbonate (-S-C=S-S-R), dithiocarbamate (-S-C=S-NRR), xanthate (-S-C=S-O-R), carboxylic acids, carboxylic esters, hydroxy, alkoxyamine etc.

Another embodiment of ATRP is described in Macromolecules, 1995,28,7970 and Macromolecules, 1996,29,3665. These references report on the formation of "living" polymers using a combination of an arylsulfonyl chloride and a transition metal compound.

One part of the polymerization system in this embodiment of the process of the invention may be an arylsulfonyl halide or an alkyl sulfonyl halide of the formula $A^1SO_2X$ wherein $A^1$ is an aryl, (preferably an aryl position of the photochromic PC) substituted aryl group, an alkyl group or a substituted alkyl group, and X is chlorine, bromine or iodine. Included within the meaning of arylsulfonyl halide and alkylsulfonyl halide is any adduct, such as a 1:1 adduct, which is a reaction product of an aryl or alkyl sulfonyl halide and any polymerize vinyl monomer. In effect, such an adduct is one of the initial products in the polymerization process itself.

Another component of the ATRP system is a compound containing a lower valent transition metal atom. By this is meant a compound containing at least one transition metal atom that is capable of existing in a higher valent state. Included within the definition of a compound containing a transition metal atom in a lower valent state is a compound or combination of compounds that under the polymerization process conditions can form in situ the desired compound containing a transition metal atom in a lower valent state. In some cases this can include metal itself (or an alloy or a metal oxide thereof) which can either be dissolved or slightly dissolve in the process medium.

Suitable lower valent metals include Cu[I], Ru[I], Ni[II], Re[II], Pd[II], Cu[0], Ni[0], Fe[0], Pd[0], and Rh[II]. The transition metal compound should preferably be at least slightly soluble in the polymerization medium. Optionally the transition metal compound which is added may be solublized by the addition of certain complexing agents.

The molar ratio of lower valent transition metal compound: arylsulfonyl halide or alkyl sulfonyl halide is not critical, but it is preferred that it be greater than 0.2, more preferably greater than 0.5, especially if a living polymerization is desired. It is also preferred that this ratio not be over 5 and more preferably be less than 2.

Thus as indicated by the above mechanism, in order grow a polymer directly from a photochromic dye using ATRP a suitable ATRP initiating group must be attached. The most common is the 2-bromoisobutyryl group that is readily synthesised by the reaction of any hydroxy group containing compound (in this case a photochromic dye PC) with 2-bromoisobutyl bromide. The bond in which monomer will be inserted in the subsequent polymerization is indication with an arrow.

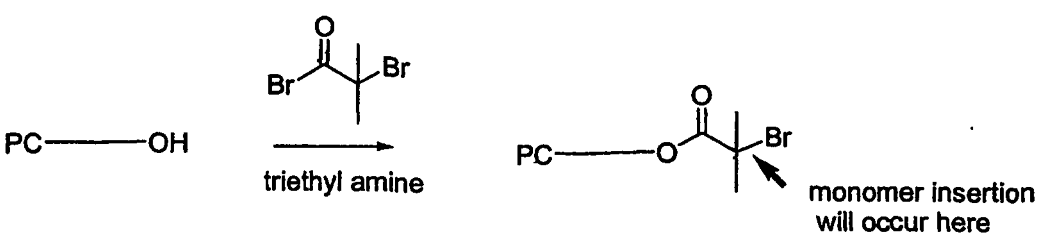


Another group suitable for use is the benzoyl choride group that is prepared in a similar way using chloromethylbenzoyl chloride as shown below.

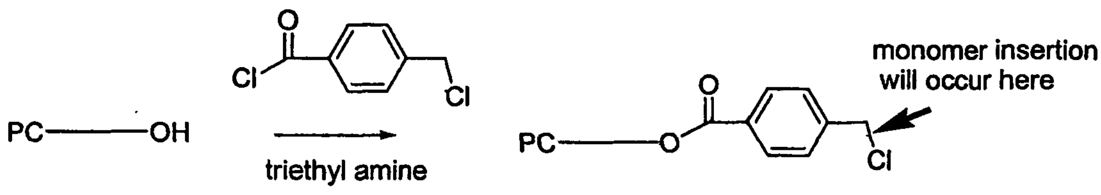


It should be understood that other suitable initiating groups are available and can be used and these are readily found in the scientific literature. General information on ATRP may be found in the article Atom Transfer Radical Polymerization by Matyjaszewski and Xia in Chemical Reviews 2001, 101, 2921-2990.

Living polymers also may be prepared using thiocarbamates or dithiocarbamates or xanthetes are preferably of formula VII, IX, X or XI:

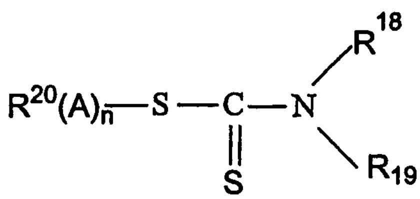

VIII

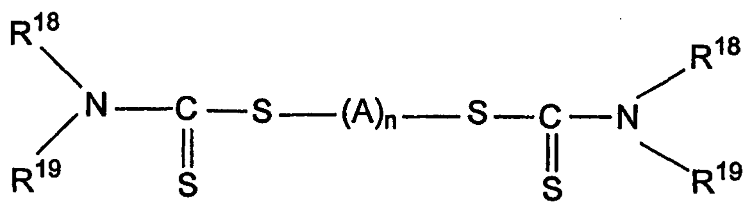

IX

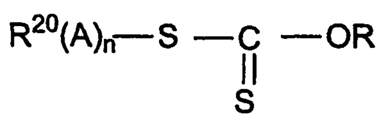

X

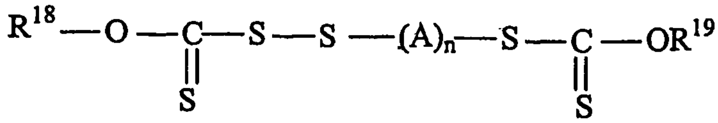

XI

wherein $R^{20}$ is hydrogen or an initiator fragment residue such as a photochromic moiety thereof or derivative, $R^{18}$ and $R^{19}$ are independently selected from hydrocarbyl, particularly $C_1$ to $C_6$ alkyl and A is a monomer unit.

Examples of iniferters which may be used in preparation of living polymers containing thiocarbamates or dithiocarbamates include compounds of formulation VIIa, IXa, Xa and XIa:

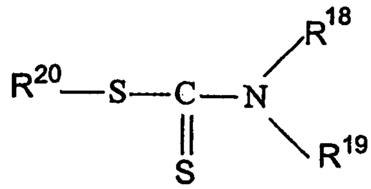

VIIIa

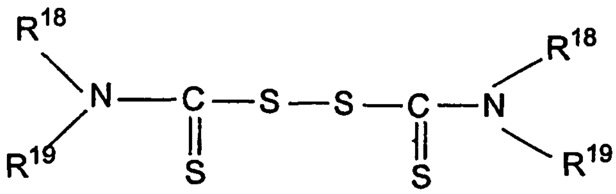

IXa

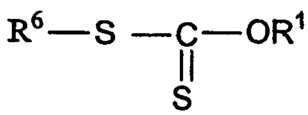

Xa

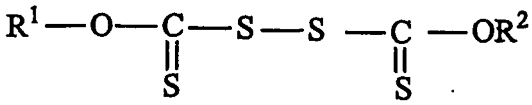

XIa

The living prepolymer may comprise a thiocarbonylthio radical terminating group. Examples of such compounds are of formula:

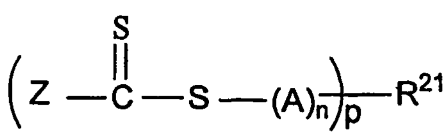

XII

or

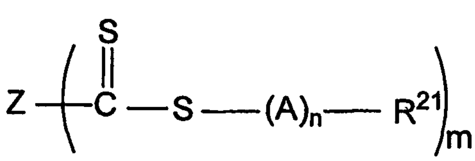

XIII

X wherein Z is a group chosen such that the chain transfer constant is in the desired range. Suitable Z groups are hydrogen, optionally substituted alkyl, optionally substituted aryl, optionally substituted alkoxy, optionally substituted alkylthio, chlorine, optionally substituted alkoxycarbonyl, optionally substituted aryloxycarbonyl, carboxy, optionally substituted aclyloxy, optionally substituted carbamoyl, cyano, dialkyl- or diarylphosphinato-, dialkyl or diarylphosphenato and polymer chain;

$R^{21}$ is an optionally substituted alkyl, optionally substituted alkenyl, optionally substituted alkynyl, optionally substituted (saturated, unsaturated or aromatic) carbocyclic/heterocyclic ring, optionally substituted alkylthio or other group such that $R^{21}$ is a free radical leaving group under the polymerization conditions and is capable of initiating free radical polymerization; $R^{21}$ may also be a polymer chain prepared by any polymerization mechanism or an organometallic species; and m and p are integers and preferably are at least 2.

The substituent may be the photochromic moiety or moiety subsequently attached to the photochromic moiety.

The living prepolymers of formula XII and XIII may be prepared by reaction of a vinyl monomer with a thiocarboxylthio chain transfer compound of any of formulas XIV(a), XIV(b) or XIV(c). The reaction will usually be initiated by free radicals produced from a free radical source.

Preferred dithioester chain transfer agents for use in preparing prepolymers of formula IIIa and IIIb are represented by formulas IV a-c

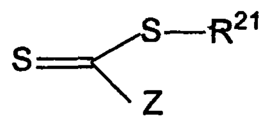

XIVa

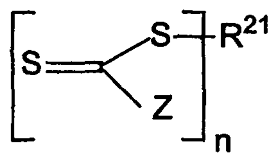

XIVb

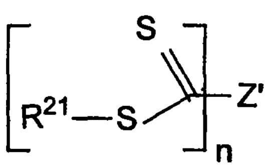

XIVc

In formula XIVa:

$R^{21}$ is an optionally substituted alkyl, optionally substituted alkenyl, optionally substituted alkynyl, optionally substituted (saturated, unsaturated or aromatic) carbocyclic/heterocyclic ring, optionally substituted alkylthio or other group such that $R^{21}$ is a free radical leaving group under the polymerization conditions and is capable of initiating free radical polymerization. $R^{21}$ may also be a polymer chain prepared by any polymerization mechanism or an organometallic species.

In formula XIVb:

n is an integer greater than 1.
$R^{21}$ is a group derived from substituted alkyl, substituted aryl or a polymer chain, or other group such that $R^{21}$ is a free radical leaving group under the polymerization conditions and is capable of initiating free radical polymerization; and
Z is as defined for Formula XII.

In Formula XIVc:

n is an integer greater than 1.
Z' is a group derived from optionally substituted alkyl, optionally substituted or a polymer chain where the connecting moieties are selected from aliphatic carbon, aromatic carbon, oxygen or sulfur; and $R^{21}$ is as defined in Formula XIVa.

In the case where the polymer is grown directly from the photochromic moiety or photochromic precursor: R7, Z, and/or Z' may contain a photochromic moiety or photochromic precursor. It is preferred that R7 contains the photochromic moiety or photochromic precursor.

In the case where the polymer is grown independently to the photochromic moiety or photochromic precursor and then subsequently attached to them: $^{R21}$, Z, and/or Z contain a functional group suitable to allow attachment to a photochromic moiety or photochromic precursor. Such groups may be but not limited to carboxylic acid, hydroxyl etc.

Examples of functional RAFT agents that maybe used to with the photochromic moiety to grow a polymeric substituent or to independently prepare the polymeric substituent to be attached to a photochromic dye or photochormic precursor will now be described. The RAFT agents may be selected from but not limited to dithioesters, trithiocarbonates, xanthates or dithiocarbamates. The nature of RAFT agent synthesis allow for a great flexibility as to the provision of functional groups to allow attachment of the RAFT agent or polymers derived from them to photochromic molecules or photochromic precursors. The arrow illustrates the point of monomer insertion during a polymerization. A wide variety of functional groups may be used for coupling such as hydroxy, acid, alkene, thiol etc. that can be coupled to the photochromic agent with conventional organic synthetic methods. The choice of a specific RAFT agent is determined by the nature of the function group on the photochromic groups available for coupling and the nature of the polymer needed to be made.

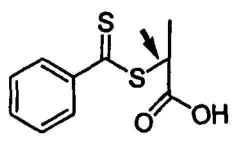 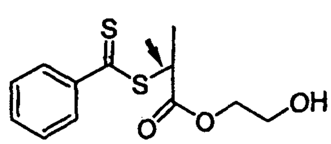

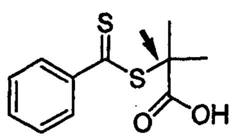 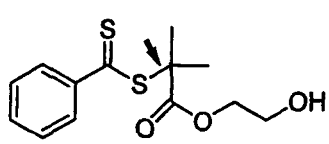

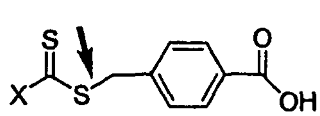 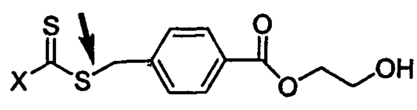 X = S-R R = alkyl, aryl
O-R
N(R)2

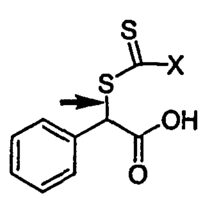 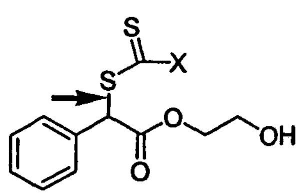 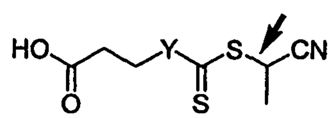 Y = S,O

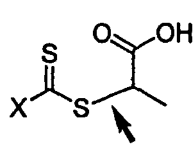 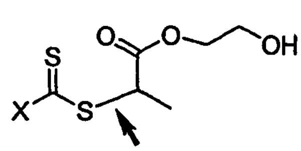 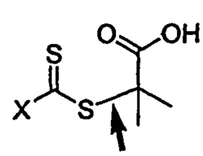

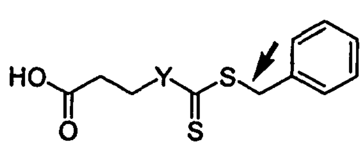 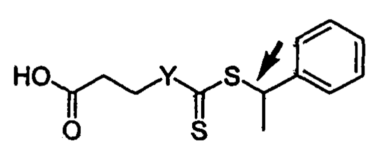

D description of the dithioester chemistry is contained in International Patent Application PCT/US97/12540 (WO 98/01478) in the name of E.I. Du Pont De Nemours and Company the contents of which are herein incorporated by reference.

Examples of the radical adducts may be prepared from the multifunctional compound of formula XV:

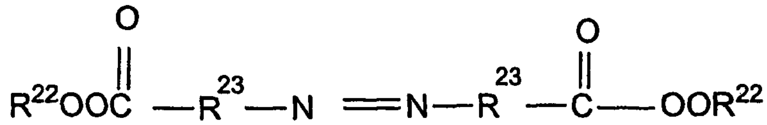

XV

by activating the perester group in the case of compounds of formula XV or the azo group in the case of compounds of formula VIII. Examples of multifunctional initiators such as di-t-butyl-4,4'-azobis(4-cyanoperoxy valerate) are disclosed by Piirma et al., J. Appl. Poly. Sci. 24:2051 (1979), J. Appl. Polym. Sci 26:3013 (1981) and J. Appl. Polym. Sci 33:717 (1987).

Living prepolymers containing an azo group as a link between polymeric substituent chains may be prepared by reacting and anionic polymeric substituent with an azobis(isobutylronitrile) (AIBN) according to the scheme.

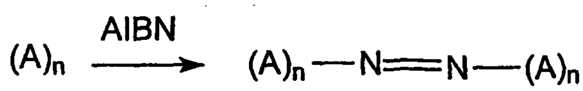


Such a procedure is disclosed by Reeb et al., Eur. Polym. J. 12:317 (1976) and Poym. Prepr., Am. Chem. Soc., Div. Polym., Chem., 21:55 (1980).

An analogous procedure may be used to prepare peroxy containing living prepolymer by reacting an anionic polymeric substituent with p,p'-bis(bromomethyl)benzoyl peroxide in the presence of a promoter such as butyl lithium. Examples of such a process are disclosed by Riess et al., Eur. Polym. J. 11:301 (1975) and Inf. Chim. 116:117 (1973).

Living prepolymers having sulfur containing trapping groups may be derived from mercaptans of formula XVI or XVII

$A_n(CH_2)_m$ SH XVI

$A_n(CH_2)_m$ S $B_p$ XVII

wherein A and B are monomers which may be the same or different.

Such mercaptans may in turn be prepared by a range of methods known in the art. In a preferred example, adducts of formula XVI or XVII wherein m is 2 are prepared by reaction of an anionic prepolymer $(A)^-$ with a thirane to cause ring opening and provide a 2-thiolethyl substituted prepolymer of formula XVI and optionally reacting the 2-thiolethyl substituted polymer with a monomer (B), which may be the same as A or different from A, to provide a prepolymer of formula XVII.

In the compounds of formula VIII to XVII the monomer A or B and monomer units -(A)-- may have the formula defined for monomer A and monomeric unit (A) in thioesters IIIa and IIIb.

Another class of living prepolymer useful in the process of the invention are macromonomers depicted by formula XIII. In particular, macromonomers containing a maximum of two carbon-carbon double bonds more preferably one carbon-carbon double bond, per polymer chain.

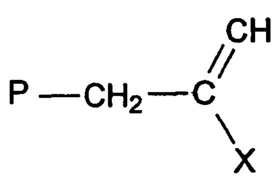

XVIII

Where X is $-CONR^{24}$, $--COOR^{23}$, $OR^{24}$, $-OCOR^{23}$, $-OCOOR^{24}$, $-NRCOOR^{24}$, halo, cyano, or a substituted or unsubstituted phenyl or aryl, wherein R is independently selected from the group of hydrogen, silyl, or a substituted or

unsubstituted alkyl, alkyl ether, phenyl, benzyl, or aryl, wherein said groups may be substituted with epoxy, hydroxy, isocyanato, cyano, amino, silyl, acid (--COOH), halo, or acyl; and wherein $R^{24}$ is the same as R except not H.

Macromonomers of this type can be prepared by a number of different methods. Two methods of preparation, included for illustration purposes but not meant to be limited, are:

1) Catalytic chain transfer agents containing Co2+ Co3+ as described in U.S. Pat. Nos. 5,362,826, 5,324;879 and WO 9731030 which is equivalent to U.S. Pat. No. 6,100,350, the contents of which are incorporated by reference.

2) Addition-fragmentation polymerization as described in PCT/US95/14428 (WO 960704) which is equivalent to U.S. Pat. No. 5,756,605 and to U.S. Pat. No. 6,291,620 the contents of which are incorporated by reference.

The macromonomer may be used as a living prepolymer in the process of the invention or may be modified to provide a radical terminating group adapted to reversibly cleave from the prepolymer under activating conditions. In one embodiment a double bond of the macromonomer is converted and provide a capped radical by any of a range of methods depending on the type of radical terminating group to be used. For example, an alkoxy amine terminating group may be provided by reaction with an oxygen activating group such as a butoxide followed by reaction with a hindered nitroxide. Alternatively a group suitable for ATRP may be incorporated by reaction with an appropriate brominating agent, such as hexadecyltrimethylphosphoniumbromide, to form a bromide.

Nitroxide radical species such as TEMPO (tetramethyl-1-oxyl radical) or other may also be used to form the polymeric substituent. It is believed that the nitroxide radical enables the polymer length and molecular weight distribution to be controlled. The use of nitroxide radicals in the process of the invention is particularly preferred when in the alkoxy amine of Formula I n is zero or less than about 5. Radical initiators such as AIBN may also be used to provide rate enhancement.

The alkoxyamine used in the present invention is preferably of Formula XIX

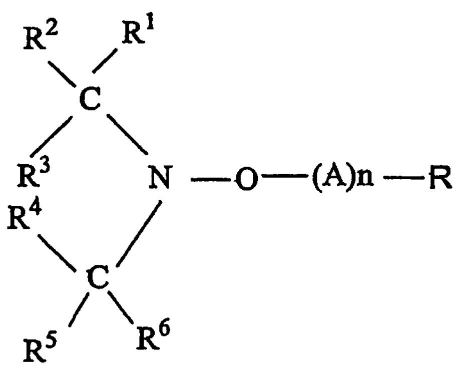

XIX

wherein $-(A)_n$ R is a radical species capable of polymerising in the presence of the monomer component comprising the cross-linking agent. R is preferably the photochromic moiety PC or derivative thereof. In the initiators of formula (XIX), the groups $R^1$, $R^2$, $R^5$ and $R^6$ are the same or different straight chain or branched substituted or unsubstituted alkyl groups of a chain length sufficient to provide steric hindrance and weakening of the O-$(A)_n$. R bond, and
$R^3$ and $R^4$ are the same or different straight chain or branched alkyl or substituted alkyl groups or $R^3CNCR^4$ may be part of a cyclic structure which may have fused with it another saturated or aromatic ring. Mixtures of alkoxyamines may be used if desired.

In the group $(A)_n$ X the unit A is a monomer unit which, when there is more than one A, may be the same or different;
n is zero or greater than zero; and
X is an initiator fragment residue.

The weakening of the O-X bond is generally achieved at moderate temperatures to provide free radical polymerization.

Specific examples of suitable nitroxides include the following:

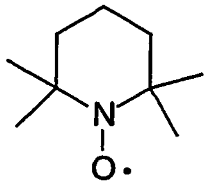
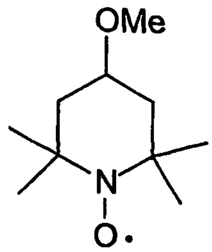
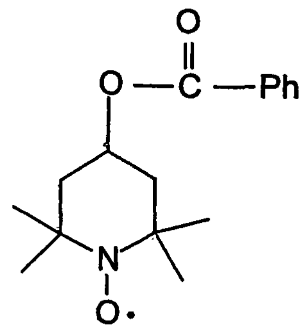

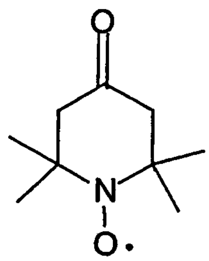
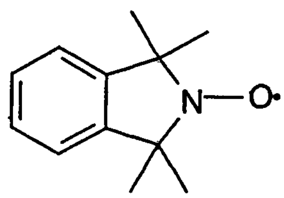
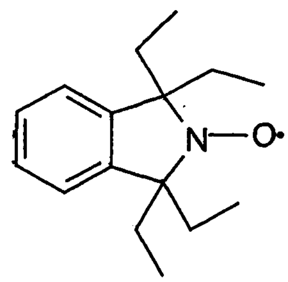

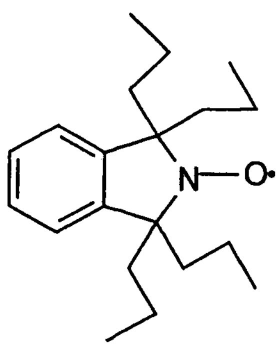
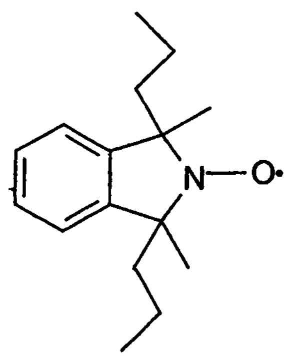

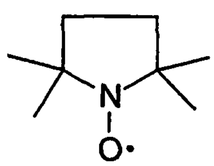
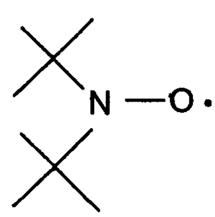

Examples of the initiator fragment residue include radicals of formula:

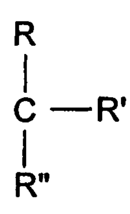

wherein R, R' and R", are independently selected from the group consisting of hydrogen, alkyl, phenyl, cyano, carboxcylic acid, carboxcylic groups and substituted groups thereof and wherein two of R, R' and R" may together form an aliphatic or aromatic ring. The most preferred initiator fragment is a radical formed from the photochromic moiety.

Alkoxy amines such as those of Formula I can be manufactured by heating a nitroxide radical of Formula II in the presence of a stoichiometric amount of a carbon centred free radical X, where X may be generated by any of the methods well known in the art e.g. by the decomposition of an azo compound, by scission of an alkoxy radical or by H atom abstraction from a suitable monomeric or polymeric compound or by addition of a free radical to an olefin. More specifically X can be generated by the thermal or photochemical dissociation of X-X, or X-Z-X or X-Z-Z-X where Z is a group which in its uncombined form is a small stable molecule e.g. $CO_2$ or $N_2$.

The alkoxyamine so formed may be isolated and purified for later use or it may be used without further purification for the initiation of polymerization.

Details of such nitroxide mediated polymerization process are provided in U.S. Pat. No. 4,581,429 (Solomon et al). Such a polymeric substituent may be prepared using the mono-unsaturated monomers and butadiene monomers listed above.

An aminoxy capped polymeric substituent may also be prepared by anionic polymerization. For example polymeric substituents derived from anionic polymerization such as poly(styryllithium) may be reacted with a pryridinium salt such as 1-oxo-4-methoxy-2,2,6,6-tetramethylpyridinium salt (OAS) to provide the corresponding nitroxyl radical (MTEMPO). An example of such a procedure is described by Yoshida et al in the paper "Synthesis of Polystyrene having an Aminoxy Terminal by the Reactions of Living Polystyrene with Oxoaminium Salt and with Corresponding Nitroxyl Radical", Macromolecules 27 (12) 3119-3124. Alternatively an polymeric substituent may be prepared by anionic polymerization and the polymeric substituent anion reacted with AIBN which may subsequently be substituted with a nitroxide. The preparation of AIBN terminated following anionic polymerization is described by Vinchon et al "Preparation de Promoteurs Azoiques Macromoleculaires Par Voie Anionique. European Polymer Journal, 12 pp. 317-321. This paper prepares a block copolymer of styrene and methylmethacralate and a copolymer of styrene and vinyl chloride which may be utilised in the process of the present invention.

The nitrosyl radical portion of Formula I may, for example, be provided by PROPOXYL (2,2,5,5-tetramethyl-1-pyrrolidinyloxy) and derivatives thereof, TEMPO (2,2,6,6-tetramethyl-1-piperidinylopcy) and derivatives thereof and DOXYL (4,4-dimethyl-1-oxazolidinyloxy) and derivatives thereof. Other examples of suitable nitroxide radicals are provided in U.S. Pat. No. 4,581,429 (Solomon et al) the contents of which are herein incorporated by reference.

The following are additional examples of how the photochrome may be constructed. The RAFT and ATRP groups for growth from a dye or independent polymeric substituent synthesis with subsequent attachment to the dye.

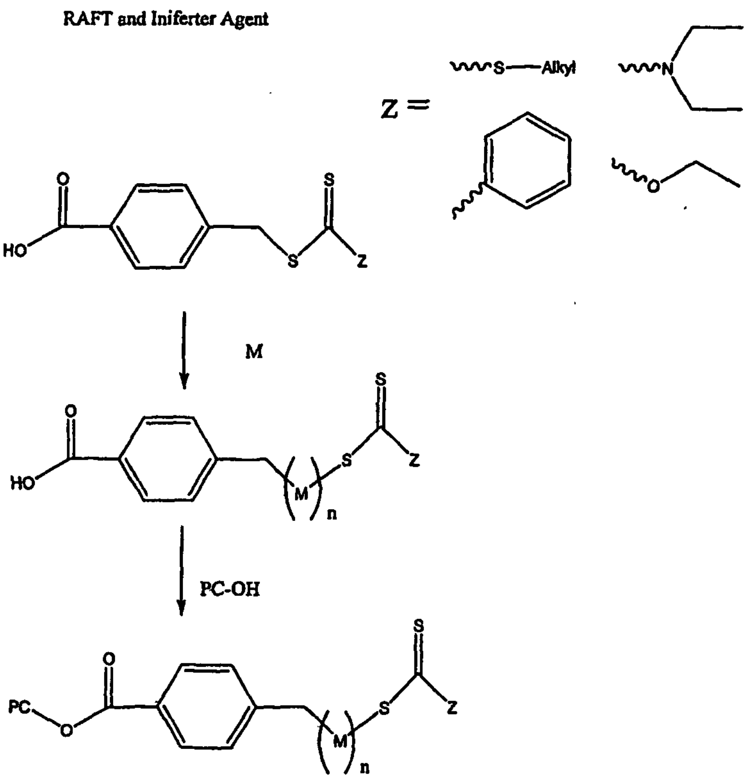


A particularly preferred example of ATRP growth from dye is shown in the scheme below.

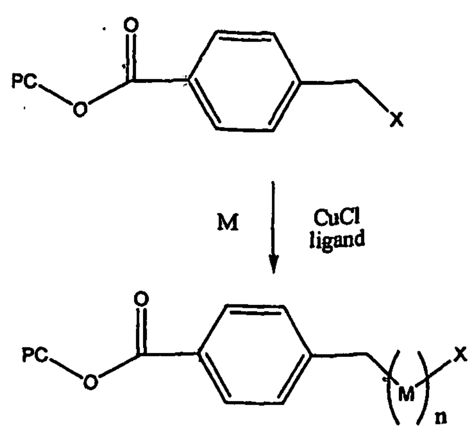


In the embodiment in which the polymeric substituent is formed by living free radical polymerisation the terminal group may be a free radical capping group as described above. For example the terminal group may be selected from hydrogen, methyl, butyl, alkyl, halogen, dithioester (-S-C=S-R), trithiocarbonate (-S-C=S-S-R), dithiocarbamate (-S-C=S-NRR), xanthate (-S-C=S-O-R), carboxylic acids, carboxylic esters, hydroxy etc. By appropriate choice of radical terminating group and matrix the terminal group may be made to undergo radical polymerisation with the matrix. The radical-terminating group may also be replaced with other reactive groups such as those referred to above.

The photochromic moiety may be chosen from a wide range of photochromic moieties known in the art. The most appropriate photochromic moieties for use in the compounds used in accordance with the invention are photochromics which undergo a molecular isomerism such as a cis-trans isomerism or pericyclic reaction such as $6\pi$ - 6 atom, $6\pi$ - 5 atom processes and [2+2], [4+4] or [4+2] cycloadditions. The compositions of the invention (and in particular the oligomer chains) are believed to provide a nanoenvironment which may lead to a more rapid transformation between the colour-producing chromophore and colourless state of the photochromics.

The photochromic monomer of the invention may be reacted with a cured or partly cured resin formed from a monomer composition. The resin may for example be a thermoplastic resin and the photochromic may be incorporated in the resin before, during or after moulding under conditions which lead to reaction between the cured or partly cured resin and the photochromic monomer.

An example of reaction of the photochromic monomer with a resin includes reaction of a resin having pendant ester groups with a hydroxy functionalised photochromic monomer to provide transesterification to tether the photochromic via a pendant ester group. A further example is a polyalkylene resin containing remaining unsaturated groups and sufficient catalyst to provide polymerisation of an unsaturated photochromic monomer with remaining unsaturation in the resin.

The photochromic monomer of the invention may be reacted with a cured or partly cured resin formed from a monomer composition. The resin may for example be a thermoplastic resin and the photochromic may be incorporated in the resin type, during or after moulding under condition which lead to reaction between the cured or partly cured resin at the photochromic monomer.

An example of reaction of the photochromic monomer with a resin includes reaction of a resin having pendant ester groups with a hydroxy functionalised photochromic monomer to provide transesterification to the photochromic via a pendant on ester group. A further example is a polyalkylene resin containing remaining unsaturated groups and sufficient catalyst to provide polymerisation of an unsaturated photochromic monomer with remaining unsaturation in the resin.

Photochromic oligomer adducts in accordance with the invention may comprise a photochromic moiety selected from the group consisting of:

chromenes such as those selected from the group consisting of naphthopyrans, benzopyrans, indenonaphthopyrans and phenanthropyrans;
spiropyrans such as those selected from the group consisting of spiro(benzindoline) naphthopyrans, spiro(indoline) benzopyrans, spiro(indoline)-naphthopyrans, spiroquinopyrans, spiro(indoline)pyrans and spirodihydroindolizines;
spiro-oxazines such as those selected from the group consisting of spiro(indoline)naphthoxazines, spiro(indoline) pyridobenzoxazines, spiro(benzindoline)pyridobenzoxazines, spiro(benzindoline)naphthoxazines and spiro(indoline)- benzoxazines;
fulgidies, fulgimides;
anils;
perimidinespirocyclohexadienones;
stilbenes;
thioindigoids;
azo dyes; and
diarylethenes.

Examples of photochromic moieties may be selected from the group consisting of fulgide photochromic compounds, chromene photochromic compounds and spiro-oxazine photochromic compounds. A wide range of photochromic compounds of each of the classes referred to above have been described in the prior art and having regard to the teaching herein the skilled addressee will have no difficulty in preparing a wide range of photochromic oligomer adducts. Examples of chromene photochromic compounds, fulgide photochromic compounds and spiro-oxazine photochromic compounds are described in US Patent No. 5776376.

The most preferred photochromic compounds are the chromenes and spiro-oxazines, specifically spiroindolene aroxazines.

Sprio-oxazines such as sprioindoline naphthoxazines depicted below are clear but in the presence of light undergo ring opening to give a coloured form as shown:

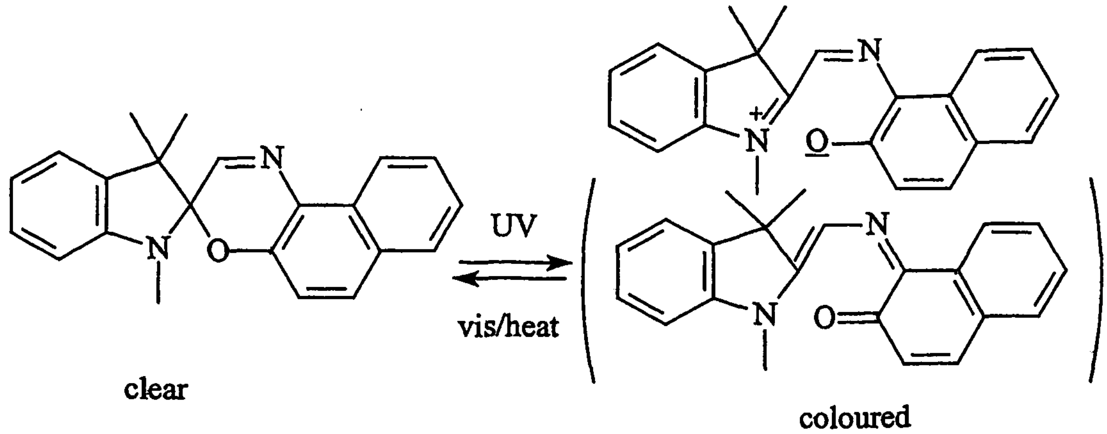


A further embodiment of the invention is a photochromic compound of formula

$$(PC) - (X)_pL\ (R)_n$$

wherein PC is a photochromic moiety particularly a spirooxazine of formula III, chromene of formula XX, fulgide/fulgamide of formula XXX or an azo dye of formula XL and L, R, X and n and p are as hereinbefore defined.

Preferred spiro-oxazines of the general formula III can be suitably used.

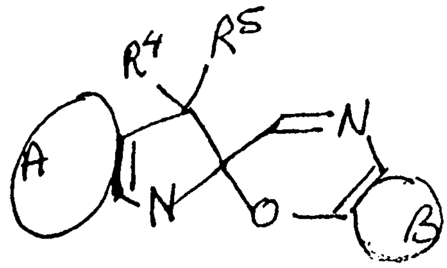

III

In the general formula III, $R^3$, $R^4$ and $R^5$ may be the same or different and are each an alkyl group, a cycloalkyl group, a cycloarylalkyl group, an alkoxy group, an alklyleneoxyalkyl group, an alkoxycarbonyl group, a cyano, an alkoxycarbonylalkyl group, an aryl group, an arylalkyl group, an aryloxy group, an alkylenethioalkyl group, an acyl group, an acyloxy group or an amino group, $R^4$ and $R^5$ may together form a ring, and $R^3$, $R^4$ and $R^5$ may optionally each have a substituent(s). The substituent(s) can include, besides the above-mentioned groups, halogen atom, nitro group, heterocyclic group, etc. The group represented by moiety IIIa

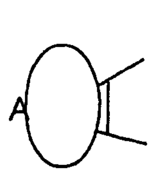 IIIa

is a substituted or unsubstituted bivalent aromatic hydrocarbon group or a substituted or unsubstituted bivalent unsaturated heterocyclic group. The group represented by moiety IIIb

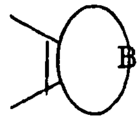

IIIb

is a substituted or unsubstituted bivalent aromatic hydrocarbon group or a substituted or unsubstituted bivalent unsaturated heterocyclic group. Specific examples of the bivalent aromatic hydrocarbon group are groups of 6 to 14 carbon atoms derived from benzene ring, naphthalene ring, phenanthrene ring, anthracene ring or the like. Specific examples of the bivalent unsaturated heterocyclic group are groups of 4 to 9 carbon atoms derived from furan ring, benzofuran ring, pyridine ring, quinoline ring, isoquinoline ring, pyrrole ring, thiophene ring, thiophene ring, benzothiophene ring or the like.

The substituents can be the same groups as mentioned above with respect to $R^3$, $R^4$ and $R^5$. In particular, a group represented by

$-NR^6R^7$

(wherein $R^6$ and $R^7$ are each an alkyl group, an alkoxy group, an allyl group or the like, each of which may be substituted; and $R^6$ and $R^7$ may be bonded and cyclized with each other to form a nitrogen-containing heterocyclic ring) is preferable from the standpoint of high density of its developed colour in the initial photochromic performance.

In a particularly preferred embodiment the photochromic compounds of the invention are of formula IV

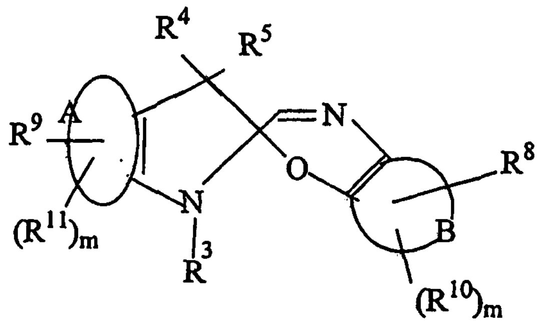

IV

wherein $R^3$, $R^4$, $R^5$, $R^8$ $R^9$, $R^{10}$ and $R^{11}$ are independently selected from the group consisting of hydrogen, alkyl, halo, haloalkyl, cycloalkyl, cycloarylalkyl, hydroxy, alkoxy, alkyleneoxyalkyl, alkoxycarbonyl, aryl, arylalkyl, aryloxy, alkylenethioalkyl, acyl, acyloxy, amino, $NR^6R^7$, cyano and the group $L(R)_n$ wherein at least one of $R^3$, $R^8$ and $R^9$ is the oligomer group of formula $L(R)_n$ wherein L, R and n are hereinbefore defined and wherein there is more than one $L(R)_n$ group in the groups $R^8$, $R^3$, $R^4$ and $R^5$ and one or more R groups may optionally be linked together to form one or more bridging oligomers. The subscript m is an integer and may be 0, 1 or 2 wherein m is 2 the groups may be independently selected.

In the compound of formula IV the total of the number of monomer units in oligomer substituents, $(R)_n$, is at least 7, more preferably at least 9 and most preferably at least 12.

More preferably, the substituents $R^3$ is selected from the group consisting of alkyl, cycloalkyl, cycloarylalkyl, alkyleneoxyalkyl, aryl, arylalkyl alkylenethioalkyl, and the group $L(R)_n$ and more preferably $R^3$ is selected from alkyl, cycloalkyl, cycloarylalkyl, alkenyloxyalkyl, aryl, arylalkyl, and the group $L(R)_n$ and preferably $R^4$ and $R^5$ are independently selected from alkyl, cycloalkyl and aryl.

$R^8$ and $R^9$ are independently selected from hydrogen and $L(R)_n$; $R^{10}$ and $R^{11}$ are independently selected from the group consisting alkyl, cycloalkyl, cycloarylalkyl, alkoxy, $-NR^6R^7$, cyano, alkyleneoxyalkyl, alkoxycarbonyl, aryl, arylalkyl, aryloxy, alkylenethioalkyl, aryl aryloxy and amino and most preferably $R^{10}$ and $R^{11}$ are independently selected from alkyl, cycloalkyl, alkoxy, $NR^6R^7$ and cyano; and
m is 0 or 1.

Examples of the preferred fused aromatic ring groups of formula IIIa include IIIa(i);

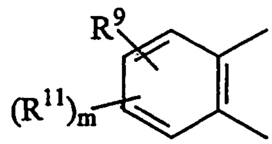

IIIa(i)

wherein $R^9$ and $R^{11}$ are as hereinbefore defined.

Examples of the preferred fused aromatic ring group of formula IIIb include IIIb(i), IIIb(ii), IIIb(iii) and IIIb(iv).

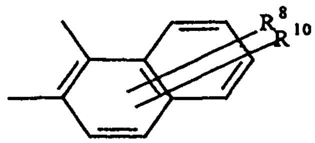

IIIb(i)

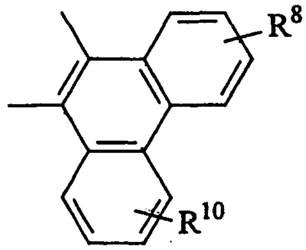

IIIb(ii)

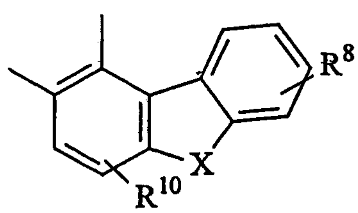

IIIb(iii)

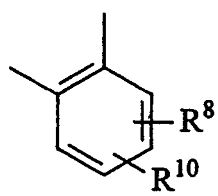

IIIb(iv)

Specific examples of the group of formula IIIa(i) include

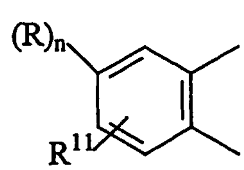

IIIa(ia)

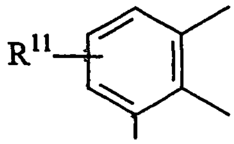

IIIa(ib)

Specific examples of the group of formula IIIb include

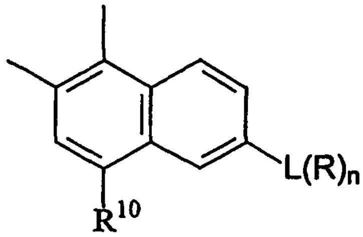

IIIb(ia)

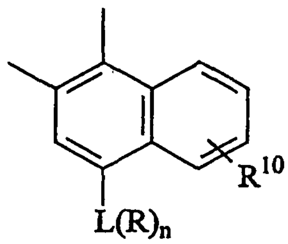

IIIb(ib)

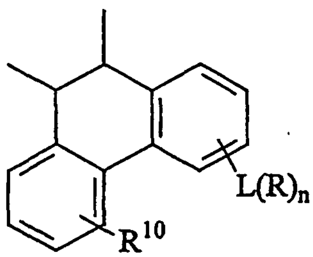

IIIb(iia)

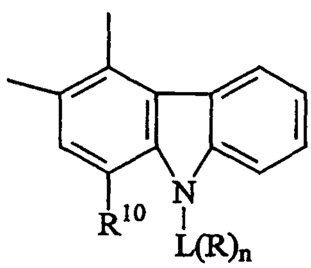

IIIb(iiia)

One particularly preferred embodiment of the compounds of formula IV has the formula IVa

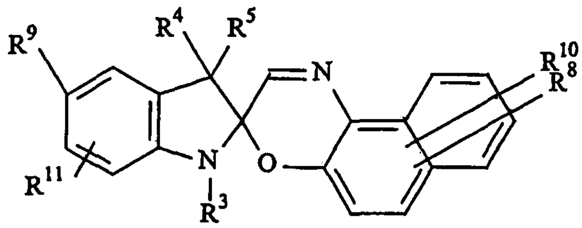

IVa

The more preferred compounds of formula IVa are compounds wherein $R^4$ and $R^5$ are preferably independently selected from the group consisting of $C_1$ to $C_4$ alkyl and the group wherein $R^4$ and $R^5$ link together to form a cycloalkyl of from 4 to 6 carbon atoms.

$R^8$ and $R^9$ are independently selected from the group consisting of hydrogen, halogen, cycloalkyl, cycloarylalkyl, hydroxy alkoxy, cyano, alkenyloxyalkyl, alkoxycarbenyl, aryl, aralkyl, aryloxy, alkylene, thioalkyl and the oligomer of formula $L(R)_n$ wherein L, R and n are as hereinbefore defined;

$R^{10}$ and $R^{11}$ are independently selected from the group consisting of hydrogen, halogen, cycloalkyl, cycloarylalkyl, alkoxy, cyano, alkenyloxyalkyl, alkoxycarbonyl, aryl, arylalkyl, acyloxy and alkylenethioalkyl. Most preferably $R^{10}$ and $R^{11}$ are hydrogen; and at least one of $R^8$ and $R^9$ is the group $L(R)_n$ wherein the total number of monomer units in R is at least 10 and more preferably at least 12.

In order to provide an increase in fade rate of the photochromic in a polymer (preferably a polymer of high Tg) article, the size of the oligomer chain must be greater than a certain size. The minimum size will depend on the nature of the oligomer chain and the linking group. It is believed that the fade is significantly accelerated where a oligomer chain may adopt a conformation in which a portion of the chain is adjacent the oxazine ring. Accordingly, linking groups which direct the oligomer chain across the molecule (such as the group of formula VI to VIII comprising at least one polymer chain R in a portion otho to the link) may enable the minimum number of effective monomer units to be reduced when compared with other linking groups.

In one preferred embodiment one of $R^3$, $R^8$ and $R^9$ is $L(R)_n$ where the R groups together include at least 10 monomer units. Alternatively, $R^8$ and at least one of $R^9$ and $R^3$ (preferably $R^9$) is $L(R)_n$ and the two or more groups $L(R)_n$ contain at least 10 monomer units.

Specific examples of compounds of the invention include those listed in Table 1.

**Table 1**

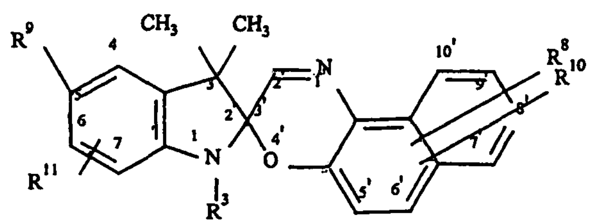

| | $R^8$ | $R^3$ | $R^9$ | $R^{10}$ | $R^{11}$ |
|---|---|---|---|---|---|
| 1 | PDMS(855)-prop-meac | $CH_3$ | H | H | H |
| 2 | PDMS(855)-prop-meac | $CH_2$-$CH(CH_3)_2$ | | | |
| 3 | PDMS(855)-prop-meac | $CH_2$-$C(CH_3)_3$ | H | H | H |
| 4 | PDMS(855)-prop-meac | $CH_3$ | H | 6'-N(Et)2 | H |
| 5 | PDMS(855)-prop-meac | $CH_3$ | H | H | H |
| 6 | PDMS(855)-prop-meac | $CH_3$ | H | 6'-N(Et)2 | H |
| 7 | PDMS(855)-prop-meac | $CH_3$ | 5-$OCH_3$ | H | H |
| 8 | PDMS(855)-prop-meac | $CH_3$ | 5-$OCH_3$ | 6'-N(Et)2 | H |
| 9 | PDMS(855)-prop-meac | $CH_3$ | 5-$OCH_3$ | H | H |

(continued)

| | **R⁸** | **R³** | R⁹ | **R¹⁰** | **R¹¹** |
|---|---|---|---|---|---|
| 10 | PDMS(855)-prop-meac | $CH_3$ | 5-$OCH_3$ | 6'-N(Et)2 | H |
| 11 | H | $CH_3$ | PDMS(855)-prop-meac | H | H |
| 12 | H | $CH_2$-$CH(CH_3)_2$ | PDMS(855)-prop-meac | H | H |
| 13 | H | $CH_2$-$C(CH_3)_3$ | PDMS(855)-prop-meac | H | H |
| 14 | H | $CH_3$ | PDMS(855)-prop-meac | 6'-CN | H |
| 15 | H | $CH_3$ | PDMS(855)-prop-meac | 6'-N(Et)2 | H |
| 16 | H | $CH_2$-C $(CH_3)_3$ | PDMS(855)-prop-meac | 6'-N(Et)2 | H |
| 17 | H | $CH_3$ | PDMS(855)-prop-meac | H | H |
| 18 | H | $CH_3$ | PDMS(855)-prop-meac | 6'-N(Et)2 | H |
| 19 | H | $CH_3$ | PDMS(855)-prop-meac | 6'-CN, | H |
| 20 | H | $CH_2$-C $(CH_3)_3$ | PDMS(855)-prop-meac | 6'-N(Et)2 | H |
| 21 | H | $CH_3$ | O(CO)CH(CH3)-pBA (4000)-S(CS)S-butyl | 6'-N(Et)2 | H |
| 22 | 0(CO)CH(CH3)-pBA (4000)-S(CS)S-butyl | $CH_2$-C $(CH_3)_3$ | $OCH_3$ | H | H |

wherein (EO) is the group ($CH_2CH_2O$); and PDMS (855) = polydimethylsiloxane with an average molecular weight of 855; ac is acrylate; styr is styryl and where PDMS-prop-meac is the group

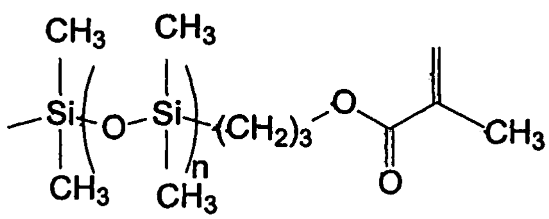

and O(CO)CH(CH3)-pBA(4000)-S(CS)S-butyl is the group. "(4000)" refers to molecular weight. It is to understood that a variety of molecular weights may be chosen.

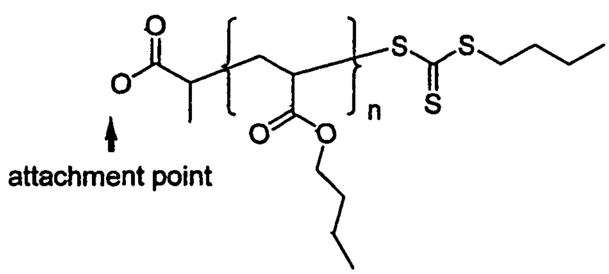

Further preferred compounds are provided in Table 2

**Table 2**

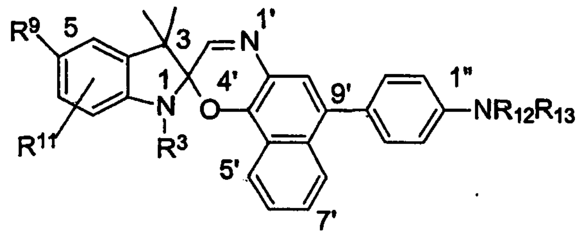

| | $R^9$ | $R^3$ | $R^{11}$ | $R^{12}$ | $R^{13}$ |
|---|---|---|---|---|---|
| 1 | PDMS(855)-prop-meac | $CH_3$ | H | Me | Me |
| 2 | PDMS(855)-prop-meac | $CH_3$ | H | Et | Et |
| 3 | PDMS(855)-prop-meac | $CH_3$ | H | pyrrolidino | |
| 4 | PDMS(855)-prop-meac | $CH_2$-$CH(CH_3)_2$ | H | Me | Me |
| 5 | PDMS(855)-prop-meac | $CH_2$-$CH(CH_3)_2$ | H | Et | Et |
| 6 | PDMS(855)-prop-meac | $CH_2$-$CH(CH_3)_2$ | H | pyrrolidino | |
| 7 | PDMS(855)-prop-meac | $CH_2$-$C(CH_3)_3$ | H | Me | Me |
| 8 | PDMS(855)-prop-meac | $CH_2$-$C(CH_3)_3$ | H | Et | Et |
| 9 | PDMS(855)-prop-meac | $CH_2$-$C(CH_3)_3$ | H | pyrrolidino | |
| 10 | PDMS(855)-prop-meac | $CH_3$ | H | Me | Me |
| 11 | PDMS(855)-prop-meac | $CH_3$ | H | Et | Et |
| 12 | PDMS(855)-prop-meac | $CH_3$ | H | pyrrolidino | |
| 13 | POMS(855)-prop-meac | $CH_2$-$CH(CH_3)_2$ | H | Me | Me |
| 14 | PDMS(855)-prop-meac | $CH_2$-$CH(CH_3)_2$ | H | Et | Et |
| 15 | PDMS(855)-prop-meac | $CH_2$-$CH(CH_3)_2$ | H | pyrrolidino | |
| 16 | PDMS(855)-prop-meac | $CH_2$-$C(CH_3)_3$ | H | Me | Me |
| 17 | PDMS(855)-prop-meac | $CH_2$-$C(CH_3)_3$ | H | Et | Et |
| 18 | PDMS(855)-prop-meac | $CH_2$-$C(CH_3)_3$ | H | pyrrolidino | |

(continued)

| | $R^9$ | $R^3$ | $R^{11}$ | $R^{12}$ | $R^{13}$ |
|---|---|---|---|---|---|
| 19 | O(CO)CH (CH3)-pBA(4000)-S (CS)S-butyl | $CH_3$ | H | pyrrolidino | |
| 20 | H | $CH_2$-$C(CH_3)_3$ | H | Et | Et- O(CO)CH (CH3)-pBA (4000)-S(CS)S-butyl |
| 21 | $OCH_3$ | $CH_3$ | H | Et | Et O(CO)CH (CH3)-pBA (4000)-S(CS)S-butyl |
| 21 | H | $CH_2$-$C(CH_3)_3$ | H | piperidino-4'-O(CO)CH(CH3)-pBA(4000)-S (CS)S-butyl | |

The more preferred compounds of the invention are of formula (IVb)

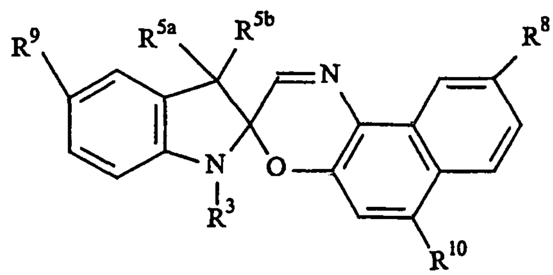

(IVb)

where the substituents are hereinbefore described and even more preferably $R^3$ is $C_1$ to $C_4$ alkyl; $C_3$ to $C_6$ cycloalkyl, aryl, alkylaryl, arylalkyl and $L(R)_n$; $R^{5a}$ and $R^{5b}$ are independently selected from $C_1$ to $C_6$ alkyl $C_3$ to $C_6$ cycloalkyl, aryl; $R^8$ and $R^9$ are selected from hydrogen, hydroxy, $C_1$ to $C_6$ alkoxy; $R^{10}$ is selected from the group hydrogen, hydroxy, $C_1$ to $C_6$ alkoxy -$NR^6R^7$ wherein $R^6$ and $R^7$ are independently hydrogen, $C_1$ to $C_6$ alkyl and wherein $R^6$ and $R^7$ may together form a divisional hydrocarbon chain of 4 to 6 carbon atoms.

As we have discussed above, in order to maximise the rate of colouration and fade in polar and non-polar polymers it is preferred that one of $R^3$, $R^8$ and $R^9$ is $L(R)_n$ comprising at least 10, more preferably at least 12 monomer units and the other two of $R^3$, $R^8$ and $R^9$ are other than $L(R)_n$ where $L(R)_n$ contains 7 monomer units.

In compounds where more than one of $R^3$, $R^8$ and $R^9$ is $L(R)_n$ comprising at least 7 monomer units, the effect on the rate of colouration and fade will depend to some extent on the oligomer and type of polymer. In cases where the polymer and oligomers are compatible, the rate of fade may be decreased and when the oligomer and resin are less compatible, the effect may be less or the rate of fade may be increased.

We have found that for compounds of formula IVa (preferably IVb) if $R^8$ and $R^9$ are shorter chains or smaller substituents they are also useful in controlling the rate of fade though to a more limited extent.

In a further embodiment, the invention therefore provides compounds of formula IVa (preferably IVb) wherein $R^8$ and $R^9$ are each selected from groups of formula I and groups of formula $L(R)_n$ as hereinbefore defined and the group $LR^{11}$ wherein $R^{11}$ is lower alkyl, lower haloalkyl, lower polyalkyleneoxy aryl and aryl(lower alkyl). The term lower is used to mean up to 6 carbon atoms in the chain and preferably up to 4.

In yet another embodiment we provide an intermediate for preparation of compounds of the invention, the intermediate being of formula IVa and more preferably IVb wherein $R^8$ and $R^9$ are selected from XH wherein X is hereinbefore defined. Preferably $R^8$ and $R^9$ are the same.

Compounds of the invention may be prepared by reaction of intermediates Va or Vb and VI.

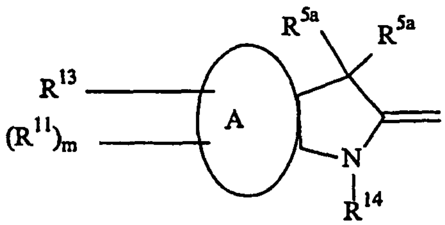

Va

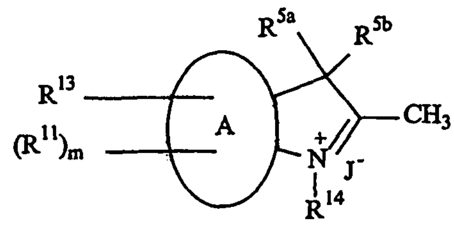

Vb

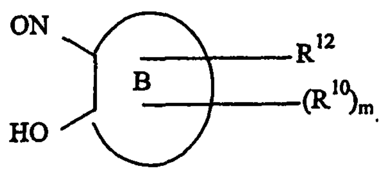

VI

One method for preparing compounds of the invention comprises reacting a methylene indolene of formula Va or Fishers base or indolium salt of formula Vb where J is halogen, particularly the iodide salt, wherein $R^{13}$ is $R^9$ and $R^{14}$ is $R^3$ with a nitrosohydroxy compound of formula VI to provide a compound of the invention of formula IV.

Alternatively, a methylene indolene of formula Va or indolium salt of formula Vb may be reacted with a nitrosohydroxy-compound of formula VI wherein $R^{12}$ and $R^{13}$ are independently selected from the group consisting of hydrogen and -XH and at least one of $R^{12}$ and $R^{13}$ is -XH to provide an intermediate of formula VII.

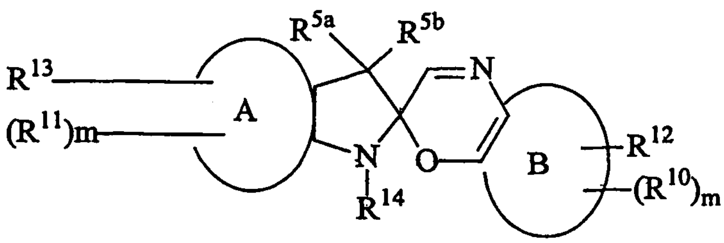

VII

and reacting the compound of formula VIII with a compound of formula VII

$JL(R)_n$ VIII

wherein J is a leaving group to form a compound of formula IV wherein at least one of $R^8$ and $R^9$ are the group $L(R)_n$.

Alternatively or in addition the compound of formula IV wherein $R^3$ is $L(R)_n$ may be prepared by (a) reacting the compound of formula Va or Vb with a compound of formula VIII to provide a compound of formula Va and Vb where $R^{14}$ is $L(R)_n$ and reacting the compound of formula VIa or VIb with a compound of formula VI to provide a compound of formula IV wherein $R^3$ is $L(R)_n$.

Specific examples of compounds of formula VIII, include J $L(R)_n$ where J is chlorine, L is of formula IIa to IIc where p is O and R is any one of the R group examples (i) to (v) shown above.

Compounds of formula IV where L is a bond may additionally be prepared by using a toluene sulfonyl leaving group for example by reaction of the compound of formula IX

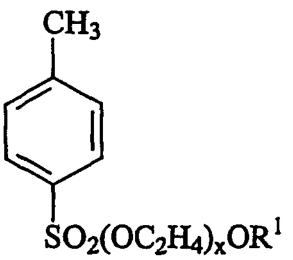

IX

with a compound of formula IV wherein at least one of $R^8$ or $R^9$ is XH and/or $R^3$ is hydrogen to provide a compound where one or more groups is alkoxylated.

Compounds of formula X

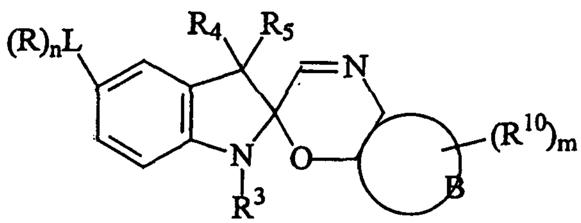

X

having a wide variety of the fused aromatic groups B may be prepared using the intermediate of formula Vc.

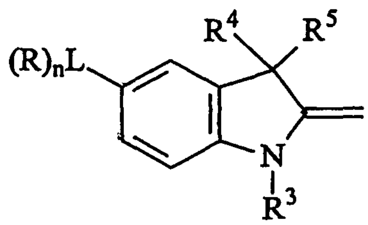

Vc

The fused aromatic group B and its substituents may be chosen to provide the desired colour of the photochromic compound. Such compounds provide a versatile method of preparation of rapid fade spiroindolineoxazines.

Examples of suitable substituted methylene indolene compounds of formula Va and Vb include 5-amino indolene compounds described by Gale & Wiltshire (J. Soc. Dye and Colourants 1974, 90, 97-00), 5-amino methylene compounds described by Gale, Lin and Wilshire (Aust. J. Chem. 1977 30 689-94) and 5-hydroxy compounds described in Tetrahedron Lett. 1973 12 903-6 and in US Patent 4062865.

One of the preferred groups of photochromics are the spiropyrans. Examples of spiropyrans include compounds of formula XX

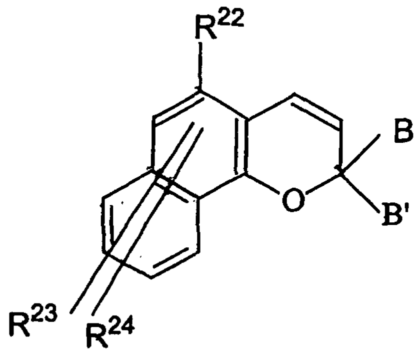

XX

wherein ,

B and B' are optionally substituted aryl and heteroaryl; and
$R^{22}$, $R^{23}$ and $R^{24}$ are independently selected from hydrogen; halogen; $C_1$ to $C_3$ alkyl; the group $L(R)_n$; and the group of formula COW wherein W is $OR^{25}$, $NR^{26}R^{27}$, piperidino or morpholino wherein $R^{25}$ is selected from the group consisting of $C_1$ to $C_6$ alkyl, phenyl, ($C_1$ to $C_6$ alkyl)phenyl, $C_1$ to $C_6$ alkoxyphenyl, phenyl $C_1$ to $C_6$ alkyl ($C_1$ to $C_6$ alkoxy)phenyl, $C_1$ to $C_6$ alkoxy $C_2$ to $C_4$ alkyl and the group $L(R)_n$; $R^{26}$ and $R^{27}$ are each selected from the group consisting of $C_1$ to $C_6$ alkyl, $C_5$ to $C_7$ cycloalkyl, phenyl, phenyl substituted with one or two groups selected from $C_1$ to $C_6$ alkyl and $C_1$ to $C_6$ alkoxy and the group $L(R)_n$; $R^{22}$ and $R^{23}$ may optionally from a carboxylic ring of 5 or 6 ring members optionally fused with an optionally substituted benzene and wherein at least one of the substituents selected from the group of substituents consisting of B and B', $R^{22}$, $R^{23}$, $R^{24}$, $R^{25}$, $R^{26}$ and $R^{27}$ is the group $L(R)_n$.

When $R^{22}$ and $R^{23}$ are carbocyclic a preferred compound is of formula XX(d)

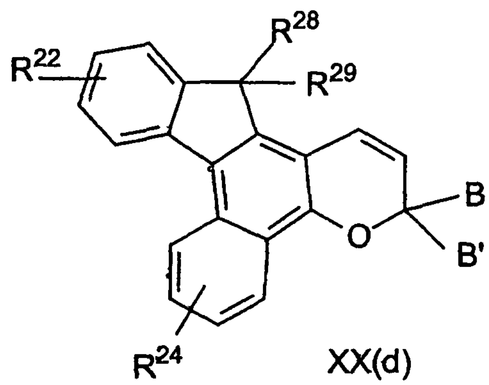

XX(d)

where $R^{22}$, $R^{28}$ and $R^{29}$ are as defined for $R^{22}$ above.

Preferably B and B' are independently selected from the group consisting of aryl optionally substituted with from 1 to 3 substituents, heteroaryl optionally substituted with from 1 to 3 substituents. The substituents where present are preferably selected from the group consisting of hydroxy, aryl, ($C_1$ to $C_6$) alkoxyaryl, ($C_1$ to $C_6$) alkylaryl, chloroaryl ($C_3$ to $C_7$) cycloalkylaryl, ($C_3$ to $C_7$) cycloalkyl, ($C_3$ to $C_7$) cycloalkoxy, ($C_3$ to $C_7$) cycloalkoxy, ($C_1$ to $C_6$) alkyl, aryl ($C_1$ to $C_6$) alkyl, aryl ($C_1$ to $C_6$) alkoxy, aryloxy, aryloxyalkyl, aryloxy ($C_1$ to $C_6$) alkoxy, ($C_1$ to $C_6$) alkylaryl, ($C_1$ to $C_6$) alkyl, ($C_1$ to $C_6$) alkoxyaryl, ($C_1$ to $C_6$) alkyl, ($C_1$ to $C_6$) alkoxyaryl, ($C_1$ to $C_6$) alkyl, ($C_1$ to $C_6$) alkoxyaryl, ($C_1$ to $C_6$) alkoxy, amino, N-($C_1$ to $C_6$) alkyl ipirazino, N-aryl piperazino, indolino, piperidino, aryl pipersillins, morpholino, thiomorpholino, tetrahydro quinolino.

$NR^{29}R^{30}$ wherein $R^{29}$ and $R^{30}$ are independently selected from the group selected from $C_1$ to $C_6$ alkyl, phenyl, $C_5$ to $C_7$ cycloalkyl and the group wherein $R^{29}$ and $R^{30}$ form a linking group of 4 or 5 linking groups comprising methylene groups and optionally containing one or two hetero atoms and optionally further substituted by $C_1$ to $C_3$ alkyl and the group $L(R)_n$.

$R^{22}$ is selected from the group consisting of hydrogen, $C_1$ to $C_6$ alkyl; COW
where

W is $OR^{25}$ wherein $R^{25}$ $C_1$ to $C_6$ alkyl; and the group $NR^{26}R^{27}$; wherein $R^{26}$ and $R^{27}$ are independently $C_1$ to $C_6$ alkyl; and the group $L(R)_n$.

Particularly preferred naphthopyran compounds are of formula XX(a)

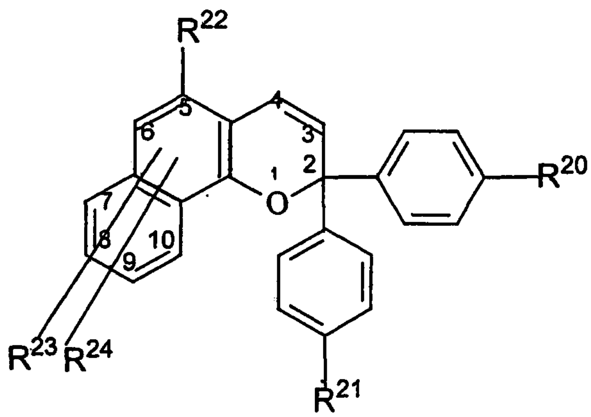

XX(a)

wherein $R^{20}$ and $R^{21}$ are independently selected from the group consisting of hydrogen, hydroxy, alkoxy, amino, alkylamino, dialkylamino and $L(R)_n$;

$R^{22}$ is the group COW where W is $C_1$ to $C_6$ alkoxy or the group $L(R)_n$;

$R^{23}$ is selected from the group consisting of hydrogen and $NR^{26}R^{27}$ where $R^{26}$ are independently selected from the group consisting of $C_1$ to $C_6$ alkyl and where $R^{26}$ and $R^{27}$ may together form an alkylene group of 4 to 6 carbon atoms;

$R^{24}$ is hydrogen or the group $L(R)_n$; and wherein at least one of $R^{22}$ and $R^{24}$ is $L(R)_n$.

Specific example of the naphthopyran compounds of formula XX(a) include those shown in Table 3:

where PDMS-prop-meac =

| | $R^{20}$ | $R^{21}$ | $R^{22}$ | $R^{23}$ | $R^{24}$ |
|---|---|---|---|---|---|
| 1 | $OCH_3$ | H | $CO_2CH_3$ | H | 6-PDMS(855)-prop-meac |
| 2 | $OCH_3$ | H | $CO_2CH_3$ | H | 9-PDMS(855)-prop-meac |
| 3 | $OCH_3$ | $OCH_3$ | $CO_2CH_3$ | H | 6-POMS(855)-prop-meac |
| 4 | $OCH_3$ | $OCH_3$ | $CO_2CH_3$ | H | 9-PDMS(655)-prop-meac |
| 5 | $(CH_3)_2N$ | $(CH_3)_2N$ | $CO_2CH_3$ | H | 6-PDMS(855)-prop-meac |
| 6 | $CO_2CH_3$ | $(CH_3)_2N$ | $CO_2CH_3$ | H | 9-PDMS(855)-prop-meac |
| 7 | $(CH_3)_2N$ | H | PDMS(855)-prop-meac | 9-$(CH_3)_2NH$ | H |
| 8 | $(CH_3)_2N$ | H | $CO_2CH_3$ | 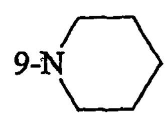 | 6-PDMS(858)-prop-meac |
| 9 | PDMS-prop-meac | H | $CO_2CH_3$ | H | H |
| 10 | $(CH_3)_2N$ | H | H | H | 6-PDMS-prop-meac |
| 11 | $(CH_3)_2N$ | H | H | H | 9-PDMS-prop-meac |
| 12 | POMS-prop-meac | H | H | H | $OCH_3$ |
| 13 | $OCH_3$ | $OCH_3$ | H | H | 6-PDMS-prop-meac |
| 14 | $OCH_3$ | $OCH_3$ | H | H | 9-PDMS-prop-meac |
| 15 | $OCH_3$ | $OCH_3$ | H | H | 6-$CH_2$-PDMS-prop-meac |
| 16 | $OCH_3$ | $OCH_3$ | H | H | 9-$CH_2$-PDMS-prop-meac |

(continued)

| | $R^{20}$ | $R^{21}$ | $R^{22}$ | $R^{23}$ | $R^{24}$ |
|---|---|---|---|---|---|
| 17 | $OCH_3$ | $OCH_3$ | H | H | 9-O(CO)CH(CH3)-pBA (4000)-S(CS)S-butyl |
| 18 | $(CH_3)_2N$ | H | H | H | 9-O(CO)CH(CH3)-pBA (4000)-S(CS)S-butyl |
| 19 | $OCH_3$ | $OCH_3$ | H | H | 9-O(CO)CH(CH3)-pBA (4000)-S(CS)S-butyl |

where PDMS-prop-meac =

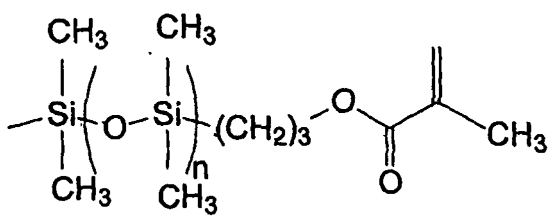

and O(CO)CH(CH3)-pBA(4000)-S(CS)S-butyl is the group. "(4000)" refers to molecular weight. It is to understood that a variety of molecular weights may be chosen.

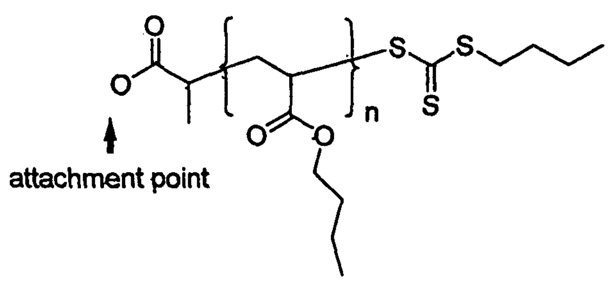

Compounds of formula XX wherein $R^{23}$ and/or $R^{24}$ comprise the oligomer group $L(R)_n$ may be prepared from a suitably substituted acetophenone, benzophenone or benzaldehyde of formula XXI(a). In this process the compound of formula XXI(a) (or a polyhydroxy compound where more than one substituent is required) is reacted with an oligomer esterified toluene sulfonate of formula XXI to provide the corresponding oligomer ether of formula XXI(b). The aromatic oligomer ether of formula XXI(b) is reacted with an ester of succinic acid such as the dialkyl succinate of formula XXI (c). A Stobbe reaction produces the condensed half ester of formula XXII which undergoes cyclo dehydration in the presence of acidic anhydride to form the naphthalene oligomer ether of formula XXIII. This compound of formula XXIII may be reacted with acid such as hydrochloride acid and an anhydrous alcohol such as methanol to form the corresponding naphthol shown in formula XXIV which is in turn coupled with the propargyl alcohol of formula XXV to form the oligomer substituted naphthopyran of the invention of formula XX(b).

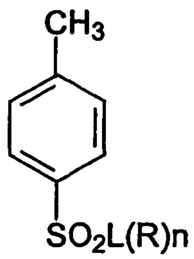

XXI

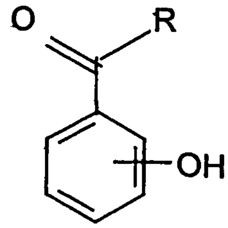

XXI(a)

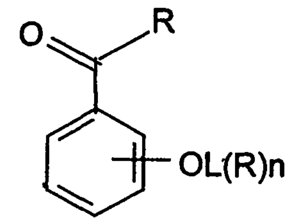

XXI(b)

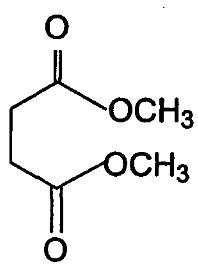

XI(c)

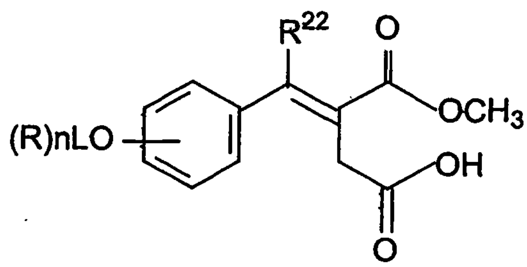

XXII

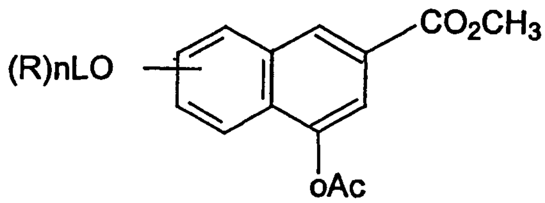

XXIII

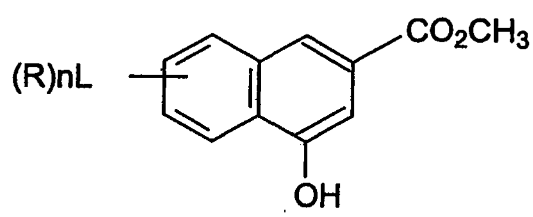

XXIV

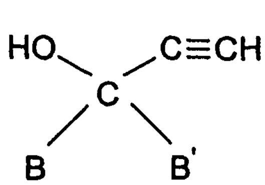

XXV

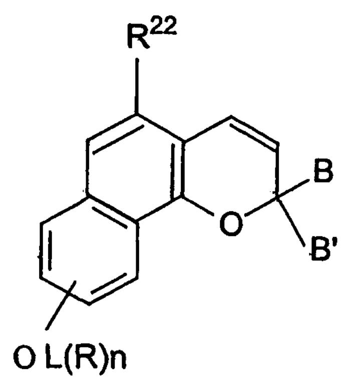

XX(b)

Alternatively, compounds of formula XX(c) in which at least one of the geminal phenyl groups is substituted by an oligomer may be prepared from the benzophenone of formula XXI(f). In this process the benzophenone substituted with the appropriate hydroxyl groups is reacted with the oligomer ester of toluene sulfonate of formula XXI(e) to form the corresponding oligomer substituted benzophenone of formula XXI(g). The corresponding propargal alcohol of formula XXV(a) is prepared from the benzophenone by reaction with sodium acetylide in a solvent such as THF. This propargal alcohol of formula XXV(a) is coupled with the appropriate substituted naphthol of formula XXIV(b) to form the oligomer substituted naphthopyrane of formula XX(c).

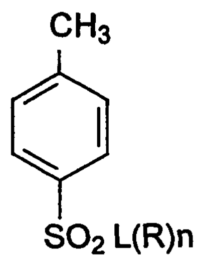

XI(e)

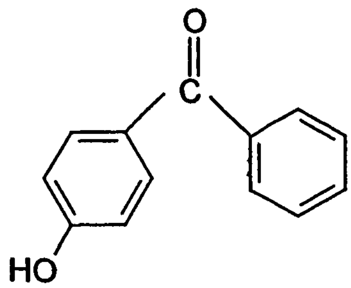

XXI(f)

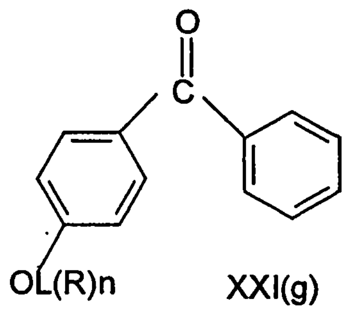

XXI(g)

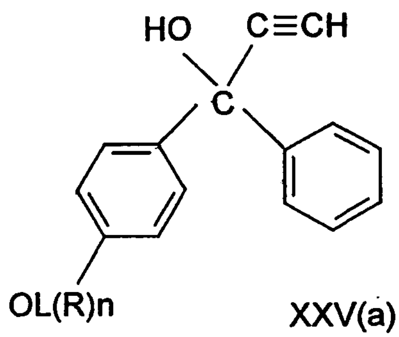

XXV(a)

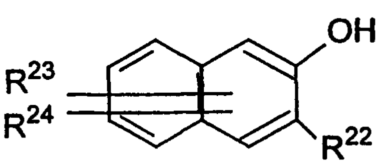

XXIV(b)

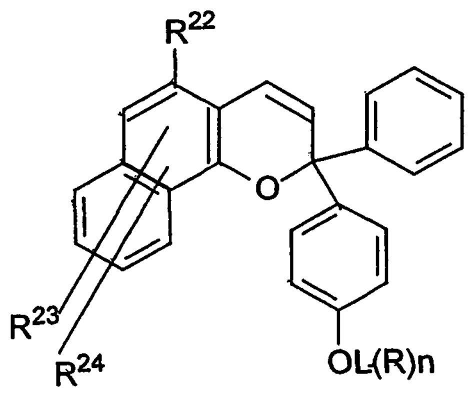

XX(c)

A further option for forming oligomer substituted pyrans of the invention of formula XX in which the oligomer is present in the 5-position of the naphthopyran may utilise the corresponding carboxylated naphthol of formula XXIII (a). In such a process the naphthol of formula XXIII(a) is reacted with an appropriate oligomer of formula XXI(d) (particularly

where linking group L comprising oxygen) to provide an oligomer ester of formula XXIV(a). The oligomer naphthol ester of formula XXIV(a) may be reacted with propargyl alcohol of formula XXV to provide the naphtholpyran of formula XX (g) in which the oligomer is present in the five position.

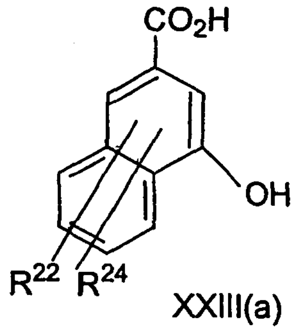

XXIII(a)

H L(R)n

XXI(d)

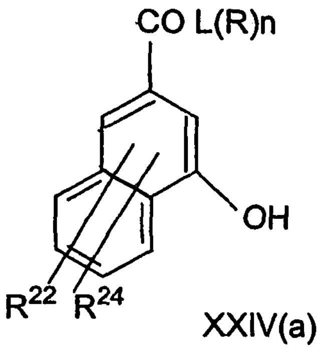

XXIV(a)

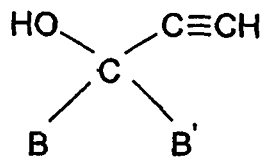

XXV

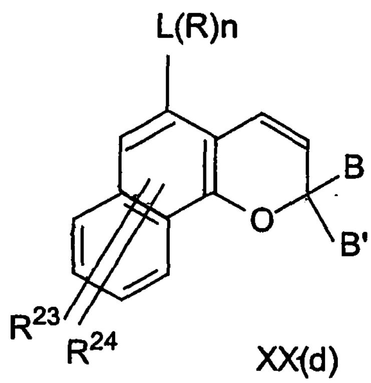

XX(d)

In a further alternative compounds of formula XX wherein $R^{22}$ comprises the oligomer $L(R)_n$ may be formed by reacting a compound of formula XX(e) with an acid chloride or anhydride substituted oligomer to provide a compound of formula XX(f):

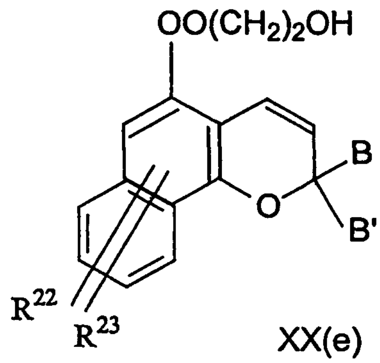

XX(e)

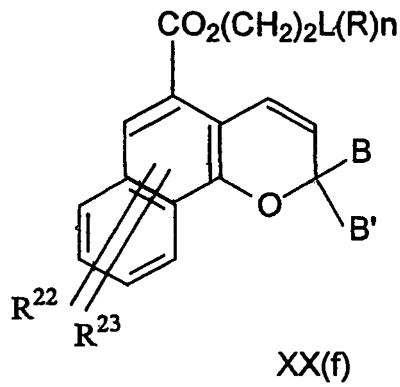

XX(f)

Examples of fulgides and fulgimides include compounds of formula XXX and more preferably XXXa:

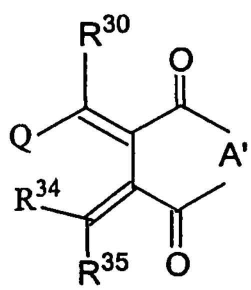

XXX

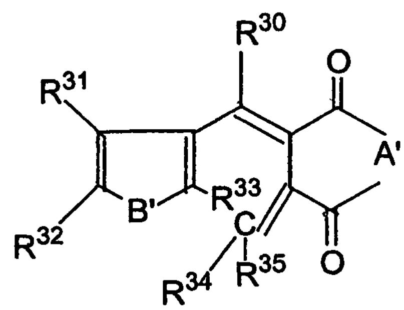

XXXa

wherein

Q is selected from the group consisting of optionally substituted aromatic, optionally substituted heteroaromatic (where said aromatic/heteroaromatic may be mono or polycyclic aromatic/heteroaromatic);

$R^{30}$, $R^{32}$ and $R^{33}$ are independently selected from the group consisting of a $C_1$ to $C_4$ alkyl, $C_1$ to $C_4$ alkoxy phenyl, phenoxy mono- and di($C_1$-$C_4$) alkyl substituted phenyl or phen($C_1$-$C_4$)alkyl and $R^{32}$ and $R^{32}$ optionally together form a fused benzene which may be further substituted;

A' is selected from the group consisting of oxygen or =N-$R^{36}$, in which $R^{36}$ is $C_1$-$C_4$ alkyl or phenyl,

B' is selected from the group consisting of oxygen or sulfur;

$R^{34}$ and $R^{35}$ independently represents a $C_1$-$C_4$ alkyl, phenyl or phen($C_1$-$C_4$) alkyl or one of $R^{34}$ and $R^{35}$ is hydrogen and the other is one of the aforementioned groups, or $R^{34}R^{35}$=represents an adamantylidine group;

and wherein at least one of $R^{30}$, $R^{31}$, $R^{32}$, $R^{35}$ and $R^{36}$ is the group $L(R)_n$.

Examples of azo dyes include compounds of formula XL

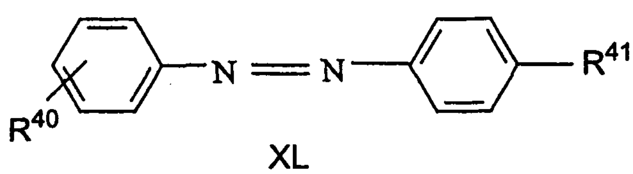

XL

wherein:

$R^{40}$ and $R^{41}$ are independently selected from the group consisting of hydrogen, $C_1$ to $C_6$ alkyl, $C_1$ to $C_6$ alkoxy, $-NR^{42}R^{43}$ wherein $R^{42}$ and $R^{43}$ are as defined for $R^{26}$ and $R^{27}$ aryl (such as phenyl) aryl substituted with one or more substituents selected from $C_1$ to $C_6$ alkyl and $C_1$ to $C_6$ alkoxy, substituted $C_1$ to $C_6$ alkyl wherein the substituent is selected from aryl and $C_1$ to $C_6$ alkoxy, substituted $C_1$ to $C_6$ alkoxy wherein the substituent is selected from $C_1$ to $C_6$ alkoxy aryl and aryloxy.

Specific examples of azo dyes include the following compounds of formula XL:

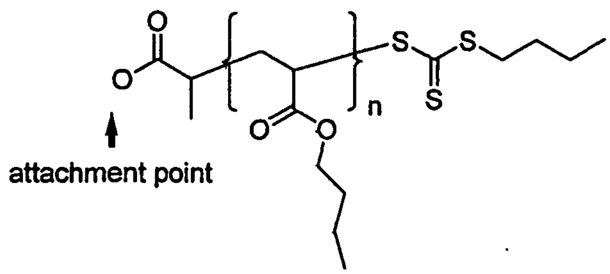


| | $R^{40}$ | $R^{41}$ |
|---|---|---|
| 1. | H | |
| 2. | $P-OCH_3$ | PDMS-prop-meac |

The photochromic moiety may also be a diarylfluorocyclopentenes of the following formula

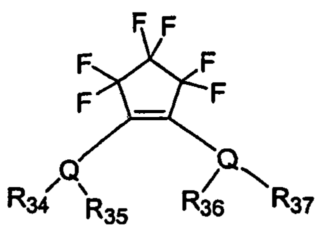

XXXV

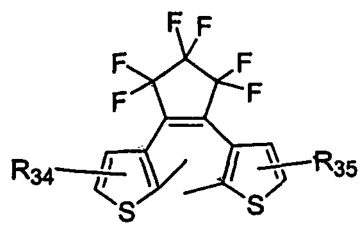

XXXVI

wherein

substituted aromatic, optionally substituted heteroaromatic (where said aromatic/heteroaromatic may be mono or polycyclic aromatic/heteroaromatic);
$R^{34}$,$R^{35}$,$R^{36}$,$R^{37}$ independently represents a $C_1$ to $C_4$ alkyl, phenyl or phen($C_1$ to $C_4$) alkyl or one of and $R^{34}$,$R^{35}$ $R^{36}$, $R^{37}$ is hydrogen and the others is one of the aforementioned groups,; and
wherein at least one of Q, $R^{34}$, $R^{35}$, $R^{36}$ and $R^{37}$ comprises the group $L(R)_n$.

The reactive oligomer which characterises the photochromic compound of the invention may be prepared and attached by reaction at a suitable functional group of a photochromic moiety or precursor thereof.

For example the commercially available unsaturated polyethyleneoxy oligomers of formula LI may be used to prepare adducts with photochromics by reaction with succinic anhydride in the presence of an amine such as triethylamine to provide the unsaturated acid of formula LII (where Z is -OH).

The acid of formula LII (where Z is OH) may be coupled with a nuclophilic substituted photochromic moiety of formula LIII where X is oxygen, sulphur, NH or $NR^1$ (where $R^1$ is alkyl) by converting the acid to an intermediate compound of formula LII where Z is a leaving group such as an anhydride, acid chloride or more preferably an intermediate formed in the presence of a coupling agent such as dicyclohexylcarbodimide (DCC) to provide the unsaturated oligomer adduct of formula (LVI).

Another approach is to react an acid substituted photochromic such as the compound of formula LIV with an unsaturated polyethyleneoxy oligomer of formula LV (wherein Z is OH) in the presence of a coupling agent or via an

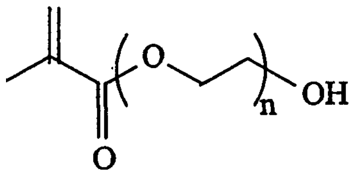

LI

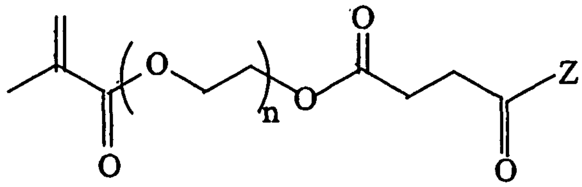

LII

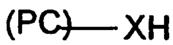

LIII

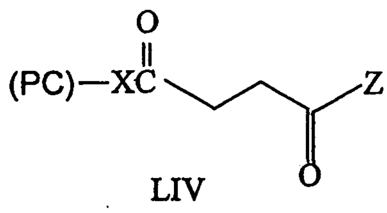

LIV

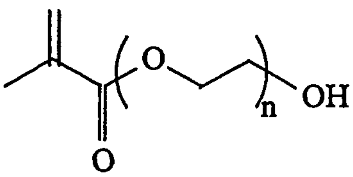

LV

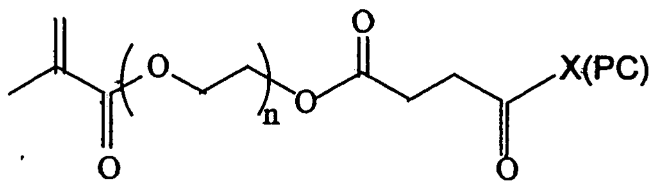

LVI

intermediate of formula LV where Z is a leaving group.

Photochromic compounds of the invention comprising a dialkyl siloxane oligomer may be prepared by anionic polymerization of the appropriate halo-substituted photochoromic moiety.

For example a halogenated photochromic may be functionalised with a dialkyl siloxane as follows:

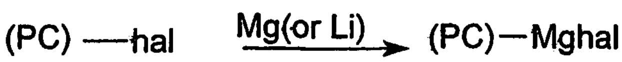


where hal is halogen particularly Cl or Br

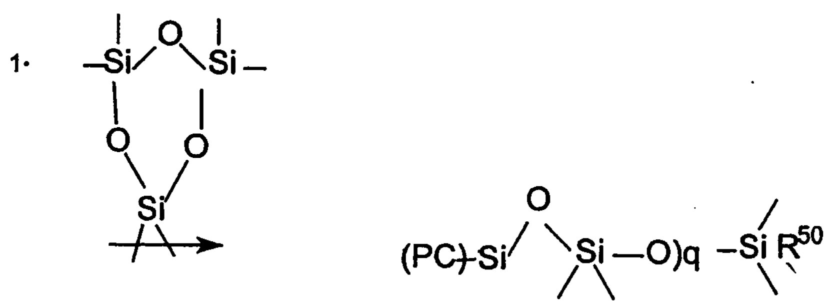

2. 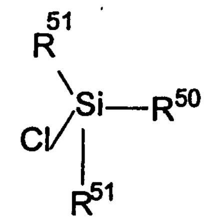

wherein $R^{50}$ may be

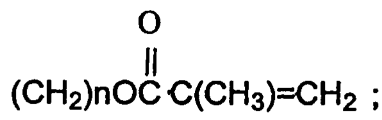

and

$R^{51}$ may be lower alkyl such as methyl.

Anionic polymerization of cyclic dimethylsiloxane is a method of making end functional polymdimethyl siloxane polymers. The method is described and illustrated by Giles, Hay, Howdle and Winder in Polymer, 2000, 42, 6715-6721. An anionic initiator such as butyl lithium is reacted with hexamethylcyclotrisiloxane (known as $D_3$) to give a living polymer with is subsequently end capped by a suitable molecule. A silyl chloride is an example of an end-capping reagent. Thus, controlled end functionality can be obtained. The following is an example of methacrylate end functional PDMS from Giles et al.

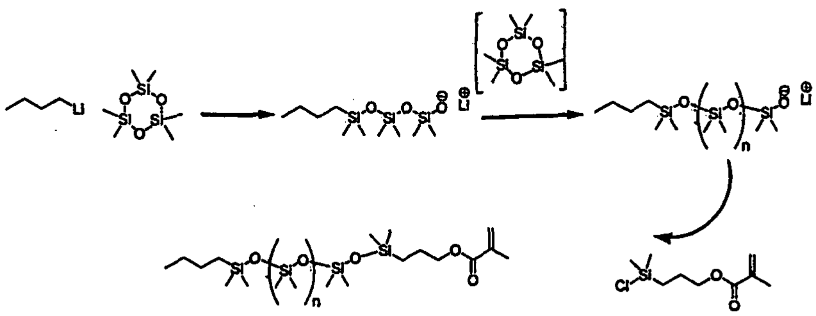

This methodology may be applied for the synthesis of photochromic dye- PDMs conjugates with end functionality.

Firstly, a functional PDMS may be synthesised and then attached to the photochromic dye using standard organic chemical means. For example a protected bromo alcohol is converted to an anion (such as an alkyl lithium or grignard reagent) and is used to initiate D3 polymerization. There are many such protecting groups available known to those skilled in the art with "Protective Groups in Organic Synthesis" by T.W. Greene and P.G. M. Wuts (John Wiley and Sons) one standard reference text. The protecting groups should obviously be stable to the conditions of the anionic polymerization. The living end of the polymer is then end-capped with a end-capping agent (such as the 3-(methylacryloxy) propyldimethylchlorosilane). The protecting groups are removed to give a hydroxy group that then allows coupling to a photochromic via conventional means.

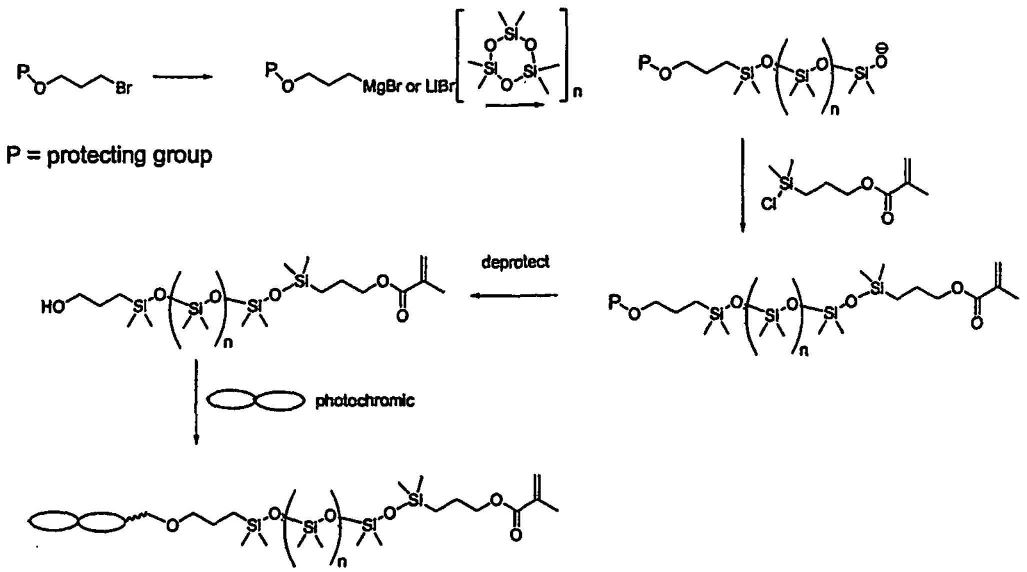


To those skilled in the art it is clear that a variety of protected end groups and end-capping agents could be used to provide a many variations of reactive functionality and coupling to the photochromic dye.

Secondly, the oligomer may be grown directly from the photochromic dye by generating a suitable initiating moiety. The growing polymer chain is then endcapped in the standard way. An example of this method is shown below.

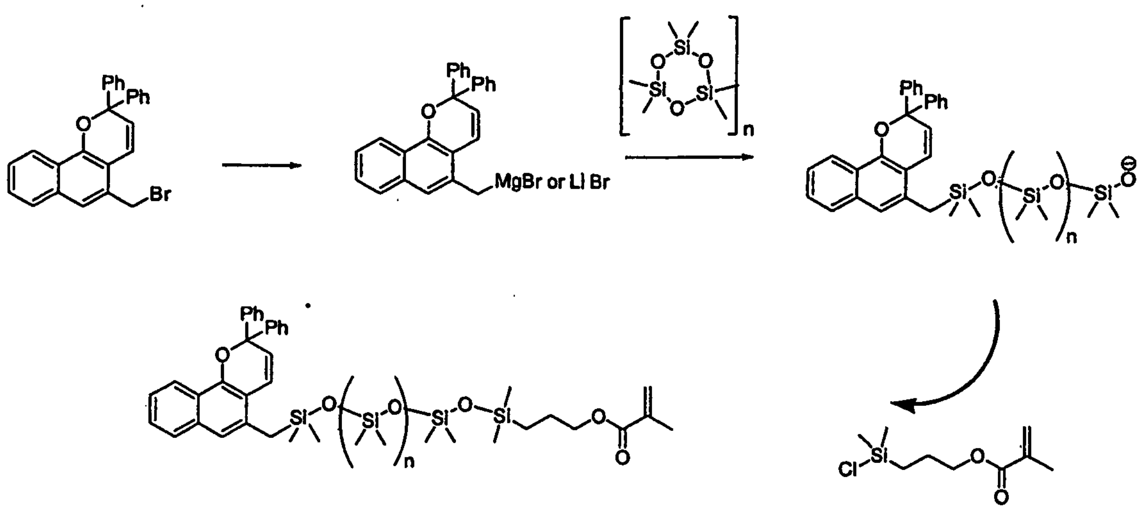

An alternative method for oligomer growth on a photochromic moiety is the ATRP and RAFT method or other living polymer growth methods.

It important to note that the photochromic polymer conjugate can be prepared by at least two ways using living radical polymerization. Firstly they can be grown directly from a photochromic dye that possesses a living radical polymerization control function such as a RAFt ot ATRP active group. Secondly the oligomer/polymer may be separated synthesised and then attached to the dye.

Living Radical Polymerization methods have found great utility in controlling molecular weight and dispersity of polymers. However they also allow end functionality to be created on the polymer. This is true of both ATRP (Atom Transfer Radical Polymerization) and RAFT (Reversible Addition Fragmentation chain Transfer). This end functionality may directly allow bonding to a host matrix, or be further modified to allow bonding to a host matrix.

For example ATRP will generate alkyl halide at a chain end. This is susceptible to nucleophilic attack to allow

bonding to host either directly or be modified to bond to a host.

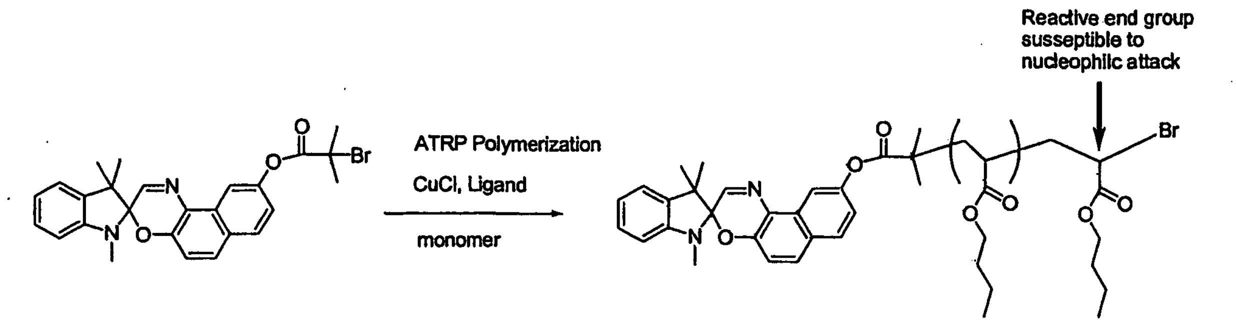


RAFT chemistry also provides a variety of routes to end-functionalization. The functionalization may arise from the initiating radical of the RAFT group (the "R" group), from the control group (the "Z" group) or from RAFT group (the thiocarbonyl portion) itself.

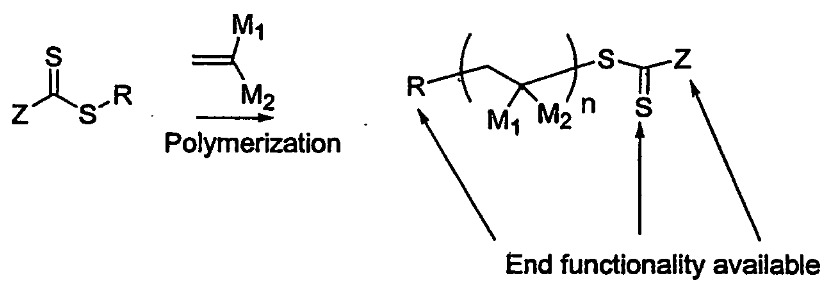


If the R group contains a photochromic moiety , then the RAFT group at the other end of the polymer/oligomer provides rich chemistry to allow bonding into a matrix.

1. It can react with radicals to incorporate itself in to host matrix formed by radical polymerization.

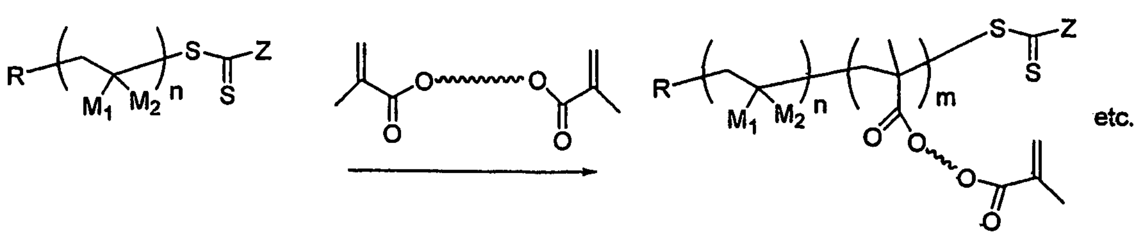


A more detailed description follows. Photochromic oligomers terminated by a RAFT group are readily incorporated into the matrix of a polymerizing monomer formulation. This is achieved by the RAFT group undergoing its known mechanism of addition fragmentation chain transfer. The resulting structure can be thought of as a block co-polymer such that the first block is the oligomer and the second block is the crosslinked network of the bulk matrix. R is a photochromic compound. The method is obviously applies to compounds with multiple RAFT terminated oligomer/ polymers.

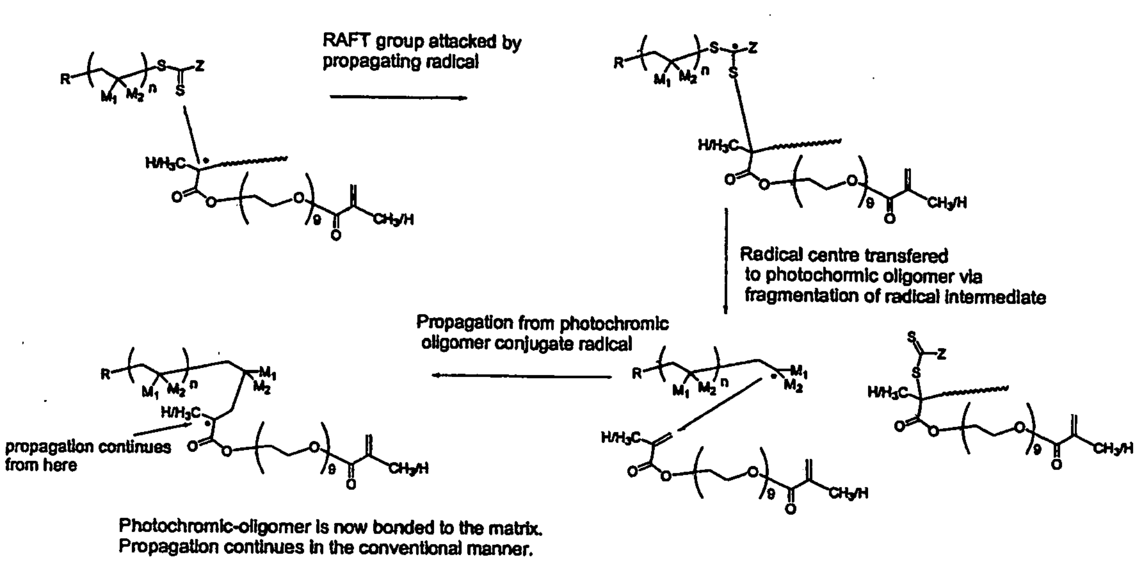


2. The RAFT groups may be hydrolysed to give a thiol. This may undergo radical reaction as a chain transfer agent, thiolene reactant or react with isocyanates, acid chlorides etc. Reaction with methacryolchoride would provide a polmyerizable group at the end of the oligomer/polymer. In particular reaction with a molecule like dihydroxybenzoyl chloride will give a diol that allows the conjugate to participate as a monomer in polyesterification, polyurethane synthesis etc.

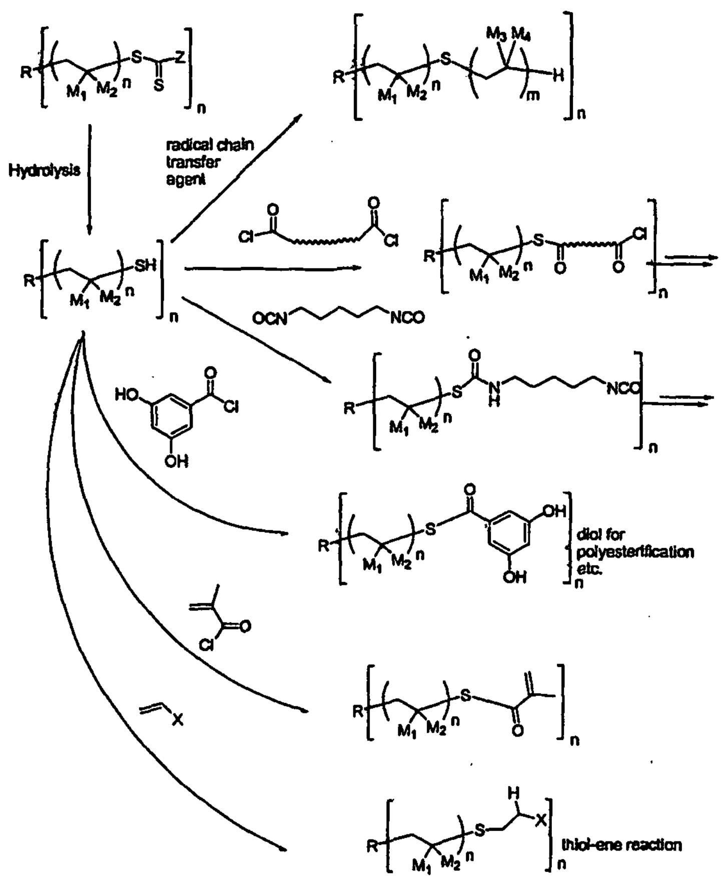


3. The RAFT groups can be removed by reaction with functionalised azo initiators as described by Perrier et al (Macromolecules 2005, 38, 2033-2036). This allows further functionalization of the oligomer to allow it to react with

other functional groups in conventional or radical reactions. This is illustrated below with R being a photochromic dye.

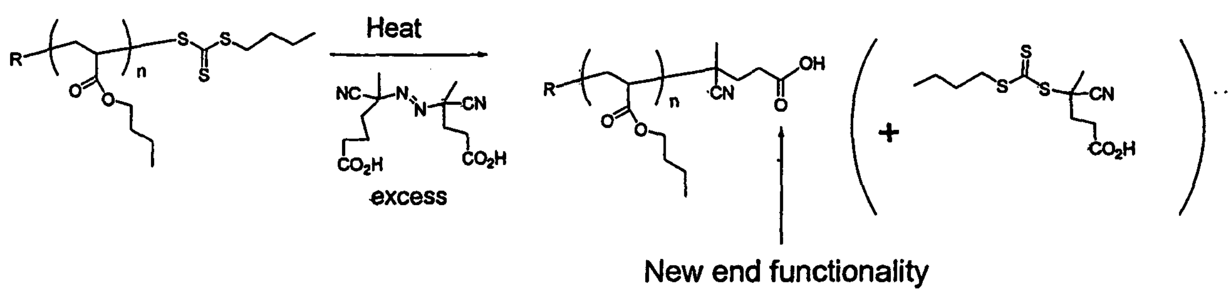


The RAFT and ATRP group allow a block of functionalised monomer to be added at the end of the photochromic-oligomer conjugate. Non-limiting examples would be addition of hydroxyethyl acrylate or glycidyl methacrylate to give multiple hydroxy or epoxy groups for subsequent reaction in polyester/urethane or expoxy resin formulations. Such reactive monomer may even be incorporated into the polymer in a copolymerization.

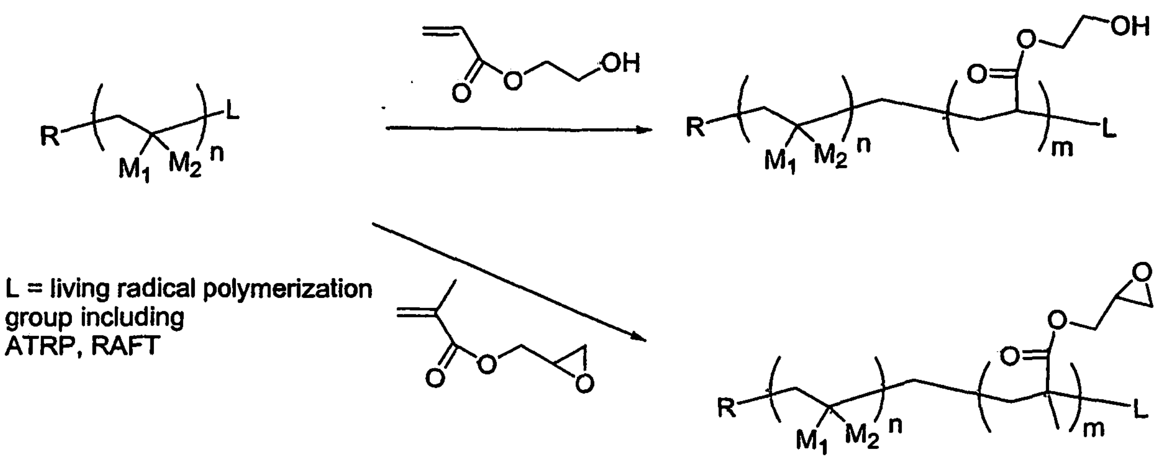


The photochromic compounds of the invention (which comprise an oligomer having a reactive functional group) tend to be non-crystalline solids or oils. This makes them more soluble in monomers and polymer matrices. It also means they are less likely to crystallise in the matrix, thus this may allow higher loading of dyes and may also prevent the crystallisation that may occur with conventional photochromic dyes.

The compounds of the invention have their own built-in nanoenvironment because the dye can never be separated from a favourable oligomer.

The compounds of the invention may be used in mixtures with conventional photochromics.

The use of compounds of the invention allows the fade speed of the photochromic to be changed without changing its colour. Thus it allows the tuning of fade speed for different coloured dyes. This is important to get a consistent colour when fading occurs. Thus, if a blue dye of a particular speed is needed, modification can be made to include an oligomer of an appropriate length in accordance with the invention.

The dye monomers may be incorporated into the polymer matrix under a range of curing conditions which will be readily appreciated by those skilled in the art having regard to the compositions disclosed above. Typical curing conditions may involve the use of suitable catalysts and or sensitisers. Examples of curing conditions include thermal curing and photopolymerisation. Monomer compositions of the present invention may be applied to a substrate to be rendered photochromic by coating (and subsequent curing) or the compositions may be shaped, for example by casting before thermal or radiation curing. Solvents or carriers may be used to facilitate application of the monomer composition as a coating. Typically the VOC (volatile organic solvent component) will comprise from 0 to 50% by weight of the composition.

The polymerisable composition according to the present invention may include a polymerisation curing agent.

The polymerisation curing agent may be selected from one or more of a UV curable (photo) initiator, radical

heat cationic or radical initiator. UV photoinitation and thermal initiation are preferred. The compositions may be cured by a combination of UV radiation and heat.

The amount of curing agent may vary with the monomers selected. It has been possible to operate with a relatively low level of curing agent of between approximately 0.05 and 4%, preferably 0.05% to 3.0% by weight.

Suitable curing agents may be selected from the group consisting of azodiisobutyronitrile, AIBN (azo radical heat initiator), 2,2'-azobis(N,N'-dimethyleneisobutyramidine)dihydrochloride, 2,2'-azobis(2-amidinopropane)-dihydrochloride, 2,2'-azobis(N,N'-dimethyleneisobutyramidine), 4,4'-azobis(4-cyanopentanoic acid), 2,2'-azobis{2-methyl-N-[1,1-bis(hydroxymethyl)-2-hydroxyethyl]propionamide}, 2,2'-azobis{2-methyl-N-[1,1-bis(hydroxymethyl)-ethyl]propionamide}, 2,2'-azobis[2-methyl-N-(2-hydroxyethyl)propionamide], 2,2'-azobis(isobutyramide)dihydrate, 2,2'-azobis(4-methoxy-2,4-dimethylvaleronitrile), 2,2'-azobis(2,4-dimethylvaleronitrile), 2,2'-azobisisobutyronitrile, dimethyl 2,2'-azobis-isobutyrate,2,2'-azobis(2-methylbutyronitrile),1,1'-azobis(1-cyclohexanecarbonitrile),2-(carbamoylazo)-isobutyronitrile, 2,2'-azobis(2,4,4-trimethylpentane), 2-phenylazo-2,4-dimethyl-4-methoxyvaleronitrile, 2,2'-azobis(2-methylpropane), Trigonox TX-29 (dialkyl peroxide radical heat initiator), 1,1-di-(-butyl peroxy-3,3,5-trimethyl cyclohexane), TBPEH (alkyl perester radical heat initiator), t-butyl per-2-ethylhexanoate (diacyl peroxide radical heat initiator), benzoyl peroxide, (peroxy dicarbonate radical heat initiator), ethyl hexyl percarbonate (ketone peroxide radical heat initiator), methyl ethyl ketone peroxide, "Cyracure UV1-6974" (cationic photoinitiator), triaryl sulfonium hexafluoroantimonate, Lucirin TPO (radical photoinitiator), 2,4,6-trimethylbenzoyidiphenylphosphine oxide, Irgacure 819, bis(2,4,6-trimethylbenzoyl)-phenyl-phosphine oxide, 1-bis(2,6-dimethoxybenzoyl)-2,4,4-trimethylpentyl phosphineoxide, Vicure 55 (radical photoinitiator), methyl phenylglycoxylate, bis(t-butylperoxide)-diisopropylbenzene, t-butyl perbenzoate, t-butyl peroxy neodecanoate, Amicure DBU, Amicure BDMA, DABCO, polycat SA-1, polycat SA-102, polycat SA-610/50, aluminium acetyl acetonate, dibutyltin dilaurate, dibutyltin oxide, Darocur 1173, Irgacure 184, Irgacure 500, Irgacure 1800 and Irgacure 1850.

The initiator may be a single component or combination of initiator components.

Other additives may be present which are conventionally used in coating compositions such as inhibitors, surfactants, UV absorbers, stabilisers and materials capable of modifying refractive index. Such additives may be selected from the group consisting of levelling agents including 3M FC 430 and 3M FC 431.

Examples of surfactants include, fluorinated surfactants or polydimethyl siloxane surfactants such as FC430, FC431 made by 3M, BYK300, BYK371 made by Mallinckrodt, SF-1066, SF-1141 and SF-1188 made by General Electric Company, L-540, L-538 sold by Union Carbide and DC-190 sold by Dow Corning.

Examples of UV absorbers include Ciba Tinuvin P-2(2'-hydroxy-5'methyl phenyl)benzotriazole, Cyanamid Cyasorb UV 531-2-hydroxy-4-n-octoxybenzophenone, Cyanamid Cyasorb UV5411-2(2-hydroxy-5-t-octylphenyl)-benzotriazole, Cyanamid UV 2098-2 hydroxy-4-(2-acryloyloxyethoxy)benzophenone, National Starch and Chemicals Permasorb MA-2 hydroxy-4-(2 hydroxy-3-methacryloxy)propoxy benzophenone, Cyanamid UV24-2,2'-dihydroxy-4-methoxybenzophenone, BASF UVINUL 400-2,4 dihydroxy-benzophenone, BASF UVINUL D-49-2,2'-dihydroxy-4,4' dimethoxybenzophenone, BASF UVINUL D-50-2,2', 4,4' tetrahydroxy benzophenone, BASF UVINUL D-35-ethyl-2-cyano-3,3-diphenyl acrylate, BASF UVINUL N-539-2-ethylhexyl-2-cyano-3,3-diphenyl acrylate, Ciba Geigy Tinuvin 213;

Examples of stabilisers include hydroquinone, coating Solution Stabilizers, nitroso compounds such as Q1301 and Q1300 from Wako Hindered Amine Light Stabilisers (HALS), Including, Ciba Tinuvin765/292bis(1,2,2,6,6)pentamethyl-4-piperidyl)sebacate, Ciba Tinuvin 770-bis(2,2,6,6-tetramethyl-4-piperidinyl)- sebacat.

Examples of antioxidants include Ciba Irganox 245-triethylene glycol=bis-3-(3-tertbutyl-4-hydroxy-5-methyl phenyl)propionate, Irganox 1010-2,2-bis[[3-[3,4-bis(1,1-dimethylethyl)-4-hydroxyphenyl[-1-oxopropoxy] methyl]-1,3-propanediyl 3,5-bis(1,1-dimethyl ethyl)-4-hydroxy benzene propanoate, Irganox 1076-octadecyl 3-(3',5'-di-tert-butyl(-4'-hydroxyphenyl)propionate, hydroquinone, BHT, TBC, MEHQ (4-methoxyphenone), 2-ethoxy-5-(propenyl)phenol, Isoeugenol, 2-allyl phenol, butylated hydroxyanisole;

Examples of anticolouring agents include 10 dihydro-9-oxa-10-phosphaphenanthrene-1-oxide;

Examples of cure modifiers include dodecyl mercaptan, butyl mercaptan, thiophenol;

Examples of nitroso compounds include Q1301 from Wako Nofmer from Nippon Oils and Fats.

Other additives can be present such as viscosity modifiers, and include monomers such as methacrylic acid, vinyl silanes, and other functional monomers. Other monomeric additives may be included to improve processing and/or material properties, these include:

methacrylic acid, maleic anhydride, acrylic acid dye-enhancing, pH-adjusting monomers like Alcolac SIPOMER 2MIM a charge-reducing cationic monomer to render the material more antistatic, example Sipomer Q5-80 or Q9-75.

The composition according to the present invention may be utilised in the preparation of a coated optical article or may be used in casting optical articles.

In a preferred aspect the cured composition exhibits improved scratch resistance when compared with corresponding photochromic articles of comparable fade speed.

The composition of an optical coating may be tailored so that its refractive index substantially matches that of the optical article. The coating may have a thickness in the range of approximately 0.1 to 100 micron (μm).

When the primer coating includes a dye component the primer coating is applied to at least the front (convex) surface of the optical article.

Alternatively, when the primer coating functions to provide improved impact resistance to the optical article, the primer coating preferably has a thickness of approximately 0.7 to 5 micron.

The optical article may be a camera lens, optical lens element, video disc or the like. An optical lens element is preferred.

By the term "optical lens element" we mean all forms of individual refractive optical bodies employed in the ophthalmic arts, including, but not limited to, lenses, lens wafers and semi-finished lens blanks requiring further finishing to a particular patient's prescription. Also included are formers used in the manufacture of progressive glass lenses and moulds for the casting of progressive lenses in polymeric material.

Where the optical article is an optical lens, the optical lenses may be formed from a variety of different lens materials, and particularly from a number of different polymeric plastic resins. Medium to high index lens materials, e.g. those based on acrylic or allylic versions of bisphenols or allyl phthalates and the like are particularly preferred. Other examples of lens materials that may be suitable for use with the invention include other acrylics, other allylics, styrenics, polycarbonates, vinylics, polyesters and the like. The lens material "Spectralite" or like mid to high index lens materials are particularly preferred. A "Finalite"-type material of may also be used.("Spectralite" and "Finalite are trade marks of Sola International Holdings).

The utilisation of a coating with a Spectralite-type optical lens is particularly advantageous in improving the impact resistance of the lens. This is particularly so where an anti-reflective (AR) coating is also included. Such AR coatings may otherwise cause a plastic optical lens to exhibit increased brittleness, for example when heat is applied.

A common ophthalmic lens material is diethylene glycol bis (allyl carbonate). One such material is CR39 (PPG Industries).

The optical article may be formed from cross-linkable polymeric casting compositions, for example as described in the Applicants U.S. Pat. No. 4,912,155, U.S. Patent Application Serial. No. 07/781,392, Australian Patent Applications 50581/93 and 50582/93, and European Patent Specification 453159A2, the entire disclosures of which are incorporated herein by reference.

For example, in Australian Patent Application 81216/87, the entire disclosure of which is incorporated herein by reference, the Applicant describes a cross-linkable casting composition including at least polyoxyalkylene glycol diacrylate or dimethacrylate and at least one poly functional unsaturated across-linking agent.

Further, in Australian Patent Application 75160/91, the entire disclosure of which is incorporated herein by reference, the Applicants describe a polyoxyalkylene glycol diacrylate or dimethacrylate; a monomer including a recurring unit derived from at least one radical-polymerisable bisphenol monomer capable of forming a homopolymer having a high refractive index of more than 1.55; and a urethane monomer having 2 to 6 terminal groups selected from a group comprising acrylic and methacrylic groups.

The monomeric dye compounds may be incorporated in the polymer matrix in the process of the present invention by being mixed with a polymerizable monomeric composition that upon curing produces a solid polymeric composition of Tg typically above 30˚C preferably at least 50˚C, still more preferably at least 70˚C and most preferably at least 80˚C. The polymerizable composition can be cast as a film, sheet or lens, or injection molded or otherwise formed into a sheet or lens. Preferably the article will be optically transparent;

(a) The polymerizable composition may also be applied to the surface of a material by any convenient manner, such as spraying, brushing, spin-coating or dip-coating from a solution or dispersion of the photochromic material in the presence of a polymeric binder. For example the polymerizable composition (which may be) partly cured) can be dissolved or dispersed in a solvent which can be applied to the surface of a substrate in the form of a permanent adherent film or coating by any suitable technique such as spraying, brushing, spin-coating or dip-coating;

(b) The polymerizable composition can be cast or coated onto a substrate by the above mentioned methods and placed within a host material as a discrete layer intermediate to adjacent layers of a host material(s);

(c) The photochromic monomer of the invention may be incorporated into a dye monomeric composition by ball milling with a carrier to disperse it in a reactive binder matrix. Such a composition may be used as an ink in ink jet printing and suitable (PC) moieties may be chosen to allow security markings on documents to be visible in exposure to UV light used in photocopy;

(d) The dye monomer may be compounded with suitable resins and the resin polymerized with the dye monomer before, during or after being injection moulded to shape it to form a film, for example by blow moulding or to form more complex shaped extruded and/or blown structures.

The present invention is more particularly described in the following examples which are intended as illustrative

only since numerous modifications and variations therein will be apparent to those skilled in the art.

Examples of host matrix into which the dye monomer may be incorporated include homopolymers and copolymers of polyol(allyl carbonate) monomers, homopopolymers and copolymers of polyfunctional acrylate monomers, polyacrylates, poly(alkylacrylates) such as poly(methylmethacrylate), cellulose acetate, cellulose triacetate, cellulose acetate propionate, cellulose acetate butyrate, poly(vinyl acetate), poly(vinylalcohol), poly(vinylchloride), poly(vinlylidene chloride), polyurethanes, polycarbonates, poly(ethylene-terephthalate), polystyrene, copoly(styrene-methylmethacrylate), copoly(styrene-acrylateonitrile), poly(vinylbutyral), and homopolymers and copolymers of diacylidene pentaerythritol, particularly copolymers with polyol(allylcarbonate) monomers, eg diethylene glycol bis(allyl carbonate), and acrylate monomers. Transparent copolymers and blends of the transparent polymers are also suitable as host materials.

The resulting matrix material may be an optically clear polymerized organic material prepared from a polycarbonate resin, such as the carbonate-linked resin derived from bisphenol A and phosgene which is sold under the trademark LEXAN; a poly(methylmethacrylate), such as the material sold under the trademark PLEXIGLAS; polymerizates of a polyol(allyl carbonate), especially diethylene glycol bis(allyl carbonate), which is sold under the trademark CR-39, and its copolymers such as copolymers with vinyl acetate, eg copolymers of from about 80 - 90 percent diethylene glycol bis(allyl carbonate) and 10 - 20 percent vinyl acetate, particularly 80-85 percent of the bis(allyl carbonate) and 15-20 percent vinyl acetate, cellulose acetate, cellulose propionate, cellulose butyrate, polystyrene and copolymers of styrene with methyl methacrylate, vinyl acetate and acrylonitrile, and cellulose acetate butyrate.

Polyol (allyl carbonate) monomers which can be polymerised to form a transparent host material are the allyl carbonates of linear or branched aliphatic glycol bis(allyl carbonate) compounds, or alkylidene bisphenol bis(allyl carbonate) compounds. These monomers can be described as unsaturated polycarbonates of polyols, eg glycols. The monomers can be prepared by procedures well known in the art, eg, US Pat. Nos. 2,370,567 and 2,403,113. The polyol (allyl carbonate) monomers can be represented by the graphic formula:

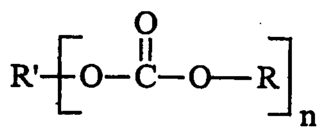

wherein R is the radical derived from an unsaturated alcohol and is commonly an allyl or substituted allyl group, R' is the radical derived from the polyol, and n is a whole number from 2-5, preferably 2. The allyl group (R) can be substituted at the 2 position with a halogen, most notably chlorine or bromine, or an alkyl group containing from 1 to 4 carbon atoms, generally a methyl or ethyl group. The R group can be represented by the graphic formula:

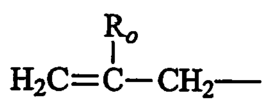

wherein $R_0$ is hydrogen, halogen, or a $C_1$-$C_4$ alkyl group. Specific examples of R include the groups: allyl 2-chloroalyl, 2-bromoalyl, 2-fluoroalyl, 2-methylalyl, 2-ethylalyl, 2-isopropylalyl, 2-n-propylalyl, and 2-n-butylalyl. Most commonly R is the alyl group:

$H_2C$=CH-$CH_2$-

R' is the polyvalent radical derived from the polyol, which can be an aliphatic or aromatic polyol that contains 2, 3, 4 or 5 hydroxy groups. Typically, the polyol contains 2 hydroxy groups, ie a glycol or bispenol. The aliphatic polyol can be linear or branched and contain from 2 to 10 carbon atoms. Commonly, the aliphatic polyol is an alkylene glycol having from 2 to 4 carbon atoms or a poly($C_2$-$C_4$) alkylene glycol, ie ethylene glycol, propylene glycol, trimethylene glycol, tetramethylene glycol, or diethylene glycol, triethylene glycol etc.

In a further embodiment, the invention provides a photochromic article comprising a polymeric organic host material selected from the group consisting of poly(methyl methacrylate), poly(ethylene glycol bismethacrylate), poly (ethoxylated bisphenol A dimethacrylate) thermoplastic polycarbonate, poly(vinyl acetate), polyvinylbutyral, polyurethane, and polymers of members of the group consisting of diethylene glyco bi(allylcarbonate) monomers, diethylene glycol dimethacrylate monomers, ethoxylated phenol bismethylacrylate monomers, diisopropenyl benzene monomers and ethoxylated trimethylol propane triacrylate monomers, and a photochromic moiety covalently tethered to the matrix via an oligomer of the type herein before described.

The polymeric matrix material is selected from the group consisting of polyacrylates, polymethacryltes, poly

($C_1$-$C_{12}$) alkyl methacrylates, polyoxy(alkylene mathacrylates), poly(alkoxylates phenol methacrylates), cellulose acetates, cellulose triacetate, cellulose acetate propionate, cellulose acetate butyrate, poly(vinyl acetate), poly(vinyl alcohol), poly(vinyl chloride) poly(vinylidene chloride), thermoplastic polycarbonates, polyesters, polyurethanes, polythiourethanes, poly(ethylene terephthalate), polystyrene, poly(alpha methylstyrene), copoly(styrene-methylmethacrylate), copoly(styreneacrylonitrile), polyvinylbutyral and polymers of members of the group consisting of polyol(allyl carbonate) monomers, polyfunctional acrylate monomers, polyfunctional methylacrylate monomers, diethylene glycol dimethacrylate monomers, diisopropenyl benzene monomers, alkoxylateed polyhydric alcohol monomers and diallylidene pentaerythritol monomers.

The polymerizable composition of the invention may be in the form of a coating or adhesive and may comprise a binder resin and crosslinker. Binders are primarily responsible for the quality of a paint or laquer coating.Examples of binders include alkyds, polyesters, amino resins such as melamine formaldehyde, acrylics, epoxies and urethanes. The binder may be thermoplastic or thermosetting in character and max be of molecular weight from 500 to several million. Coating comprising the polymerizable composition of the invention may include a solvent to adjust the viscosity. The viscosity may for example be in the range of from 0.5 to 10Ps. Pigments and fillers may be used to conferopacity or colour. A coating composition based on the composition of the invention may utilise a range of crosslinking systems such as polyisocyanates for cross linking active hydrogen funstional groups such as hydroxy and amine; epoxy/acid; epoxy amine and carbamate melamine. The coating composition may be in two pack form, for example one pack comprising the cross linking agent and another pack comprising a binder, a dye monomer as hereinbefore described and optionally further components such as solvents,pigments,fillers and formulation aids.

The terminal reactive group of the polymerizable composition and the binder component may both comprise groups such as hydroxy, amine, alkylamine, chlorosilane, alkoxy silane epoxy unsaturated, isocyanato and carboxyl for reacting with a monomer component on curing.

In this embodiment one pack comprises the binder component and the other the cross-linker. Typically the binder component will comprise 50 to 90% by weight of the coating composition (more preferably 65 to 90%) and the crosslinker components will comprise from 10 to 50% by weight of the coating composition.

Preferred hydroxyl moieties in the binder component are derived from hydroxy monomers, such as hydroxy alkyl acrylates and (meth)acrylates wherein the alkyl group has the range of 1 to 4 carbon atoms in the alkyl group. Exemplars include hydroxy ethyl (meth)acrylate, hydroxy propyl (meth)acrylate, hydroxy butyl (meth)acrylate or a combination thereof.

The monomer mixture which may be used in preparation of an acrylic binder preferably includes one or more monomers selected from alkyl acrylates and corresponding (meth)acrylates having 1-18 carbon atoms in the alkyl group, such as methyl (meth)acrylate, ethyl (meth)acrylate, propyl (meth)acrylate, isopropyl (meth)acrylate, butyl (meth)acrylate, pentyl (meth)acrylate, hexyl (meth)acrylate, 2-ethyl hexyl (meth)acrylate, nonyl (meth)acrylate, lauryl (meth)acrylate, stearyl (meth)acrylate; cycloaliphatic (meth) acrylates, such as trimethylcyclohexyl (meth)acrylate, and isobutylcyclohexyl (meth)acrylate; aryl (meth)acrylates, such as benzyl (meth)acrylate; isobomyl (meth)acrylate; cyclohexyl (meth) acrylate; glycidyl (meth)acrylate; ethyl hexyl (meth) acrylate, benzyl (meth)acrylate or a combination thereof. Methacrylates of methyl, butyl, n-butyl, and isobomyl are preferred. Other monomers such as styrene, alkyl styrene, vinyl toluene and acrylonitrile may be used in addition.

Amine moieties where directed may be provided by alkyl amino alkyl (meth)acrylates such as tert-butylaminoethyl methacrylate.

The crosslinking component of the coating composition of the present invention preferably includes one or more crosslinking agents having at least two isocyanate groups, such as a polyisocyanate crosslinking agent. Any of the conventional aromatic, aliphatic, cycloaliphatic, isocyanates, trifunctional isocyanates and isocyanate functional adducts of a polyol and a diisocyanate can be used. Typically useful diisocyanates are 1,6-hexamethylene diisocyanate, isophorone diisocyanate, 4,4'-biphenylene diisocyanate, toluene diisocyanate, bis cyclohexyl diisocyanate, tetramethylene xylene diisocyanate, ethyl ethylene diisocyanate, 2,3-dimethyl ethylene diisocyanate, 1-methyltrimethylene diisocyanate, 1,3-cyclopentylene diisocyanate, 1,4-cyclohexylene diisocyanate, 1,3-phenylene diisocyanate, 1,5-naphthalene diisocyanate, bis(4-isocyanatocyclohexyl)-methane and 4,4-diisocyanatodiphenyl ether. Prepolymerised forms of these isocyanates are also commonly used to reduce potential exposure hazard of volatile form.

The photochromic article may comprise a polymeric organic material which is a homopolymer or copolymer of monomer(s) selected from the group consisting of acrylates, methacrylates, methyl mathacrylate, ethylene glycol bis methacrylate, ethoxylated bisphenol A dimethacrylate, vinyl acetate, vinylbutyral, urethane, thiourethane, diethylene glycol bis(allyl carbonate), diethylene glycol dimethacrylate, diisopropenyl benzene, and ethoxylated trimethyl propane triacrylates.

The photochromic composition of the invention may contain the photochromic compound in a wide range of concentrations depending on the type of photochromic moiety and its intended application. For example in the case of inks in which high colour intensity is required a relatively high concentration of up to 30 wt% photochromic may be required. On the other hand it may be desirable in some cases such as optical articles to use photochromics in very low

concentrations to provide a relatively slight change in optical transparency on irradiation. For example as low as 0.01 mg/g of matrix may be used. Generally the photochromic resin will be present in an amount of from 0.01 mg/g of matrix up to 30 wt% of host matrix. More preferably the photochromic compound will be present in an amount of from 0.01 mg/g to 100 mg/g of host matrix and still more preferably from 0.05 mg/g to 100 mg/g of host matrix.

The photochromic article may contain the photochromic compound in an amount of from 0.01 to 10.0 milligram per square centimetre of polymeric organic host material surface to which the photochromic substance(s) is incorporated or applied.

The dye monomers and polymerizable compositions of the invention may be used in those applications in which the organic photochromic substances may be employed, such as optical lenses, eg, vision correcting ophthalmic lenses and plano lenses, face shields, goggles, visors, camera lenses, windows, automotive windshields, aircraft and automotive transparencies, eg, T-roofs, sidelights and backlights, plastic films and sheets, textiles and coatings, eg coating compositions. The dye monomers and photochromic compositions may also be used as a means of light activated date storage. As used herein, coating compositions include polymeric coating composition prepared from materials such as polyurethanes, epoxy resins and other resins used to produce synthetic polymers; paints, ie, a pigmented liquid or paste used for the decoration, protection and/or the identification of a substrate; and inks, ie, a pigmented liquid or paste used for writing and printing on substrates, which include paper, glass, ceramics, wood, masonry, textiles, metals and polymeric organic materials. Coating compositions may be used to produce verification marks on security documents, eg documents such as banknotes, passport and driver' licenses, for which authentication or verification of authenticity may be desired.

In a further aspect the invention relates to a polymer comprising dye monomeric units and comonomer units forming a polymer chain wherein the dye monomeric units comprise an oligomer group and a photochromic moiety wherein photochromic moiety is tethered to the polymer chain by the oligomer.

The polymer composition may be in the form of a rigid polymer matrix or may be a gel or liquid polymer composition.

In one embodiment of this aspect the polymer is a binder polymer or prepolymer of a polymerizable polymer composition such as a coating or elastomer.

In one embodiment of this aspect of the invention the photochormic polymer composition comprises a reactive prepolymer polymer comprising dye monomeric units and one or more components such as reactive monomer, solvent, polymerization initiators, fillers, pigments and stabilizers.

For example the polymer composition may be in the form of a film forming composition such as a coating composition, ink or the like. It may be adapted cure by thermal, UV or other form of initiation.

In a further embodiment the invention provides a urethane coating comprising photochromic dye monomer having active hydrogen groups (such as hydroxy, thiol or amino) and a polyisocyanate or precursor (such as a capped polyisocyanate).

In a further embodiment the inventions provides a two pack coating system comprising:

(a) a first pack comprising a photochromic monomer wherein the photochromic monomer unit comprises photochromic moiety and at least one oligomeric group having a terminal reactive group; and
(b) a second pack comprising at least one of a polymerization initiator for the photochromic monomer and monomer reactive with said terminal reactive group, to form a polymer incorporating the photochromic moiety tethered to the polymer backbone by said oligomer.

In another embodiment the invention provides a two pack coating system comprising:

(a) a first pack comprising a photochromic prepolymer comprising dye monomeric units wherein the dye monomeric units comprise an oligomer group and a photochromic moiety wherein the photochromic moiety is tethered to the prepolymer backbone by said oligomer; and
(b) a second pack comprising at least one of an initiator and optionally a monomeric component reactive with the prepolymer.

In the most preferred embodiment of this aspect the first pack may include a prepolymer having active hydrogen reactive groups (such as hydroxyl, thiol or amine) and the second pack may include a polyisocyanate (such as TDI) to provide a polyurethane coating system.

The approach to oligomer substituted photochromics is also described in our copending international Application PCT/AU03/01453 the contents of which are herein incorporated by reference.

The approach to oligomer substituted photochromics is also described in our copending International Application PCT/AU03/01453 the contents of which are herein incorporated by reference.

Throughout the description and claims of this specification, use of the word "comprise" and variations of the

word, such as "comprising" and "comprises", is not intended to exclude other additives, components, integers or steps.

The discussion of documents, acts, materials, devices, articles and the like is included in this specification solely for the purpose of providing a context for the present invention. It is not suggested or represented that any or all of these matters formed part of the prior art base or were common general knowledge in the field relevant to the present invention as it existed in Australia before the priority date of each claims of this application.

**Note on poly(ethylene glycol) {PEG} methylethers and polydimethylsilonxe oligomers and naming of compounds.**

The PEG mono methyl ethers are supplied with an average molecular weight. For example the Aldrich Chemical Company supplies them with average number molecular weights such as 350, 750 etc which approximately but not exactly correspond to 7 PEG units, 16 PEG units etc. Thus the 350 Mn PEG contains a distribution of molecular weights and therefore PEG units. Similar comments can be made about the PDMS oligomers. They are supplied with an average molecular weight. Any number quoted as the number of repeat units of dimethyl siloxane is to interpreted as an average value. To avoid cumbersome and strictly inaccurate naming, the PEG derivatives will be named on the basis of the Mn of the PEG from which they are derived. The succinic acid derivative from 350 PEG will be "succinic acid mono-PEG (350) ester" and not the formal "Succinic acid mono-(2-{2-[2-(2{2-[2-(2-methoxy-ethoxy)-ethoxy]-ethoxy}-ethoxy)-ethoxy]-ethoxy}-ethyl) ester" which does not indicate the distribution of chain lengths that exists.

Example 1

Step 1

Succinic acid PEG methacrylate monomers may be used as comonomers for use with the polyalkylene, substituted polyalkylene or di(hydrocarbyl)siloxane monomers required in the present invention.

**Succinic acid polyethylene glycol methacrylate (526 g/mole)**

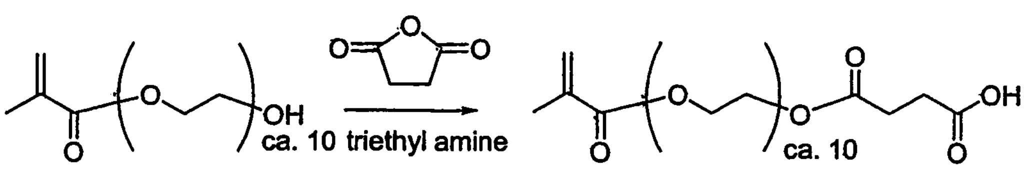


A solution of poly(ethylene)(560) glycol methacrylate (7.56g, 13.5 mmol), succinic anhydride (1.35g, 13.5 mmol), triethyl amine (1.38g, 13.6 mmol) and 4-dimethylaminopyridine (0.014g, 1.15 x $10^{-4}$ mol) in dichloromethane (50 ml) were heated at gentle refux for 1 hour, under $N_2$. The solvent was removed *in vacuo,* to give the title compound a clear viscous oil of sufficient purity for further reaction (8.94g, 99%).
$^1$H NMR ($(CD_3)_2CO$) δ= 1.92 (3H, s), 2.51 (2H, d *J* 5.49), 2.55 (2H, d *J* 5.49), 3.58 (34H, bs), 3.66 (2H, t *J* 4.94), 3.72 (2H, t *J* 4.94), 4.17 (2H, t *J* 4.76), 4.25 (2H, t *J* 4.76), 5.64 (1 H, s), 6.08 (1 H, s).

Example 2

This example describes preparation of polyethylene glycol chains which may be used in preparing photochromic compounds used in compositions of the invention.

**Step 1. Succinic acid chloride polyethylene glycol (526) methacrylate**

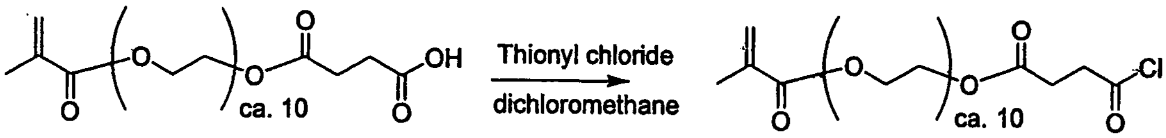


A magnetically stirred solution of polyethyleneglycol methacrylate(526 g/mole) succinic acid (4.66g, 8.09 mmol) as made in step 1 example 1, thionyl chloride (2.64g, 1.6 ml, 22.3 mmol) and three drops of DMF in dichloromethane (50 ml) were refluxed for 2 hours under nitrogen. The solvent was removed in vacuo to give the title compound as a pink gel (4.5g, 95%) of sufficient purity for further use.

1 H NMR ((CH3)2O) δ1.92 (3H, s), 2.75 (2H, t J 6.0), 3.34 (2H, t J 6.0), 3.40 (2H, m), 3.59 (30H, bs), 3.67 (2H, m), 3.73 (2H, m), 4.23 (4H, m), 5.64 (1 H, s), 6.08 (1 H, s).

Example 3.

The dyes may be examined by dissolving them into a standard monomer mix followed by a simple thermal cure. The monomer mix chosen was a mix of a 1:4 weight ratio of polyethyleneglycol 400 dimethacrylate (know as 9G) and 2,2'-bis[4-methacryloxyethoxy]phenyl]propane (known as Nouryset 110) (shown below) with 0.4% AIBN as initiator. This formulation will be referred to as monomer mix A. The dye was added to the formulation to a give a dye concentration ranging from 0.3 mg/g to 5 mg/g. The mixture was polymerized at 75˚C for 16 hours in a small gasket between microscope slides to give test lenses of approximately 14 mm diameter and 2 mm thick. Tg of a test lens made only of 9G and Nouryset 110 as described was 120 ˚C.

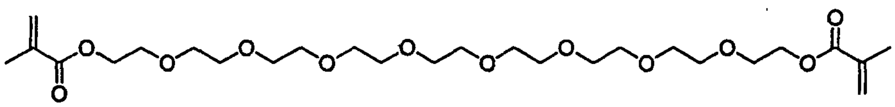

9G

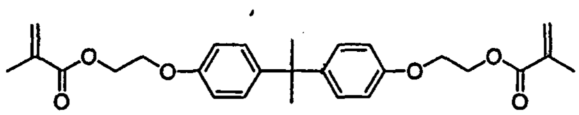

Nouryset 110

All measurements may be performed on a custom built optical bench. The bench consisted of Cary 50 Bio UV-visible spectrophotometer fitted with a Cary peltier accessory for temperature control, a 280W Thermo-Oriel xenon arc lamp, an electronic shutter, a water filter acting as a heat sink for the arc lamp, a Schott WG-320 cut-off filter and a Hoya U340 band-pass filter. The solution samples are placed in quartz cuvettes and solid samples were placed at 45 degree angle to both UV lamp and light path of spectrophotometer. The resulting power of UV light at the sample is measured using an Ophir Optronics Model AN/2 power meter giving 25 mW/cm$^2$.

The change in absorbance is measured by placing the appropriate sample in the bleached state and adjusting spectrophotometer to zero absorbance. The samples were then irradiated with UV light from the xenon lamp by opening the shutter and measuring the change in absorption. The absorption spectra was recorded for both the bleached and activated (coloured) state. The wavelength of the maxima in absorbance was then recorded and used for the monitoring of kinetics of activation and fade. Test lens samples are activated with 1000 seconds UV exposure.

**Example 4.**

RAFT terminated poly(butyl acrylate)-spirooxazine

Step 1.

Synthesis of RAFT photochromic initiator

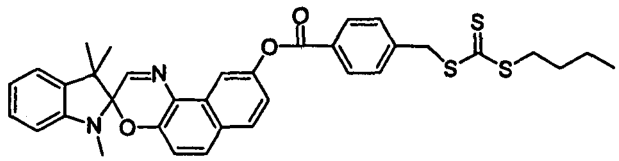

Butane-1-thiol (1.06g, $1.17x10^{-2}$mol), Carbon disulphide (2.14g, $2.81x10^{-2}$mol) and triethylamine(2.85g, $2.81x10^{-2}$mol) were added to 30mL Chloroform and stirred overnight. Then 9'-(4-Chloromethylbenzoyloxy) -1,3,3-trimethylspiro[indoline2,3'-[3H]naphtha[2,1-b][1,4] oxazine](5.82g, $1.17x10^{-2}$mol) was added and stirred at 60˚C until TLC (3:2 Diethyl ether, Hexane) showed product formed. The product was purified by washing with water, brine and drying with magnesium sulphate and then recrystallised using methanol/chloroform. $^1$H NMR ($(CD_3)_2CO$) δ.94, 1.35, 1.36, 1.47, 1.71, 2.78, 3.46, 4.85, 6.67, 6.87, 7.07, 7.16, 7.20, 7.37, 7.68, 7.84, 7.86, 7.95, 8.23, 8.40 ppm.

Step 2.

Synthesis of RAFT terminated poly(butyl acrylate)-spirooxazine.

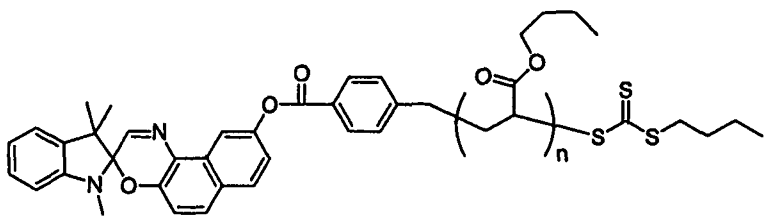

Butyl acrylate was grown form the initiator 3 under the following typical RAFT procedure: initial reactants were mixed at a 80:1 ratio of butyl acrylate (0.057 mol) to RAFT spirooxazine initiator ($6.99 \times 10^{-4}$mol). Seven mL benzene was added to each reaction, five weight percent of AIBN relative to the raft agent ($5.7 \times 10^{-3}$mol) was also added. The components were degassed using a schenk line and reacted in a constant oil temperature bath at 60˚C for the times indicated. The polymers were then precipitated and washed with methanol.

| Line | Sample | Time | Mn | PD |
|---|---|---|---|---|
| 1 | Ex 4a | 180 | 5100 | 1.10 |
| 2 | Ex 4b | 420 | 13000 | 1.13 |

**Comparative Example 3.**

RAFT photochromic initiator

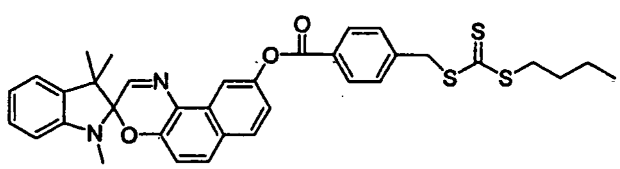

Synthesised as described in Example 4 step 1.

**Example 5**

Synthesis of RAFT terminated bis(poly(butylacryale)-spirooxazine.

Step 1. Synthesis of 3,5-bis(2-bromopropionyloxy)benzoic acid

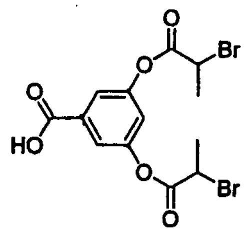

3,5-Dihydroxybenzoic acid (2.0 g, 12.98 mmol) and $K_2CO_3$ (8.97 g, 64.88 mmol) were dissolved in a mixture of water (32 mL) and *i*-PrOH (12 mL). The mixture was then cooled to -20˚C and 2-bromopropionyl chloride (4.89 g, 28.55 mmol) added dropwise over 15 minutes with vigorous stirring. Stirring was then continued for an additional 20 minutes whilst maintaining the temperature between -20˚C to -15˚C. The reaction mixture was quenched by the slow addition of 6M aqueous HCl (17 mL) and the resulting white solid filtered, washed with water and dried in air. The crude product (4.46 g) was recrystallised from $Et_2O$/hexane. $^1$H NMR (400 MHz, $CDCl_3$) δ 7.80 (d, *J* = 2.20 Hz, 2H, ArH), 7.29 (t, *J* = 2.20 Hz, 1 H, ArH), 4.60 (q, *J* = 6.95 Hz, 2H, CH), 1.96 (d, *J* = 6.95 Hz, 6H, $CH_3$). $^{13}$C NMR (100 MHz, $CDCl_3$) δ 170.1, 168.1, 150.8, 131.6, 120.8, 120.1, 39.0, 21.3.

Step 2. Synthesis of 3,5-bis(2-(*n*-butyltrithiocarbonato)propionyloxy)benzoic acid

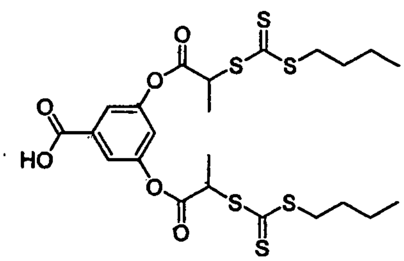

To a mixture of butanethiol (2.13 g, 0.0236 mol) and $CS_2$ (17.95 g, 0.236 mol) in chloroform (25 mL) was added triethylamine (2.39 g, 0.0236 mol) with stirring under nitrogen. The mixture was stirred for 4 hours at room temperature after which a solution comprised of 3,5-bis(2-bromopropionyloxy)benzoic acid (2.5 g, 0.0059 mol) and triethylamine (0.60 g, 0.0059 mol) in chloroform (10 mL) was added. The mixture was stirred at room temperature for a further 18 hours, washed twice with 1M aqueous HCl then water and dried with $MgSO_4$. The solvent was evaporated *in vacuo* and the oily residue purified by column chromatography using silica gel and eluting with EtOAc/hexane (2:5) to give a yellow oil which slowly solidifies on standing (1.89 g, 54%). $^1$H NMR (200 MHz, $CDCl_3$) δ 7.74 (d, *J* = 2.19 Hz, 2H, ArH), 7.21 (t, *J* = 2.19 Hz, 1H, ArH), 4.99 (q, *J* = 7.31 Hz, 2H, CH), 3.40 (t, *J* = 7.31 Hz, 4H, $SCH_2$), 1.74 (d, *J* = 7.31 Hz, 6H, $CHCH_3$, overlap with quintet, *J* = 7.31 Hz, 4H, $SCH_2CH_2$), 1.44 (sextet, *J* = 7.31 Hz, 4H, $CH_2CH_3$), 0.94 (t, *J* = 7.31 Hz, 6H, $CH_2CH_3$). $^{13}$C NMR (50 MHz, $CDCl_3$) δ 221.6, 170.1, 169.2, 150.9, 131.4, 120.8, 120.5, 47.6, 37.2, 29.8, 22.0, 16.3, 13.5.

Step 3. Synthesis of 3,5-bis(2-(*n*-butyltrithiocarbonato)propionyloxy)benzoyl chloride

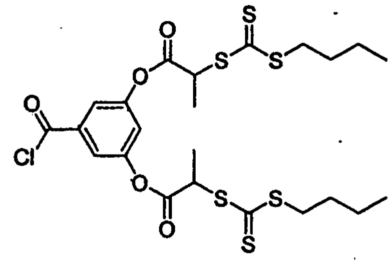

3,5-Bis(2-(*n*-butyltrithiocarbonato)propionyloxy)benzoic acid (1.87 g, 3.15 mmol) was dissolved in $CH_2Cl_2$ (25 mL) together with one drop of DMF. Thionyl chloride (1.87 g, 15.75 mmol, 5 mol. eq.) was then added under nitrogen and the mixture refluxed for 3 hours. The solvent and excess reagent were evaporated *in vacuo* with subsequent addition of 1,2-dichloroethane and evaporation once more to remove residual thionyl chloride via azeotrope. The product is a deep-yellow viscous oil which is used without further purification. Analysis by NMR indicated quantitative conversion to the acid chloride. $^1H$ NMR (200 MHz, $CDCl_3$) δ 7.73 (d, $J$ = 1.83 Hz, 2H, ArH), 7.27 (t, $J$ = 1.83 Hz, 1H, ArH), 4.96 (q, $J$ = 7.31 Hz, 2H, CH), 3.37 (t, $J$ = 7.31 Hz, 4H, $SCH_2$), 1.72 (d, $J$ = 7.31 Hz, 6H, $CHCH_3$, overlap with quintet, $J$ = 7.31 Hz, 4H, $SCH_2CH_2$), 1.42 (sextet, $J$ = 7.31 Hz, 4H, $CH_2CH_3$), 0.92 (t, $J$ = 7.31 Hz, 6H, $CH_2CH_3$). $^{13}C$ NMR (50 MHz, $CDCl_3$) δ 221.4, 168.9, 166.3, 150.9, 134.8, 121.8, 121.5, 47.4, 37.0, 29.6, 21.8, 16.0, 13.4.

Step 4 Synthesis of spirooxazine bis(RAFT) initiator

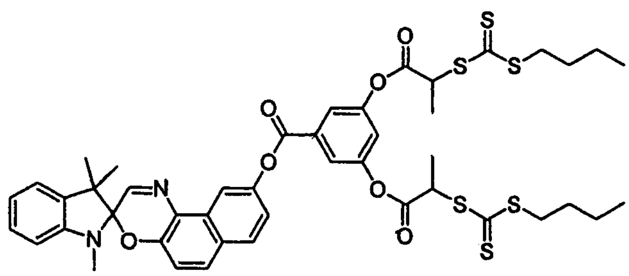

To a solution of hydroxy-1,3,3-trimethylspiro[indoline-2,3'-[2,1-b][1,4]oxazine (0.903 g, 2.62 mmol) in $CH_2Cl_2$ (10 mL) was added triethylamine (0.53 g, 5.24 mmol) dropwise with stirring under nitrogen. The mixture was cooled in an ice bath and a solution of 3,5-bis(2-(*n*-butyltrithiocarbonato)propionyloxy)benzoyl chloride (1.93 g, 3.15 mmol) in $CH_2Cl_2$ (10 mL) added slowly via syringe. The reaction mixture was then allowed to warm to room temperature and stirred for an additional 30 minutes after which it was washed with 1 M aqueous HCl, water, aqueous $NaHCO_3$, water then brine. The organic layer was dried with $MgSO_4$, the solvent evaporated and the resulting residue purified by column chromatography using silica gel and eluting with EtOAc/hexane (2:5) giving a yellow viscous oil (2.30 g, 95%). $^1H$ NMR (400 MHz, $d_6$-acetone) δ 8.43 (d, $J$ = 2.20 Hz, 1H), 7.95 (d, $J$ = 2.20 Hz, slight overlap), 7.93 (d, $J$ = 9.15 Hz, slight overlap), 7.82 (d, $J$ = 8.78, 1 H, overlapping peak), 7.82 (s, 1 H), 7.42 (t, $J$ = 2.20 Hz, 1 H), 7.39 (dd, $J$ = 8.78, 2.20 Hz, 1H), 7.19 (t, $J$ = 7.68 Hz, 1 H), 7.14 (d, $J$ = 6.95 Hz, 1H), 7.06 (d, $J$ = 8.78 Hz, 1 H), 6.87 (t, $J$ = 7.32 Hz, 1 H), 6.64 (d, $J$ = 7.68 Hz, 1H), 5.10 (q, $J$ = 7.32 Hz, 2H), 3.44 (t, $J$ = 7.32 Hz, 4H), 2.76 (s, 3H), 1.78 (d, $J$ = 7.32 Hz, 6H), 1.70 (quintet, 7.32 Hz, 4H), 1.43 (sextet, $J$ = 7.32 Hz, 4H), 1.34 (d, 2.20 Hz, 6H), 0.92 (t, $J$ = 7.32 Hz, 6H). $^{13}C$ NMR (100 MHz, $d_6$-acetone) δ 224.31, 170.85, 165.00, 153.30, 153.08, 151.78, 149.49, 146.68, 137.64, 133.86, 133.57, 131.98, 131.44, 129.75, 129.32, 124.84, 123.24, 122.69, 122.56, 121.66, 121.24, 118.52, 114.77, 108.99, 100.73, 53.52, 49.63, 38.61, 31.72, 30.78, 26.73, 23.62, 21.97, 17.56, 14.86.

Step 5. Synthesis of RAFT terminated bis(poly(butylacrylate))-spirooxazine.

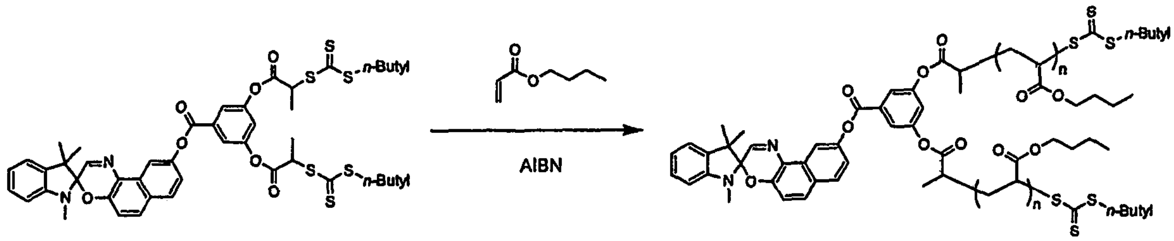


Six ampoules each containing spirooxazine bis(RAFT) initiator (0.1437 g, 0.156 mmol), butyl acrylate (2.0 g, 15.604 mmol), AIBN (2.56 mg, 0.0156 mmol) and benzene (3 mL) were degassed with four freeze/pump/thaw cycles and then reacted in a consistent temperature oil bath at 60˚C for the times indicated. The polymers were purified by firstly removing excess butyl acrylate via evaporation and then precipitation from $CH_2Cl_2$/methanol.

| Line | Sample | Time (mins) | $M_n$[a] | $M_n$ theoretical | Conversion (%) | PD |
|---|---|---|---|---|---|---|
| 1 | Ex. 5a | 30 | 1176 | 1716 | 6.2 | 1.05 |
| 2 | Ex 5b | 60 | 2780 | 3331 | 18.8 | 1.09 |
| 3 | Ex 5c | 90 | 5180 | 5548 | 36.1 | 1.08 |
| 4 | Ex 5d | 120 | 6693 | 6945 | 47.0 | 1.06 |
| 5 | Ex 5e | 181 | 9428 | 9226 | 64.8 | 1.06 |
| 6 | Ex 5f | 300 | 12011 | 11367 | 81.5 | 1.06 |

[a]*number* molecular weight with respect to polystyrene standards.

**Comparative Example 4.** Spirooxazine bis(RAFT) initiator

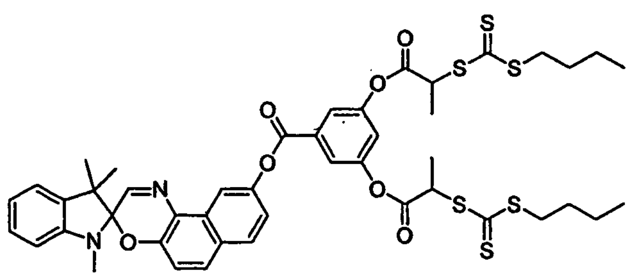

This compound was synthesised as described in Example 5 steps 1-4.

**Example 6.**

Thiol terminated poly(butyl acrylate)-spirooxazine

Step 1. Synthesis of 2-bromopropionyloxy-functionalised spirooxazine

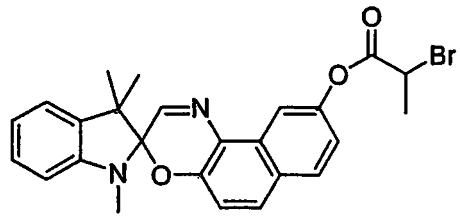

9'-Hydroxy-1,3,3-trimethylspiro[indoline-2,3'-[2,1-b][1,4]oxazine (2.0 g, 5.81 mmol) was added to dry $CH_2Cl_2$ (20 mL) and then triethylamine (1.62 mL, 11.61 mmol) added under nitrogen. The mixture was cooled in an ice bath and 2-bromopropionylbromide (1.38 g, 6.39 mmol) added dropwise with stirring. The mixture was stirred for 30 minutes with cooling and then an additional 1 hour at room temperature after which it was washed with 0.5M aqueous HCl, water, 0.5M aqueous NaOH, water and brine followed by drying with $MgSO_4$. Some hexane was added to the solution and then passed through a plug of silica gel to remove impurities. The solvent was evaporated and the resulting deep green glassy solid recrystallised from acetone/water to yield a yellow microcrystalline powder (2.22 g, 80%).
$^1$H NMR (400 MHz, $d_6$-acetone) δ 8.29 (d, *J* = 2.56 Hz, 1H), 7.93 (d, *J* = 9.15 Hz, 1H), 7.84 (s, 1H, overlap), 7.83 (d, *J* = 9.15 Hz, 1H), 7.24 - 7.14 (m, overlap, 3H), 7.07 (d, *J* = 8.78 Hz, 1 H), 6.87 (t, *J* = 7.68, 1 H), 6.66 (d, *J* = 7.68 Hz, 1 H), 4.94 (q, *J* = 6.95 Hz, 1 H, CH), 2.77 (s, 3H, $CH_3$N), 1.98 (d, *J* = 6.95 Hz, 3H, C*H*$_3$CH), 1.35 (d, *J* = 8.05 Hz, 6H, gem $CH_3$).

Step 2. 2-(*n*-butyltrithiocarbonato)propionyloxy-functionalised spirooxazine

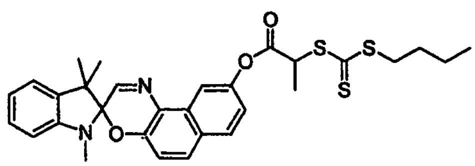

Butanethiol (0.85 g, 9.39 mmol), carbon disulfide (7.15 g, 93.9 mmol) and triethylamine (0.95 g, 9.39 mmol) were added to $CHCl_3$ (15 mL) under nitrogen and allowed to stir at room temperature for 3 hours. A solution of the 2-bromopropionyloxy-functionalised spirooxazine (1.50 g, 3.13 mmol) in $CHCl_3$ (10 mL) was then added and the mixture stirred for an additional 18 hours. The reaction mixture was then washed twice with 1 M aqueous HCl, water and brine then dried with $MgSO_4$. Evaporation of the solvent gave the crude product which was purified by column chromatography using silica gel and eluting with EtOAc/hexane (1:3), giving a deep green viscous oil (1.49 g, 84%). $^1$H NMR (400 MHz, $d_6$-acetone) δ 8.27 (d, *J* = 2.20 Hz, 1H). 7.90 (d, *J* = 8.78 Hz, 1H), 7.83 (s, 1H, overlap,), 7.82 (d, overlap, 1H), 7.20 (dd, overlap, *J* = 8.78, 2.20 Hz, 1H), 7.19 (td, overlap, *J* = 7.68 Hz, 1.46, 1 H), 7.15 (d, *J* = 7.32 Hz, 1H), 7.06 (d, *J* = 8.78 Hz, 1H), 6.87 (t, *J* = 7.68 Hz, 1 H), 6.66 (d, *J* = 8.05 Hz, 1 H), 5.13 (q, *J* = 7.32 Hz, 1H, CH), 3.49 (t, *J* = 7.32 Hz, 2H, $SCH_2$), 2.77 (s, 3H, $CH_3$N), 1.82 (d, *J* = 7.32 Hz, 3H, C*H*$_3$CH), 1.74 (pent., *J* = 7.32 Hz, 2H, $SCH_2$C*H*$_2$), 1.47 (sex., *J* = 7.32 Hz, 2H, C*H*$_2$$CH_3$), 1.35 (d, *J* = 8.42 Hz, 6H, gem-$CH_3$), 0.95 (t, *J* =7.32 Hz, 3H, $CH_2$C*H*$_3$). $^{13}$C NMR (100 MHz, $d_6$-acetone) δ 222.94, 1169.73, 151.57, 150.19, 147.95, 145.11, 136.08, 131.94, 130.39, 129.87, 128.17, 127.73, 123.18, 121.67, 120.08, 119.33, 116.93, 112.92, 107.42, 99.21, 51.97, 48.27, 36.92, 30.18, 29.15, 25.09, 22.02, 20.32, 16.11, 13.22.

Step 3. Synthesis of Spirooxazine-polybutylacrylate conjugate *via* RAFT polymerisation

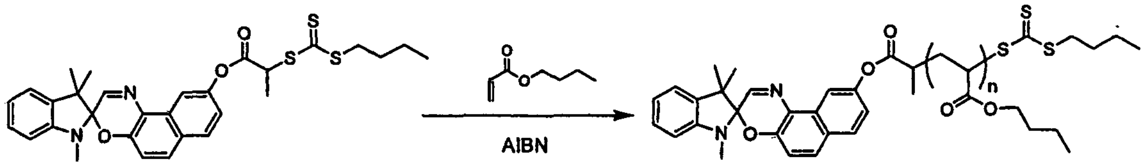


An ampoule containing 2-(*n*-butyltrithiocarbonato)propionyloxy-functionalised spirooxazine (0.110 g, 0.1945 mmol), butyl acrylate (1.872 g, 14.607 mmol, 75 molar eq.), AIBN (1.6 mg, 0.0097 mmol) and benzene (4 mL) was degassed with four freeze/pump/thaw cycles and then reacted in a consistent temperature oil bath at 60˚C for 4.5 hours. The polymers were purified by firstly removing excess butyl acrylate *via* evaporation and then precipitation from $CH_2Cl_2$/methanol. Analysis by GPC determined the molecular weight ($M_n$ = 5,728) and polydispersity (1.09). $^1H$ NMR (400 MHz, $d_6$-acetone) δ 8.26 (s, 1H), 7.89 (d, *J* = 8.78 Hz, 1 H), 7.83 (s, overlap, 1H), 7.82 (d, overlap, 1 H), 7.20 (m, overlap, 2H), 7.15 (d, *J* = 7.32 Hz, 1H), 7.05 (d, *J* = 8.78 Hz, 1H), 6.87 (t, *J* = 7.32 Hz, 1 H), 6.66 (d, *J* = 7.68 Hz, 1 H), 4.87 (m, 1H), 4.07 (br m, polymer butyl $OCH_2$), 3.44 (t, *J* = 7.32 Hz, 2H, $SCH_2$), [2.80, 2.78, 2.76 (three singlets, 6H, spirooxazine gem-$CH_3$)], 2.38 (br m, polymer), 1.93 (br sextet, polymer), 1.65 (br m, polymer), 1.42 (br m, polymer), 0.96 (br t, polymer butyl $CH_3$).

Step 4. Synthesis of thiol terminated poly(butyl acrylate)-spirooxazine.

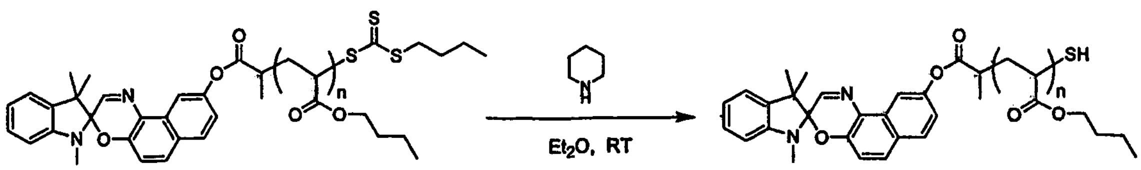


The polymer conjugate with terminal *n*-butyltrithiocarbonate (0.15 g) was dissolved in diethylether (10 mL) and a large excess of piperidine (0.15 mL, ca. 100 mol eq.) added. The mixture was stirred at room temperature for one hour after which it was washed with 1M aqueous HCl, water and brine. The ether layer was dried with $MgSO_4$ and the solvent gently evaporated *in vacuo* (≤ 35˚C). The polymer was then dissolved in $CH_2Cl_2$ and loaded onto a short silica gel column which was then eluted with $CH_2Cl_2$ to remove the by-products. The polymer was removed by subsequent elution with diethylether and the solvent evaporated *in vacuo.* The purified polymer was analysed by $^1H$ NMR which showed the absence of the characteristic *n*-butyltrithiocarbonate (-SCH2-) triplet signal at 3.44 ppm and hence its successful removal. Analysis by GPC showed a retention of molecular weight ($M_n$ = 5,997) with respect to the starting polymer, however with the presence of ca. 10% combination product presumably as a result of disulfide formation. The polydispersity was 1.13. $^1H$ NMR (400 MHz, $d_6$-acetone) δ 8.26 (s, 1H), 7.89 (d, *J* = 8.78 Hz, 1H), 7.83 (s, overlap, 1H), 7.82 (d, overlap, 1 H), 7.20 (m, overlap, 2H), 7.15 (d, *J* = 7.32 Hz, 1H), 7.05 (d, *J* = 8.78 Hz, 1H), 6.87 (t, *J* = 7.32 Hz, 1 H), 6.66 (d, *J* = 7.68 Hz, 1H), 4.07 (br m, polymer butyl $OCH_2$), 3.37 (br, 1H), [2.80, 2.78, 2.76 (three singlets, 6H, spirooxazine gem-$CH_3$)], 2.38 (br m, polymer), 1.93 (br sextet, polymer), 1.65 (br m, polymer), 1.42 (br m, polymer), 0.96 (br t, polymer butyl $CH_3$).

**Comparative example 5** Spirooxazine RAFT initiator.

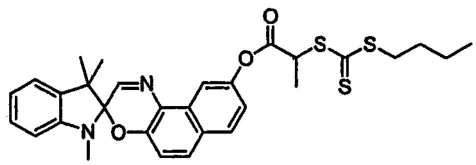

This compound was synthesised in the manner described in example 6 steps 1-2.

**Example 7**

**Synthesis of end functionalised PDMS spirooxazine conjugate.**

Step 1. 3-Chloro-1-(tetrahydropyranyloxy)propane

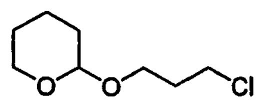

The title compound was prepared using the literature procedure: A. Bongini, G. Cardillo, M. Orena and S. Sandri, Synthesis, 1979, 618. To a solution of 3-chloro-1-propanol (9.45 g, 100 mmol) and 3,4-dihydro-2*H*-pyran 10.09 g, 120 mmol) in hexane (40 mL) was added Amberlyst-15 (2.5 g). The mixture was stirred at room temperature for 1.5 hours then filtered and the solvent and excess reagent evaporated *in vacuo.* Portions of the crude product were purified by column chromatography (silica, $Et_2O$/hexane 1:9) giving a colourless liquid of high purity. $^1H$ NMR ($d_6$-acetone, 400 MHz) $\delta$ 4.58 (t, 1 H), 3.81 (m, 2H), 3.71 (t, 2H, $CH_2Cl$), 3.47 (m, 2H), 2.01 (tt, 2H), 1.78 (m, 1 H), 1.64 (m, 1 H), 1.51 (m, 4H).

Step 2. THP-poly(dimethylsiloxane)-methacrylate

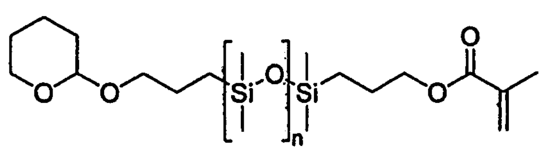

A flask containing anhydrous pentane (10 mL) and freshly cut lithium wire (large excess) under argon was cooled in an ice-salt bath. To this was added 3-chloro-1-(tetrahydropyranyloxy)propane (1.04 g, 5.80 mmol) dropwise and the mixture stirred for 1.5 hours at -5˚C followed by another 2 hours at room temperature. Stirring was then ceased and the fine solid which formed was allowed to settle to the bottom of the flask. The required amount of this alkyl lithium reagent was then added via syringe to a 50%w/v solution of hexamethylcyclotrisiloxane in anhydrous pentane. The mixture was stirred at room temperature for 2 hours and then anhydrous THF (10% v/v) added *via* canula. Stirring was continued for another 18 hours and the reaction terminated with the addition of 3-(methacryloxy)propyldimethylchlorosilane (10% excess). The lithium chloride precipitate was filtered and the solvent evaporated. The polymer was purified by re-dissolving in THF and precipitating in MeOH. There remained a methacrylate contaminant but the material is used as is. $^1H$ NMR ($CDCl_3$, 200 MHz) $\delta$ 6.10 (s, 1 H) and 5.54 (s, 1 H) [=C$H_2$], 4.58 (t br, 1 H, THP CH), 4.10 (t, 2H, $CH_2O$ methacryl), 3.88 (m, 1 H), 3.66 (m, 1 H), 3.49 (m, 1H), 3.38 (m, 1 H), 1.94 (s, 3H, methacryl-$CH_3$), 1.70 (m, 4H, $SiCH_2CH_2CH_2O$), 0.55 (m, 4H, $SiCH_2$), 0.07 (s, $Si(CH_3)_2$).

Step 3. Hydroxy terminated polydimethyl siloxane methacrylate.

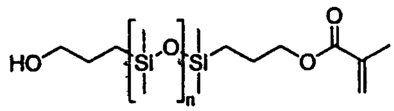

The above THP-poly(dimethylsiloxane)-methacrylate in step 2 is deprotected as described in "Protective Groups in Organic Synthesis" by T. W. Greene and P.G.M Wuts (pp32-33, 2nd ed. Wiley-interscience) and provides a hydroxy terminated poly(dimethylsiloxane)-methacrylate. This is purified by column chromatography.

Step 4. Spirooxazine-succinyl-PDMS-methacrylate conjugate.

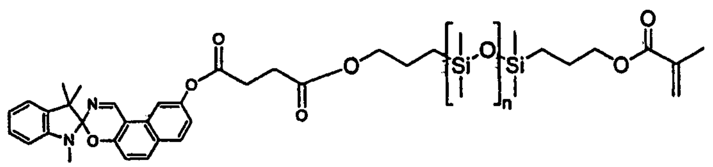

The method of synthesis of the Spirooxazine-succinyl-PDMS-methacrylate conjugate is the same as that described in example 18 of WO2004/041961. 9'-(Monocarboxy-sucinyl)-1,3,3-trimethylspiro[induline-2,3'-[3H]naphtha[2,1-b][1,4]oxazine (1.35 moles) is dissolved in dichloromethane and hydroxy terminated polydimethyl siloxane methacrylate (1.1 molar equivalents) synthesised in step 3 is added with dimethylaminopyridine (0.135mmoles). The dicyclohexylcarbodiimide (2.48 mmoles) in dichloromethane is added dropwise to the reaction. The reaction is stirred at room temperature and is analysed by TLC until no starting spirooxazine remains. The reaction is then filtered , evaporated and purified by column chromatography on silica with hexane:ether(1:1) to give product.

Synthesis of end functional poly(dimethylsiloxane) methacrylate.

Test Lenses

Monomer Formulations

**Formulation A.** Formulation A consisted of 1:4 weight ratio of polyethyleneglycol 400 dimethacrylate ("9G" NK Esters) and 2,2'-Bis[4-methacryloxyethoxy] phenyl]propane ("Nouryset 110" Akzo) with 0.4% AIBN.

**Formulation B.** Formulation **B** consisted of 1:3:16 weight ratio of polyethyleneglycol 400 dimethacrylate ("9G" NK Esters), polyethyleneglycol (600) diacrylate (Aldrich 45,500-8) and 2,2'-Bis[4-methacryloxyethoxy] phenyl]propane ("Nouryset 110" Akzo) with 0.4% AIBN.

**Formulation C** Formulation C consisted of polyethyleneglycol (600) diacrylate (Aldrich 45,500-8) and 2,2'-Bis [4-acryloxyethoxy] phenyl]propane ("Bisphenol A ethoxylate (1 EO/phenol) diacrylate" Aldrich 41,355-0) with 0.4% AIBN.

**Example 8 (Monomer formulation B)**

This example was carried out in the manner described in example 3 except that the monomer formulation used was monomer formulation B (1:3:16 weight ratio of polyethyleneglycol 400 dimethacrylate ("9G" NK Esters), polyethyleneglycol (600) diacrylate (Aldrich 45,500-8) and 2,2'-Bis[4-methacryloxyethoxy] phenyl]propane ("Nouryset 110" Akzo) with 0.4% AIBN). The acrylate content improves reaction of the RAFT terminated poly(butyl acrylate) photochromic conjugates with the monomer formulation. The RAFT groups will react as that is how the polymer conjugate was made (RAFT agent with acrylate monomer as described in examples 4 and 5)

| Line | Sample | Mn | Photochromic Agent (mg) | Monomer (g) | Ao[a] | $T_{1/2}$[a] (Sec) | $T_{3/4}$[a] (Sec) |
|---|---|---|---|---|---|---|---|
| 1 | CE 3 | 612 Control | 0.85 | 1.11 | 0.73 | 59 | 458 |
| 2 | Ex 4a | 5100 (pBA eqiv) | 7.46 | 1.20 | 1.04 | 16 | 74 |
| 3 | CE 4 | 920 Control | 1.68 | 1.50 | 0.73 | 67 | 521 |
| 4 | Ex 5c | 5180 (pSty eqiv) | 10.08 | 1.50 | 1.08 | 11 | 33 |
| 5 | CE 5 | 564 | 1.10 | 1.500 | 1.2 | 65 | 491 |
| 6 | Ex 6 | 5997 (pSty equiv) | 11.67 | 1.50 | 1.4 | 10 | 29 |

a. average of three measurements.

It can be seen in this example that a low Tg tether as illustrated by poly(butyl acrylate) tether allows the photochromic dye (Ex 4a, 5c,6) to switch faster than the control dyes (CE 3, CE 4, CE5) that do not possess the tether. Furthermore attachment the dye (Ex 5c) to the center of the poly(butyl acrylate) provides faster switching than when the dye (Ex 4a) is placed at the end of the poly(butylacrylate).

**Example 9 (Monomer formulation C)**

This example was carried out in the manner described in example 3 except that the monomer formulation used was monomer formulation B (1:4 polyethyleneglycol (600) diacrylate (Aldrich 45,500-8) and 2,2'-Bis[4-acryloxyethoxy] phenyl]propane ("Bisphenol A ethoxylate (1EO/phenol) diacrylate" Aldrich 41,355-0) with 0.4% AIBN). The acrylate content improves reaction of the RAFT terminated poly(butyl acrylate) photochromic conjugates with the monomer formulation. The RAFT groups will react as that is how the polymer conjugate was made (RAFT agent with acrylate monomer as described in examples 4 and 5)

| Line | Sample | Mn | Photochromic Agent (mg) | Monomer (g) | Ao | $T_{1/2}$ (Sec) | $T_{3/4}$ (Sec) |
|---|---|---|---|---|---|---|---|
| 1 | CE 3 | 612 Control | 1.54 | 2.01 | 1.00 | 30 | 189 |
| 2 | Ex 4a | 5100 (pBA eqiv) | 6.06 | 1.02 | 1.2 | 15 | 47 |
| 3 | CE 4 | 920 Control | 1.7 | 1.76 | 0.83 | 49 | 342 |
| 4 | Ex 5c | 5180 (pSty eqiv) | 7.36 | 1.29 | 1.15 | 15 | 42 |
| 5 | | | | | | | |
| 6 | | | | | | | |
| 7 | | | | | | | |
| 8 | | | | | | | |
| 9 | | | | | | | |

It can be seen in this example that a low Tg tether as illustrated by poly(butyl acrylate) allows the photochromic dye (Ex 4a, 5c) to switch faster than the control dyes (CE 3, CE 4) that do not possess the tether.

**Example 10**

Synthesis of photochromic initiator 1.

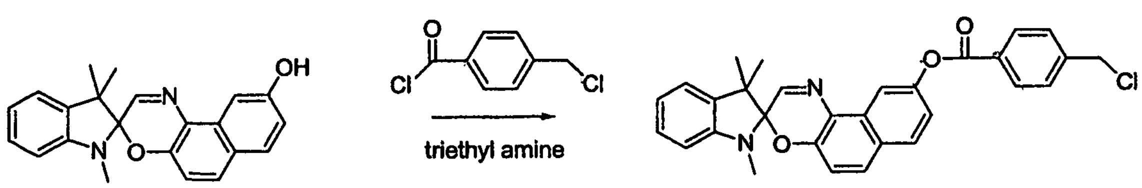

**9'-(4-Chloromethylbenzoyloxy) -1,3,3-trimethylspiro[indoline2,3'-[3H]naphtha[2,1-b][1,4] oxazine] (1)**

9'-Hydroxy-1,3,3-trimethylspiro[indoline2,3'-[3H]naphtha[2,1-b][1,4] oxazine] (2.5g, 72.7x10$^{-4}$ mol) was added to 30mL of dichloromethane in a 100mL three necked round bottomed flask. Triethylamine(1.10g, 10.9x10$^{-3}$ mol), was added and the reaction was stirred for half an hour. Then 4-(chloromethyl)benzoyl chloride (1.65g, 87.2x10$^{-4}$ mol), was dissolved in 10mL dichloromethane and added dropwise to the reaction under argon, cooled to 0˚C. The reaction was stirred at ice temperature for a further hour, and then at room temperature for one final hour. A TLC in 1:1 diethyl ether, hexane confirmed the product had been obtained. The product was washed with 100mL 0.5M NaOH, 100mL water, 100mL 0.5M HCl, 100mL water, 100mL brine and dried with $MgSO_4$. The final solution was rotary evaporated to produce 3.05g of material (85% yield). This product was then recrystallised using a combination of methanol and chloroform (mp 205-208˚C). $^1$H NMR ($(CD_3)_2CO$) δ: 1.35 (s, 3H, H-2), 1.36 (s 3H, H-3), 2.78 (s, 3H, H-10), 4.87(s, 2H, H-30), 6.67 (d, J = 7.8 Hz,-H-8), 6.87 (t of d, J = 7.4 , 1.0Hz, 1 H, H-6), 7.08 (d, J = 9Hz, 1 H, H-13), 7.16 (app d, J = 7.4Hz, 1 H, H-5), 7.20 (t of d, J = 7.8, 1.2Hz, 1H, H-7), 7.38 (d of d, J = 8.8, 2.4Hz, 1 H, H-14), 7.72 (app d, J = 8.5Hz, 2H, (C-26 & C-28)), 7.84 (s, 1 H, H-22), 7.86 (d, J = 8.5Hz, 1 H, H-17), 7.96 (d, J = 8.8Hz, 1 H, H-16) 8.28 (app d, J = 8.6Hz, 2H, H-25 & H-29)), 8.40 (d, J = 2.4Hz, 1 H, H-19). $^{13}$C NMR ($C_6D_6$) δ: 21.10 (C-2), 25.59 (C-3), 29.77 (C-10), 45.50 (C-30), 52.23 (C-1), 99.52 (C-11), 107.89 (C-8), 114.25 (C-19), 117.07 (C-13), 120.41 (C-17), 120.68 (C-6), 122.02 (C-5), 124.1 (C-21), 128.1 (C-15), 129.15 (C-26 & C-28 & C-7), 130.07 (C-16), 130.39 (C-20), 130.70 (C-14), 131.14 (C-25 & C-29), 133.02 (C-24), 136.57 (C-4), 143.36 (C-27), 145.52 (C-12), 148.35 (C-9), 151.17 (C-18), 151.27 (C-22), 165.06 (C-23). The numbering system is given in the diagram below. Mass spectrum (EI): m/z 497 ($M^+$ +1, 45%), 193 (100), 160(55), 218(40), 457(35). Mass spectrum (HR, FAB): m/z 496.154 ($C_{30}H_{25}ClN_2O_3$ requires 496.16).

**Example 11**

Synthesis of photochromic initiator **2**.

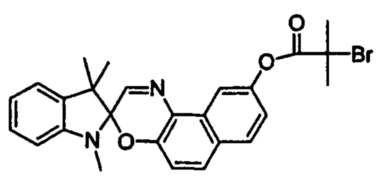

9'-(4-Methylbenzoyloxy) -1,3,3-trimethylspiro[indoline2,3'-[3H]naphtha[2,1-b][1,4] oxazine](2)

This compound was synthesised as above except acid chloride used was 2-bromo-isobutylbromide. The product was purified using column chromatography. $^1$H NMR ($(CD_3)_2CO$) δ: 1.34,1.36, 2.16, 2.78, 6.67, 6.87, 7.08, 7.16, 7.20, 7.36, 7.84, 7.86, 7.96, 8.38 ppm.

**Example 12**

Synthesis of photochromic initiator **3**

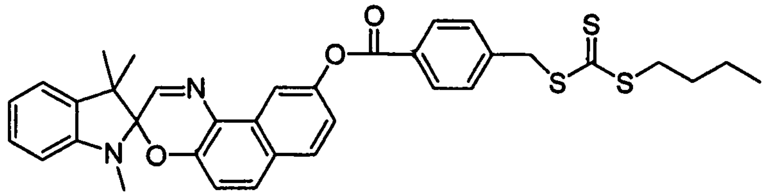

Butane-1-thiol(1.06g, 1.17x10$^{-2}$mol), Carbon disulphide(2.14g, 2.81x10$^{-2}$mol) and triethylamine(2.85g, 2.81

x10$^{-2}$mol) were added to 30mL Chloroform and stirred overnight. Then 9'-(4-Chloromethylbenzoyloxy) -1,3,3-trimethylspiro[indoline2,3'-[3H]naphtha[2,1-b][1,4] oxazine](5.82g, 1.17x10$^{-2}$mol) was added and stirred at 60˚C until TLC(3:2 Diethyl ether, Hexane) showed product formed. The product was purified by washing with water, brine and drying with magnesium sulphate and then recrystallised using methanol/chloroform. $^1$H NMR ($(CD_3)_2CO$) δ: .94, 1.35, 1.36, 1.47, 1.71, 2.78, 3.46, 4.85, 6.67, 6.87, 7.07, 7.16, 7.20, 7.37, 7.68, 7.84, 7.86, 7.95, 8.23, 8.40 ppm.

Comparative Example 6

Synthesis of comparison dye **CE6**.

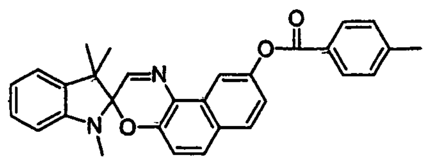

**9'-(4-Methylbenzoyloxy) -1,3,3-trimethylspiro[indoline2,3'-[3H]naphtha[2,1-b][1,4] oxazine](CE6)**

This compound was synthesised as for compound **1** except acid chloride used was 4-methyl benzoyl chloride instead of 4-(chloromethyl)benzoyl chloride (84% yield, mp 245-248˚C). $^1$H NMR ($(CD_3)_2CO$)δ: 1.35 (s, 3H, H-2), 1.36 (s 3H, H-3), 2.48 (s, 3H, H-30), 2.78 (s, 3H, H-10), 6.67 (d, J = 7.8 Hz, H-8), 6.87 (t of d, J = 7.4 , 1.0Hz, 1 H, H-6), 7.08 (d, J = 9Hz, 1 H, H-13). 7.16 (app d, J = 7.4Hz, 1 H, H-5), 7.20 (t of d, J = 7.8, 1.2Hz, 1 H, H-7), 7.36 (d of d, J = 8.8, 2.4Hz, 1H, H-14), 7.45 (app d, J = 8.0Hz, 2H, (H-26 & H-28)), 7.84 (s, 1 H, H-22), 7.86 (d, J = 8.5Hz, 1 H, H-17), 7.96 (d, J = 8.6Hz, 1 H, H-16), 8.15 (app d, J = 8.2Hz, 2H, H-25 & H-29)), 8.38 (d, J = 2.4Hz, 1 H, H-19). $^{13}$C NMR ($C_6D_6$)δ: 21.11 (C-2), 25.59 (C-3), 21.79 (C-30), 29.76 (C-10), 52.20 (C-1), 99.48 (C-11), 107.87 (C-8), 114.33 (C-19), 116.91 (C-13), 120.64 (C-17), 120.68 (C-6), 122.02 (C-5), 124.13 (C-21), 128.16 (C-15), 128.63 (C-7), 129.85-(C-26 & C-28), 129.97 (C-16 & C-20), 130.68 (C-14), 131.01 (C-25 & C-29), 133.07 (C-24), 136.61 (C-4), 144.46 (C-27), 145.44 (C-12), 148.38 (C-9), 151.11 (C-22), 151.41 (C-18), 165.61 (C-23). Mass spectrum (EI): m/z 462 ($M^+$, 85%), 119 (100), 159(93), 447(30), 158(30). Mass spectrum (HR, EI): m/z 462.1938 ($C_{30}H_{26}N_2O_3$ requires 462.1943).

Comparative Example 7

Synthesis of comparison photochromic dye **CE7**

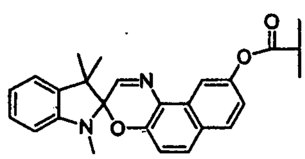

This compound was synthesized as for compound 2 but the acid chloride used was isobutyryl chloride. $^1$H NMR ($(CD_3)_2CO$)δ 1.34, 1.36,2.16,2.78,6.67,6.87, 7.08, 7.16, 7.20, 7.24, 7.85, 7.85, 7.94, 8.29 ppm.

Poly(styrene) -photochromic conjugates **PS-SOX**

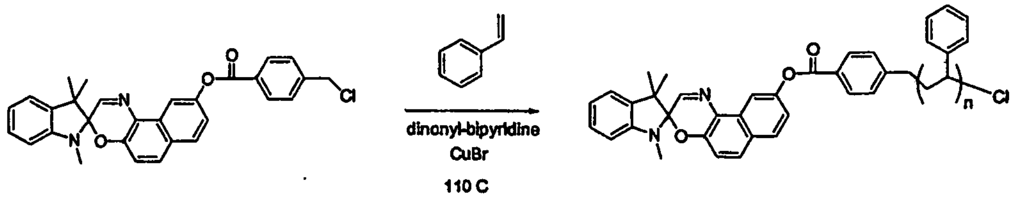


Styrene polymeric substituent was grown from the initiator **1** under the following typical procedure: initial reactants where mixed at a 100:1:1:2. ratio of styrene ($17.4x10^{-3}$ mol), spirooxazine initiator **1**, ($17.4x10^{-5}$ mol), catalyst (CuBr($17.4x10^{-5}$ mol)) and ligand (dinonyl-bipyridine ($34.9x10^{-5}$ mol)). The reactions were degassed and then polymerized at 110˚C. A number of -samples were made and polymerized for increasing lengths of time to produce polymeric substituents of increasing lengths. (Table A) The polymers were purified by precipitation in methanol. Molecular weight and polydispersity of the polymers were obtained using gel permeation chromatography (GPC), calibrated with poly (styrene) standards with THF as eluent. The polymer conversions were obtained from $^1$H NMR spectra recorded on a Bruker AC200 spectrometer.

Table A.

| Line | Sample | Time (mins) | $M_n$[a] | $M_n$ theoretical | % conv[b] | PD[c] | Tg[d] |
|---|---|---|---|---|---|---|---|
| 1 | **PS-SOX-1** | 60 | 1572 | 1278 | 7.9 | 1.29 | 83 |
| 2 | **PS-SOX-2** | 180 | 3483 | 3715 | 30.9 | 1.21 | 94 |
| 3 | **PS-SOX-3** | 240 | 4280 | 4340 | 36.9 | 1.20 | - |
| 4 | **PS-SOX-4** | 300 | 4368 | 5058 | 43.8 | 1.18 | 97 |
| 5 | **PS-SOX-5** | 360 | 5868 | 5850 | 51.4 | 1.18 | - |
| 6 | **PS-SOX-6** | 420 | 6433 | 6485 | 57.5 | 1.15 | 102 |
| 7 | **PS-SOX 7** | 480 | 7988 | 7527 | 67.5 | 1.19 | 102 |

a) molecular weight and polydispersity were obtained using gel permeation chromatography (GPC), calibrated with poly(styrene) standards with THF as eluent.
b) Polymer conversions were obtained from 1 H NMR spectra recorded on a Bruker AC200 spectrometer.
c) Mw/Mn
d) Thermal analyses of spirooxazine conjugates were done using a Mettler Toledo DSC821. Samples (10mg) were heated from 25˚C to 150˚C at 10˚C a minute under nitrogen.

**Example 13**

Poly(methylmethcrylate)-photochromic conjugate **PMMA-SOX**

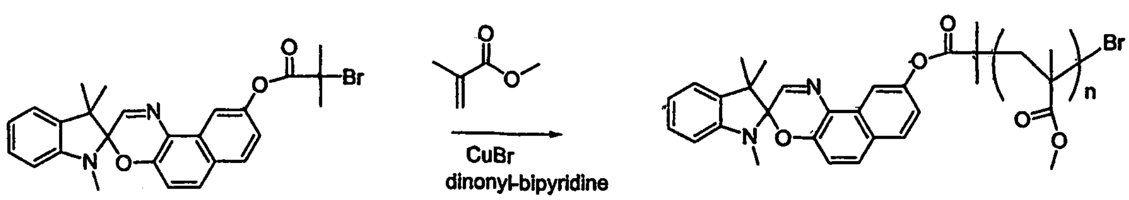


Methyl methacrylate polymer was grown from the initiator **2** der the following typical ATRP procedure: initial reactants were mixed. at a 100:1:1:2 ratio of methyl methacrylate (17.4x10-3 mol), spirooxazine initiator **2** (17.4x10-5, mol), catalyst (CuBr(17.4x10-5 mol)) and ligand (dinonyl-bipyridine (34.9x10-5 mol)). 2mL of benzene was also added.

The components were degassed using a schenk line and reacted in a consistent temperature oil bath at 60˚C for the times indicated. The polymers were then precipitated and washed with methanol.

| Line | Sample | Time (mins) | $M_n$[a] | $M_n$ theoretical | % conv[b] | PD[c] | Tg[d] |
|---|---|---|---|---|---|---|---|
| 1 | **PMMA-SOX-1** | 30 | 4579 | 2601 | 21.05 | 1.08 | 105 |
| 2 | **PMMA-SOX-2** | 60 | 6428 | 3830 | 33.33 | 1.11 | 107 |
| 3 | **PMMA-SOX-3** | 180 | 8329 | 5327 | 48.28 | 1.06 | 106 |
| 4 | **PMMA-SOX-4** | 360 | 11550 | 6214 | 57.14 | 1.05 | 109 |
| 5 | **PMMA-SOX-5** | 600 | 13795 | 7311 | 68.09 | 1.04 | 110 |
| 6 | **PMMA-SOX-6** | 840 | 17764 | 8603 | 81.0 | 1.45 | 108 |

a) molecular weight and polydispersity were obtained using gel permeation chromatography (GPC), calibrated with poly(styrene) standards with THF as eluent.
b) Polymer conversions were obtained from 1 H NMR spectra recorded on a Bruker AC200 spectrometer.
c) Mw/Mn
d) Thermal analyses of spirooxazine conjugates were done using a Mettler Toledo DSC821. Samples (10mg) were heated from 25˚C to 150˚C at 10˚C a minute under nitrogen.

**Example 14**

Poly(butylacrylate)-photochromic conjugate **PBA-SOX.**

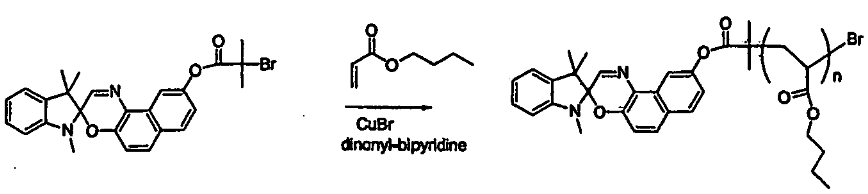


Butyl acrylate polymer was grown from the initiator **2** under the following typical ATRP procedure: initial reactants were mixed at a 100:1:1:2 ratio of butyl acrylate. (17.4x10-3 mol), spirooxazine initiator **2**. (17.4x10-5. mol), catalyst (CuBr(17.4x10-5 mol)) and ligand (dinonyl-bipyridine (34.9x10-5 mol)). The components were degassed using a schenk line and reacted in a consistent temperature oil bath at 90˚C for the times indicated. The polymers were then precipitated and washed with methanol.

| Line | Sample | Time (mins) | Mn[a] | Mn theoretical | % conv[b] | PD[c] |
|---|---|---|---|---|---|---|
| 1 | PBA-SOX-1 | 120 | 2610 | 1929 | 11.2 | 1.09 |
| 2 | PBA-SOX-2 | 300 | 5850 | 3736 | 25.3 | 1.07 |
| 3 | PBA-SOX-3 | 420 | 9340 | 5748 | 41.0 | 1.07 |
| 4 | PBA-SOX-4 | 540 | 11500 | 7517 | 54.8 | 1.08 |
| 5 | PBA-SOX-5 | 660 | 13700 | 8735 | 64.3 | 1.09 |
| 6 | PBA-SOX-6 | 840 | 16900 | 10132 | 75.2 | 1.10 |

(a) molecular weight and polydispersity were obtained using gel permeation chromatography (GPC), calibrated with poly(styrene) standards with THF as eluent.
b) Polymer conversions were obtained from 1 H NMR spectra recorded on a Bruker AC200 spectrometer.
c) Mw/Mn

Photophysical performance.

Photochromic analyses were performed on lenses composed of a 1:4 weight ratio of polyethyleneglycol 400 dimethacrylate (9G) and 2,2'-Bis[4-methacryloxyethoxy] phenyl]propane (Nouryset 110) with 0.4% AIBN. The polymer-photochromic conjugates were dissolved in a standard monomer mix of 9G:Nouryset 110 and cured 80°C, 8 hrs) to give clear test lenses. Lenses were made in a mould 14mm dia x 2.6 mm. The molecular weights of the photochromic-dye conjugates are of the purified (precipitated) polymer conjugates and the values in the polymer tables are of the crude molecular weight straight from the reaction mixture.

The test lenses were then evaluated on a light table consisting of a Cary 50 UV-Vis spectrophotometer using a 300 W Oriel Xenon lamp. A combination of Schott WG 320 cut-off filter, UV band pass filter (Edmund Scientific U-360) and water bath were placed in front of the Xenon light source giving a resulting light source of 25 mW per $cm^2$ of UV light (320-400nm). The lamp filters were cooled with water continuously circulating through to a central reservoir. Colouration and decoloration were monitored at the $\lambda_{max}$ of the colored form of the individual photochromic dye at 20°C (temperature controlled via a peltier sample accessory).

Fade kinetics are reported either as a t1/2 (the time taken for the maximum colouration to reduce to half it's original optical density) or k1, k2 A1/A2 an Ath being various parameters of the biexponential model of fade. The decoloration curves were analyzed using the following biexponential equation:

$$A(t) = A_1 e^{-k_1 t} + A_2 e^{-k_2 t} + A_{th}$$

where A(t) is the optical density at the $\lambda_{max}$, $A_1$ and $A_2$ are contributions to the initial optical density $A_0$, $k_1$ and $k_2$ are the rates of the fast and slow components and $A_{th}$ is coloration when time approaches.

## Claims

**1.** A polymerizable composition for forming a photochromic article of glass transition temperature of at least 50°C on curing, the composition comprising:

(a) a polymerizable composition comprising a monomer component or resin formed therefrom; and
(b) a photochromic dye monomer comprising a photochromic moiety and at least one oligomeric group having at least one group reactive with the monomer component during or following curing wherein the oligomer group comprises at least three monomer units selected from siloxane and substituted alkylene of formula III.

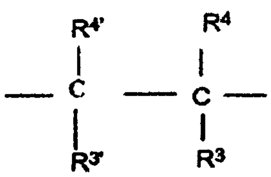

III

wherein
$R^3$ is selected from the group consisting of hydroxy, alkoxy, aryloxy, heterocyclic, carboxyl, nitrile, alkoxycarbonyl, substituted alkoxycarbonyl, carbamoyl, N-carbamoyl, N,N-dialkyl-carbamoyl, carbaniloyl, alkylphenylaminocarbonyl, alkoxyphenylaminocarbonyl, acyl, substituted acyl and the groups of formula: -

$$-L'-(O)_q-(Z-O)_p-ZY';$$

and

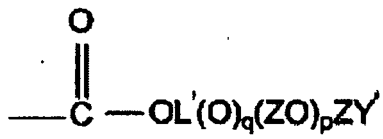

wherein
p is from 1 to 20 and more preferably 2 to 15, q is 0 or 1, Z is selected from the group consisting of $C_2$ - $C_4$ alkylene, dialkylsilyl, diarylsilyl and diaryloxysilyl; L is a bond or a linking group such as $C_1$ to $C_6$ alkylene, aryl, alkaryl and aralkyl; and Y is a terminal group selected from the group consisting of hydrogen, alkyl, hydroxyl and alkoxy, alkoxyalkoxy, hydroxyalkoxy and aryloxy, tri-($C_1$ to $C_6$ alkyl)silane, di($C_1$ to $C_6$ alkyl)phenyl silane;
$R^{3'}$ is hydrogen and $R^3$ and $R^{3'}$ may together from a group of formula

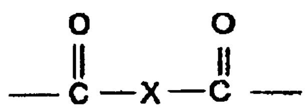

wherein
X is selected from the group consisting of oxygen and the group $NR^7R^8$ wherein $R^7$ and $R^8$ are independently selected from the group of hydrogen, alkyl, aryl, substituted alkyl and substituted aryl;
$R^4$ is selected from the group consisting of hydrogen, halogen, alkyl, hydroxy, hydroxyalkyl, nitrile and alkoxy; and $R^{4'}$ is selected from the group consisting of hydrogen and halogen.

**2.** A polymerizable composition according to claim 1 wherein the polymerizable composition comprises a monomer component.

**3.** A polymerizable composition according to claim 1 or claim 2 wherein the photochromic dye monomer is of formula I:

$$(PC)_q\text{-}(L(R)_n)_m \qquad \text{I}$$

wherein:

PC is a photochromic moiety;
L is a bond or linking group;
R is the oligomeric group according to claim 1;
m and n are independently selected integers from 1 to 3;
q is 1 or 2;
and

wherein at least one oligomer R comprises at least one group which is reactive with the monomer composition on curing of the polymerizable composition.

**4.** A polymerizable composition according to claim 1 or claim 2 wherein the reactive group is selected from the group consisting of amino; alkylamino (including mono and di-alkylamino); halo hydroxyl; thio; mercapto; epoxy; carbamate; alkylhalo; unsaturated groups (such as acryloyl, methacryloyl, acryloyloxy, allyl allyloxy and methacryloyloxy), maleimides; the group of formula $-SiX^1X^2X^3$ wherein $X^1$, $X^2$ and $X^3$ are independently selected from the group consisting of hydrogen, halogen, hydrocarbyl and hydrocarbyloxy and wherein at least one of $X^1$, $X^2$ and $X^3$ is selected from hydrogen, halogen and hydrocarbyloxy; dithioester (-S-C=S-R); trithiocarbonate (-S-C=S-S-R); dithiocarbamate (-S-C=S-NRR); xanthate (-S-C=S-O-R); carboxylic acids; carboxylic esters; and $C_1$ to $C_6$ alkyl substituted with a group selected from hydroxy, thio, amino, alkyl amino, carboxyl, ($C_1$ to $C_6$ alkoxy)carboxyl, acryloyl, methacryloyl, acryloyloxy and methacryloyloxy.

**5.** A polymerizable composition according claim 3 wherein said at least one reactive group comprises a radical capped

radical group adapted to be reversibly cleaved from the compound under activating conditions to provide a reactive radical during curing of the composition.

**6.** A polymerizable composition according to claim 5 wherein the oligomer comprises reactive group selected from the group consisting of dithioesters (-S-C=S-R); trithiocarbonates (-S-C=S-S-R); dithiocarbamates (-S-C=S-NRR); xanthates (-S-C=S-O-R); carboxylic acids; carboxylic esters and nitroxides.

**7.** A polymerizable composition according to claim 3 wherein at least one of the oligomers R comprises a terminal reactive group.

**8.** A polymerizable composition according to claim 3 wherein the at least one reactive group is a terminal unsaturated group selected from the group consisting of (meth)acryloyl, (meth)acryloyloxy, allyl and allyloxy.

**9.** A polymerizable composition according to claim 1 or claim 2 wherein the oligomer comprises at least 3 monomeric units selected from the group consisting of di-($C_1$ to $C_6$)alkyl siloxane monomeric units, $C_1$ to $C_6$ alkyl acrylate and $C_1$ to $C_6$ alkyl methacrylate monomeric units.

**10.** A polymerizable composition according to claim 1 or claim 2 wherein the oligomer includes at least 5 monomeric units selected from the group consisting of alkylenyloxy, $C_1$ to $C_6$ alkyl acrylate, $C_1$ to $C_6$ alkylmethacrulate and halogenated $C_1$ to $C_6$ alkyl acrylate or $C_1$ to $C_6$ alkylmethacrylates.

**11.** A polymerizable composition according to claim 1 or claim 2 wherein the at least one oligomer is selected from groups of formula II:

$$-(X)_p(R^1)_q-X^1R^2 \qquad \text{II}$$

wherein
X is selected from oxygen sulfur amino, substituted amino and $C_1$-$C_4$ alkylene;
$X^1$ is a bond or an attachment group for one or more reactive groups;
p is 0 or 1;
q is the number of monomer units and is at least 3;
$R^1$ which may be the same or different are selected from the group consisting of:
substituted $C_2$ to $C_4$ alkylene of formula III defined according to claim 1 and di($C_1$ to $C_{10}$) hydrocarbylsiloxane; and
$R^2$ is selected from the group consisting of amino; alkylamino (including mono and di-alkylamino); halo hydroxyl; thio; mercapto; epoxy; carbamate; alkylhalo; unsaturated groups (such as acryloyl, methacryloyl, acryloyloxy, allyl allyloxy and methacryloyloxy), maleimides; the group of formula $-SiX^1X^2X^3$ wherein $X^1$, $X^2$ and $X^3$ are independently selected from the group consisting of hydrogen, halogen, hydrocarbyl and hydrocarbyloxy and wherein at least one of $X^1$, $X^2$ and $X^3$ is selected from hydrogen, halogen and hydrocarbyloxy; dithioester (-S-C=S-R); trithiocarbonate (-S-C=S-S-R); dithiocarbamate (-S-C=S-NRR); xanthate (-S-C=S-O-R); carboxylic acids; carboxylic esters; and $C_1$ to $C_6$ alkyl substituted with a group selected from hydroxy, thio, amino, alkyl amino, carboxyl, ($C_1$ to $C_6$ alkoxy) carboxyl, acryloyl, methacryloyl, acryloyloxy and methacryloyloxy.

**12.** A polymerizable composition according to claim 1 wherein the monomeric unit of formula III forms an oligomer which is a block copolymer.

**13.** A polymerizable composition according to claim 12 wherein the oligomer comprises a group of formula

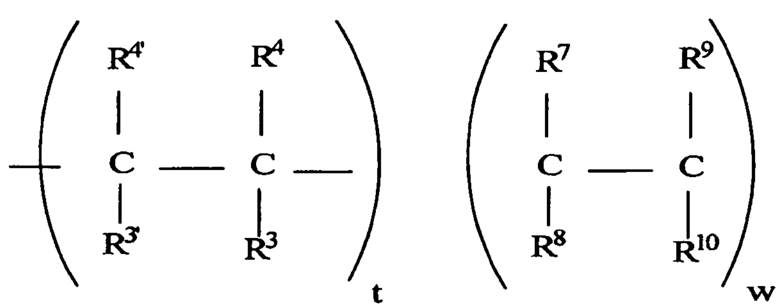

V

wherein $R^3$, $R^{3'}$, $R^4$ and $R^{4'}$ are defined according to claim 1; $R^7$, $R^8$, $R^9$ and $R^{10}$ are independently selected from the group consisting of hydrogen, halogen, alkyl and haloalkyl; t is from 2 to 200; w is from 0 to 500 and wherein the units may be present as blocks or randomly distributed.

**14.** A polymerizable composition according to claim 3 wherein the oligomer R is selected from the groups of the following formulae (i) to (iv):

(i) 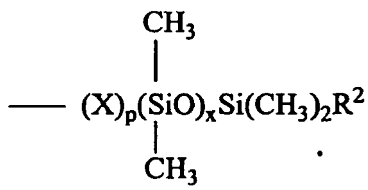

(ii) 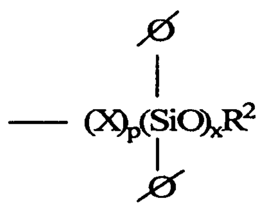

wherein ∅ is alkyl or aryl and includes at least a portion of aryl groups; and

(iii) 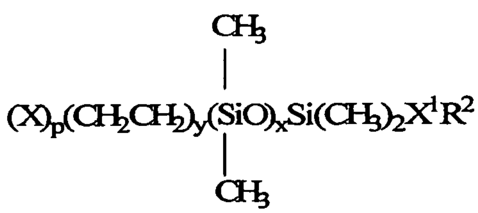

(iv) 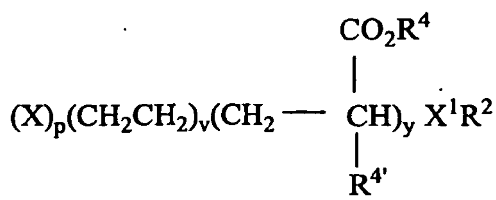

wherein X and $R^2$, $R^4$, $R^{4'}$ and p are hereinbefore defined and x, v and y are the number of repeating units, and wherein at least one oligomer group is present wherein the number of monomer units (x or y+v in the above examples) is at least 5 and
wherein the monomer units are distributed randomly or in block form.

**15.** A polymerizable composition according to claim 1 or claim 2 wherein the dye monomer comprises at least one selected from the group consisting of formulae VIa to VIf:

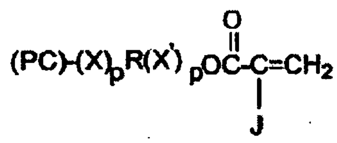

VIa

$(PC)\text{-}(X)_pR(X')_p\text{-}CH{=}CH_2$ VIb

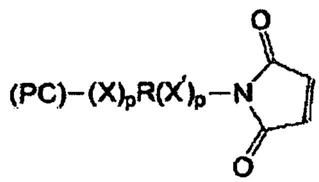

VIc

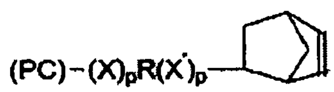

VId

$(PC)\text{-}(X)_pR(X')_p(YH)_w$ VIe

$(PC)\text{-}X_pR(X')_p(NR'R'')_w$ VIf

wherein:

X is a linking group for the oligomer;
X is bond or attachment group for the one more reactive groups and is selected from the group consisting of $C_1$ to $C_4$ alkylene;
where Y is oxygen or sulphur;
w is the number of hydroxyl or thiol groups at the terminal end of the oligomer and is 1 to 3;
p is independently selected from 0 and 1;
PC is a photochromic moiety;
J is hydrogen or $C_1$ to $C_4$ alkyl;
R is an oligomer;
R' is hydrogen, $C_1$ to $C_6$ alkyl or substituted ($C_1$ to $C_6$) alkyl; and
R" is hydrogen, ($C_1$ to $C_6$) alkyl or substituted ($C_1$ to $C_6$) alkyl.

**16.** A polymerizable composition according to claim 3 wherein the oligomer R is linked to the photochromic moiety (PC) by a linker group of any one of the formulae selected from VIIa to VIIp:

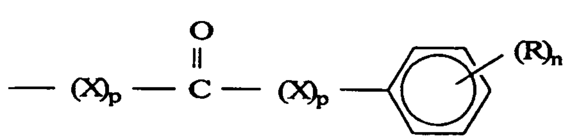

VIIa

wherein n is from 1 to 3:

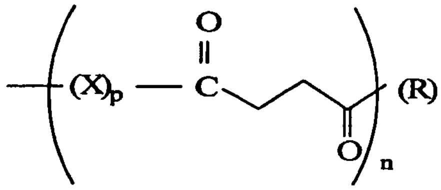 VIIb

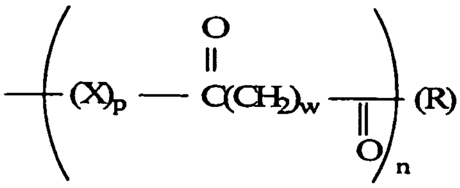 VIIc

$-(X)_p(CH_2)_nCHR^{11}(R)$ VIId

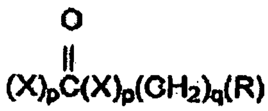 VIIe

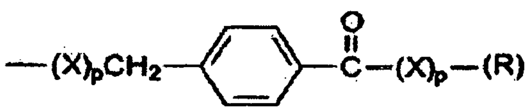 VIIf

$-(X)_p(C_2$ to $C_6$ alkylene$)-(X)_p-(R)$ VIIg

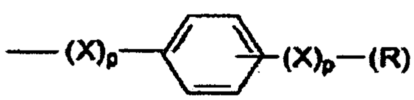 VIIh

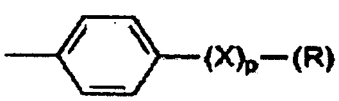 VIIi

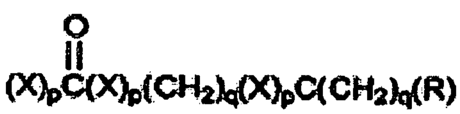 VIIj

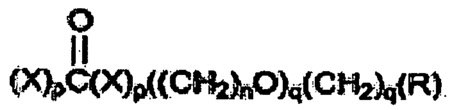

VIIk

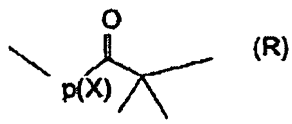

VIIl

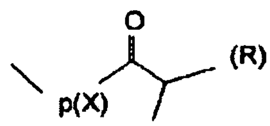

VIIm

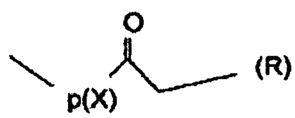

VIIn

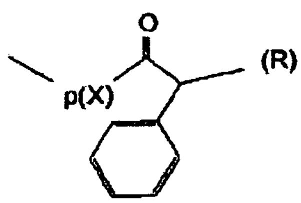

VIIo

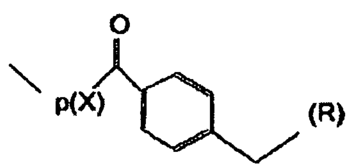

VIIp

wherein in the formula VIIa to VIIp:

X which may be the same or different is as hereinbefore defined;
$R^{11}$ is selected from the group consisting of hydroxy, alkoxy, amino and substituted amino such as alkyl amino;
n is an integer from 1 to 3;
w is an integer from 1 to 4;
q is an integer from 0 to 15;
p which when there is more than one may be the same or different is 0 or 1; and
(R) shows the radial for attachment of oligomer R.

**17.** A polymerizable composition according to claim 2 wherein the monomer component comprises at least one crosslinking monomer.

**18.** A polymerizable composition according to claim 2 wherein the resulting polymer comprises at least one selected

from the group consisting of polyester, urethanes, polycarbonates, polyamides, epoxies and thiolene polymers.

**19.** A polymerizable composition according to claim 2 wherein the polymerizable matrix comprises monomers selected from the group consisting of polyol(allyl carbonate) monomers, multifunctional acrylate and methacrylate monomers, acrylates, alkylacrylates, cellulose acetate, cellulose triacetate, cellulose acetate propionate, nitrocellulose cellulose acetate butyrate, poly(vinyl acetate), vinylalcohol, vinylchloride, vinlylidene chloride, polyurethanes, polycarbonates, poly(ethylene-terephthalate), polystyrene, copoly(styrene-methylmethacrylate), copoly(styrene-acrylateonitrile), poly(vinylbutryal), and homopolymers and copolymers of diacylidene pentaerythritol, particularly copolymers with polyol(allylcarbonate) monomers.

**20.** A polymerizable composition according to claim 3 wherein the photochromic moiety (PC) is selected from the group consisting of chromenes, spiropyrans; spiro-oxazines, fulgides, fulgimides, anils, perimidinespirocyclohexadienones, stilbenes, thioindigoids, azo dyes and diarylethenes and diarylperfluorocyciopentenes.

**21.** A polymerizable composition according to claim 3 wherein the photochromic moiety (PC) is selected from the group consisting of naphthopyrans, benzopyrans, indenonaphthopyrans, phenanthropyrans, spiro(benzindoline) naphthopyrans, spiro(indoline)benzopyrans, spiro(indoline)naphthopyrans, spiroquinopyrans, spiro(indoline)pyrans, spiro(indoline) naphthoxazines, spiro(indoline)pyridobenzoxazines, spiro(benzindoline)pyridobenzoxazines, spiro (benzindoline)naphthoxazines, spiro(indoline)benzoxazines, fulgides and fulgimides.

**22.** The polymerizable composition of claim 4 wherein the monomer component comprises diethylene glycol bis(allyl carbonate).

**23.** A polymerizable composition according to claim 1 wherein the monomer comprises at least one selected from the group consisting allyl diglycol carbonate monomer(s), polycarbonates forming monomers, monomers for forming polyurea urethanes and polyfunctional isocyanate(s) and polythiol or polyepisulfide monomer(s).

**24.** A polymerizable composition according to claim 1 or claim 2 wherein the photochromic compound comprises one or more reactive terminal groups comprising active hydrogen groups (such as hydroxyl, amine and alkylamine) and the monomer composition comprises a polyisocyanate or epoxy crosslinking monomer.

**25.** A polymerizable composition according to claim 14 which forms a polymer having a Tg of at least 70˚C on curing.

**26.** A photochromic article having a Tg of at least 50˚C comprising a polymeric matrix formed from a polymerizable composition according to claim 1.

**27.** A photochromic article according to claim 26 wherein the photochromic moiety (PC) is selected from the group consisting of:

(a) spiro-oxazines of formula III

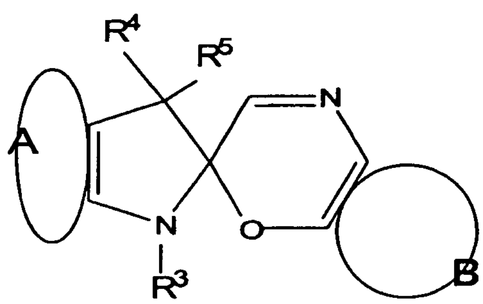

III

in the general formula III, $R^3$, $R^4$ and $R^5$ may be the same or different and are each an alkyl group, a cycloalkyl group, a cycloarylalkyl group, an alkoxy group, an alkyleneoxyalkyl group, an alkoxycarbonyl group, a cyano, an alkoxycarbonylalkyl, an aryl group, an arylalkyl group, an aryloxy group, an alkylenethioalkyl group, an acyl group, an acyloxy group or an amino group, $R^4$ and $R^5$ may together form a ring, and $R^3$, $R^4$ and $R^5$ may optionally each have a substituent(s);

(b) chromenes of formula XX

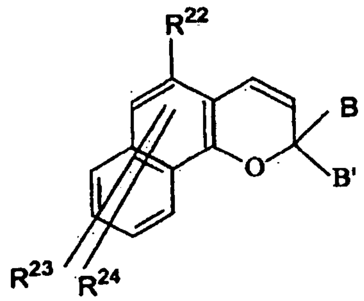

XX

wherein
B and B' are optionally substituted phenylaryl and heteroaryl; and
$R^{22}$ , $R^{23}$ and $R^{24}$ are independently selected from hydrogen; halogen;
$C_1$ to $C_3$ alkyl; the group $L(R)_n$; and the group of formula COW wherein
W is $OR^{25}$, $NR^{26}R^{27}$,
piperidino or morpholino wherein $R^{25}$ is selected from the group consisting of $C_1$ to $C_6$ alkyl, phenyl, ($C_1$ to $C_6$ alkyl)phenyl, $C_1$ to $C_6$ alkoxyphenyl, phenyl $C_1$ to $C_6$ alkyl ($C_1$ to $C_6$ alkoxy)phenyl, $C_1$ to $C_6$ alkoxy $C_2$ to $C_4$ alkyl and the group $L(R)_n$; $R^{26}$ and $R^{27}$ are each selected from the group consisiting of $C_1$ to $C_6$ alkyl, $C_5$ to $C_7$ cycloalkyl, phenyl, phenyl substituted with one or two groups selected from $C_1$ to $C_6$ alkyl and $C_1$ to $C_6$ alkoxy and the group $L(R)_n$; $R^{22}$ and $R^{23}$ may optionally form a ring of 5 or 6 ring members optionally fused with an optionally substituted benzene and wherein at least one of the substituents selected from the group of substituents consisting of B and B', $R^{22}$, $R^{23}$, $R^{24}$ , $R^{25}$, $R^{26}$ and $R^{27}$ is the group $L(R)_n$;

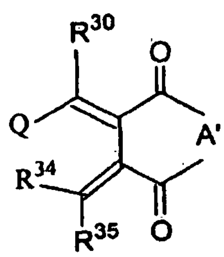

XXX

XXX fulgides and fulgimides of formula XXX:
wherein
Q is selected from the group consisting of optionally substituted aromatic, optionally substituted heteroaromatic (where said aromatic/heteroaromatic may be mono or polycyclic aromatic/heteroaromatic);
$R^{30}$ is selected from the group consisting of a $C_1$ to $C_4$ alkyl, $C_1$ to $C_4$ alkoxy phenyl, phenoxy mono- and di($C_1$ - $C_4$) alkyl substituted phenyl or phen($C_1$ to $C_4$) alkyl;
A' is selected from the group consisting of oxygen or =N-$R^{36}$, in which $R^{36}$ is $C_1$-$C_4$ alkyl or optionally substituted phenyl;
$R^{34}$ and $R^{35}$ independently represents a $C_1$ to $C_4$ alkyl, phenyl or phen($C_1$ to $C_4$) alkyl or one of $R^{34}$ and $R^{35}$ is hydrogen and the other is one of the aforementioned groups, or $R^{34}R^{35}$= represents an adamantylidene group;
wherein at least one of Q, $R^{30}$, $R^{34}$, $R^{35}$ and $R^{36}$ comprises the group $L(R)_n$;
azo dyes of formula XL.

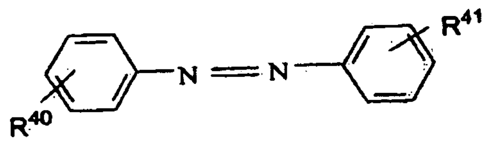

XL

wherein
$R^{40}$ and $R^{41}$ are independently selected from the group consisting of hydrogen; $C_1$ to $C_6$ alkyl; $C_1$ to $C_6$ alkoxy; $-NR^{42}R^{43}$ wherein $R^{42}$ and $R^{43}$ are as defined for $R^{26}$ and $R^{27}$; aryl (such as phenyl), aryl substituted with one or more substituents selected from $C_1$ to $C_6$ alkyl and $C_1$ to $C_6$ alkoxy, substituted $C_1$ to $C_6$ alkyl wherein the substituent is selected from aryl and $C_1$ to $C_6$ alkoxy, substituted $C_1$ to $C_6$ alkoxy wherein the substituent is selected from $C_1$ to $C_6$ alkoxy aryl and aryloxy; and
diarylperfluorocyclopentenes of the following formula

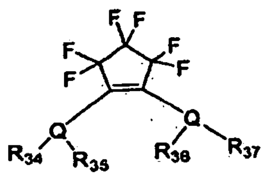

XXXV

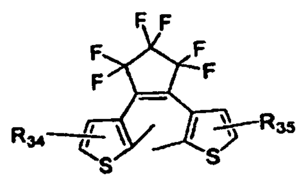

XXXVI

wherein
substituted aromatic, optionally substituted heteroaromatic (where said aromatic/heteroaromatic may be mono polycyclic aromatic/heteroaromatic);
$R^{34}$, $R^{35}$, $R^{36}$ , $R^{37}$ independently represents a $C_1$ to $C_4$ alkyl, phenyl or phen($C_1$ to $C_4$) alkyl or one of $R^{34}$, $R^{35}$, $R^{36}$, $R^{37}$ is hydrogen and the others are one of the aforementioned groups; and
wherein at least one of Q, $R^{34}$, $R^{35}$, $R^{36}$ and $R^{37}$ comprises the group $L(R)_n$.

**28.** A photochromic article according to claim 26 wherein the oligomer R is selected from the groups of the following formulae (i) to (vii):

(i)

$$-(X)_p(CH_2(CF_2CF_2)_xR^2;$$

(ii)

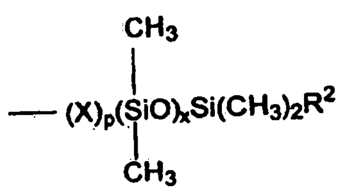

(iii)

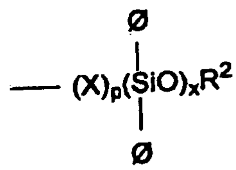

wherein ∅ is alkyl or aryl and includes at least a portion of aryl groups;

(vi)

$$-X_p(CF_2CF_2O)_x-(CF_2)_nR^2$$

(v)

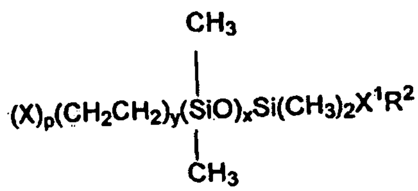

(vi)

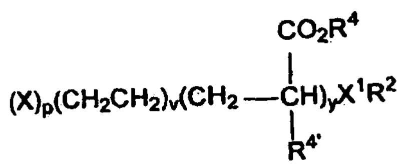

wherein X, X' and $R^2$ and p are hereinbefore defined and x, v and y are the number of repeating units, and alkyl is $C_1$ to $C_{20}$ alkyl, preferably $C_1$ to $C_{10}$ alkyl such as methyl, ethyl, propyl, butyl, pentyl or hexyl.

**29.** A photochromic article according to claim 28 wherein the number of monomer units (x or y+v in the above examples) is at least 5.

**30.** A process for preparing a photochromic article comprising:

(a) forming a polymerizable composition according to claim 2;
(b) casting the polymerizable composition or applying it as a coating to a substrate; and
(c) polymerizing the polymerizable composition to provide a polymeric matrix incorporating a photochromic monomeric unit comprising a photochromic moiety covalently tethered to the matrix polymer via an oligomer comprising at least 7 monomeric units selected from the group consisting of alkylenyloxy, fluoroalkylenyloxy and di-(hydrocarbyl)siloxane.

**Patentansprüche**

**1.** Eine polymerisierbare Verbindung zur Bildung eines photochromen Gegenstandes mit einer Glasübergangstemperatur von mindestens 50°C bei der Aushärtung, umfassend

(a) eine polymerisierbare Verbindung umfassend einen Monomer-Bestandteil oder ein daraus gebildetes Harz, sowie
(b) ein photochromes Farbstoffmonomer umfassend einen photochromen Rest sowie mindestens eine Oligomergruppe mit mindestens einer Gruppe, die mit dem Monomerbestandteil während oder nach der Aushärtung reagiert, wobei die Oligomergruppe mindestens drei Monomerbausteine, ausgewählt aus Siloxan und substituiertem Alken der Formel III, umfasst,

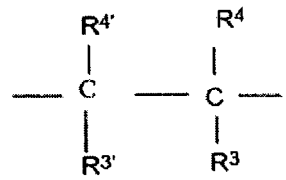 III

wobei $R^3$ aus der Gruppe bestehend aus Hydroxyl, Alkoxy, Aryloxy, heterozyklische, Carboxyl, Nitril, Alkoxycarbonyl, substituiertem Alkoxycarbonyl, Carbamoyl, N-Carbamoyl, N,N-Dialkyl-Carbamoyl, Carbaniloyl, Alkylphenylaminocarbonyl, Alkoxyphenylamonicarbonyl, Acyl, substituiertem Acyl sowie um Gruppen der Formel:

$$-L'-(O)_q-(Z-O)_p-ZY'$$

und

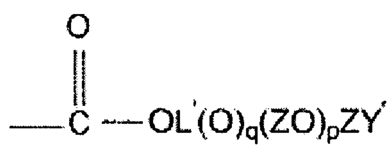

wobei

es sich bei p um eine Zahl von 1 bis 20, vorzugsweise von 2 bis 15, handelt, q 0 oder 1 ist und Z aus einer Gruppe ausgewählt wird, die $C_2$ - $C_4$ Alkylen, Dialkylsilyl, Diarylsilyl und Diaryloxysilyl umfasst, wobei L' eine Bindungs- oder Verbindungsgruppe wie z.B. $C_1$ - $C_6$ Alkylen, Aryl, Alkaryl oder Aralkyl ist, und wobei Y' eine Endgruppe ist, die aus der Gruppe bestehend aus Hydrogen, Alkyl, Hydroxyl und Alkoxy, Alkoxyalkoxy, Hydroxyalkoxy und Aryloxy, Tri-($C_1$ bis $C_6$ Alkyl)Silan, Di($C_1$ bis $C_6$ Alkyl)Phenylsilan ausgewählt wurde;

$R^3$ ist Hydrogen, und $R^3$ und $R^{3'}$ können zusammen eine Gruppe mit folgender Formel bilden:

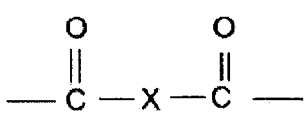

wobei

X aus der Gruppe ausgewählt wird, die aus Sauerstoff und der Gruppe $NR^7R^8$ besteht, wobei $R^7$ und $R^8$ unabhängig voneinander aus der Gruppe bestehend aus Hydrogen, Alkyl, Aryl, substituiertem Alkyl und substituiertem Aryl ausgewählt werden,

wobei $R^4$ aus der Gruppe bestehend aus Hydrogen, Halogen, Alkyl, Hydroxy, Hydroxyalkyl, Nitril und Alkoxy ausgewählt wird, und wobei $R^{4'}$ aus der Gruppe bestehend aus Hydrogen und Halogen ausgewählt wird.

**2.** Eine polymerisierbare Verbindung gemäß Anspruch 1, wobei die polymerisierbare Verbindung einen Monomer-Bestandteil umfasst.

**3.** Eine polymerisierbare Verbindung gemäß Anspruch 1 oder 2, wobei der photochrome Farbstoffmonomer die Formel I hat:

$$(PC)_q\text{-}(L(R)_n)_m \qquad I$$

wobei
PC ein photochromer Rest ist,
L eine Bindungs- oder Verbindungsgruppe ist,
R die Oligomergruppe gemäß Anspruch 1 ist,
m und n unabhängig ausgewählte ganze Zahlen von 1 bis 3 sind,
q 1 oder 2 ist,
und
wobei mindestens ein Oligomer R mindestens eine Gruppe umfasst, die mit der Monomerverbindung während des Aushärtens der polymerisierbaren Verbindung reagiert.

**4.** Eine polymerisierbare Verbindung gemäß Anspruch 1 oder 2, wobei die reaktionsfähige Gruppe aus der Gruppe bestehend aus Amino, Alkylamino (einschließlich Mono- und Dialkylamino), Halo Hydroxyl, Thio, Mercapto, Epoxy, Carbamat, Alkylhalo, ungesättigten Gruppen (wie z.B. Acryloyl, Methacryloyl, Acryloyloxy, Allylallyloxy und Methacryloyloxy), Maleimiden, der Gruppe mit der Formel $-SiX^1X^2X^3$, wobei $X^1$, $X^2$ und $X^3$ unabhängig ausgewählt werden aus der Gruppe bestehend aus Hydrogen, Halogen, Hydrocarbyl und Hydrocarbyloxy und wobei mindestens eines der Elemente $X^1$, $X^2$ und $X^3$ aus Hydrogen, Halogen und Hydrocarbyloxy ausgewählt wird, Dithioester (-S-C=S-R), Trithiocarbonat (-S-C=S-S-R); Dithiocarbamat (-S-C=S-NRR), Xanthan (-S-C=S-O-R), Carbonsäuren, Carbonestem, und $C_1$ bis $C_6$ substituiert mit einer Gruppe, ausgewählt aus Hydroxy, Thio, Amino, Alkylamino, Carboxyl, ($C_1$ bis $C_6$ Alkoxy)Carboxyl, Acryloyl, Methacryloyl, Acryloyloxy und Methacryloyloxy.

**5.** Eine polymerisierbare Verbindung gemäß Anspruch 3, wobei die mindestens eine reaktionsfähige Gruppe eine radikalverkappte Radikalgruppe umfasst, die unter Aktivierungsbedingungen reversibel von der Verbindung abgespaltet werden kann, so dass ein reaktionsfähiges Radikal während des Aushärtens der Verbindung zur Verfügung steht.

**6.** Eine polymerisierbare Verbindung gemäß Anspruch 5, wobei das Oligomer eine reaktionsfähige Gruppe umfasst, die aus der Gruppe bestehend aus Dithioestern (-S-C=S-R), Trithiocarbonaten (-S-C=S-S-R), Dithiocarbamaten (-S-C=S-NRR), Xanthaten (-S-C=S-O-R), Carbonsäuren, Cabonestem und Nitroxiden ausgewählt wurde.

**7.** Eine polymerisierbare Verbindung gemäß Anspruch 3, wobei mindestens eines der Oligomere R eine reaktionsfähige Endgruppe umfasst.

**8.** Eine polymerisierbare Verbindung gemäß Anspruch 3, wobei die mindestens eine reaktionsfähige Grupppe eine ungesättigte Endgruppe aus der Gruppe bestehend aus (Meth)Acryloyl, (Meth)Acryloyloxy, Allyl und Allyloxy ist.

**9.** Eine polymerisierbare Verbindung gemäß Anspruch 1 oder Anspruch 2, wobei das Oligomer mindestens 3 monomere Bausteine aus der Gruppe bestehend aus Di-($C_1$ bis $C_6$)Alkylsiloxan-Monomer-Bausteinen, $C_1$ bis $C_6$ Alkylacrylat und $C_1$ bis $C_6$ Alkylmethacrylat-Monomer-Bausteinen umfasst.

**10.** Eine polymerisierbare Verbindung gemäß Anspruch 1 oder 2, wobei das Oligomer mindestens 5 Monomer-Bausteine aus der Gruppe bestehend aus Alkylenyloxy, $C_1$ bis $C_6$ Alkylacrylat, $C_1$ bis $C_6$ Alkylmethacrulat und halogeniertem $C_1$ bis $C_6$ Alkylacrylat oder $C_1$ bis $C_6$ Alkylmethacrylaten beinhaltet.

**11.** Eine polymerisierbare Verbindung gemäß Anspruch 1 oder 2, wobei das mindestens eine Oligomer aus Gruppen der Formel II ausgewählt wird:

$$-(X)_p(R^1)_q - X^1R^2 \qquad II$$

wobei
X aus Sauerstoff Schwefel Amino, substituiertem Amino und $C_1$ - $C_4$ Alkylen ausgewählt wird,
$X^1$ eine Bindungs- oder Anlagerungsgruppe für eine oder mehrere reaktionsfähige Gruppen ist,
p gleich 0 oder 1 ist,
q die Anzahl von Monomer-Bausteinen ist und mindestens 3 beträgt,
$R^1$, die gleich oder unterschiedlich sein können, aus der Gruppe bestehend aus substituiertem $C_2$ bis $C_4$ Alkylen der Formel III, gemäß Anspruch 1 definiert ist, und Di($C_1$ bis $C_{10}$)Hydrocarbylsiloxan ausgewählt werden, und
$R^2$ aus der Gruppe bestehend aus Amino, Alkylamino (einschließlich Mono- und Di-Alkylamino), Halo Hydroxyl,

Thio, Mercapto, Epoxy, Carbamat, Alkylhalo, ungesättigten Gruppen (wie z.B. Acryloyl, Methacryloyl, Acryloyloxy, Allylallyloxy und Methacryloyloxy), Maleimiden, der Gruppe mit der Formel $-SiX^1X^2X^3$, wobei $X^1$, $X^2$ und $X^3$ unabhängig ausgewählt werden aus der Gruppe bestehend aus Hydrogen, Halogen, Hydrocarbyl und Hydrocarbyloxy und wobei mindestens eines der Elemente $X^1$, $X^2$ und $X^3$ aus Hydrogen, Halogen und Hydrocarbyloxy ausgewählt wird, Dithioester (-S-C=S-R), Trithiocarbonat (-S-C=S-S-R); Dithiocarbamat (-S-C=S-NRR), Xanthan (-S-C=S-O-R), Carbonsäuren, Carbonestern, und $C_1$ bis $C_6$ substituiert mit einer Gruppe aus Hydroxy, Thio, Amino, Alkylamino, Carboxyl, ($C_1$ bis $C_6$ Alkoxy)Carboxyl, Acryloyl, Methacryloyl, Acryloyloxy und Methacryloyloxy ausgewählt wird.

**12.** Eine polymerisierbare Verbindung gemäß Anspruch 1, wobei der Monomer-Baustein aus Formel III ein Oligomer bildet, welches ein Blockcopolymer ist.

**13.** Eine polymerisierbare Verbindung gemäß Anspruch 12, wobei das Oligomer eine Gruppe der Formel

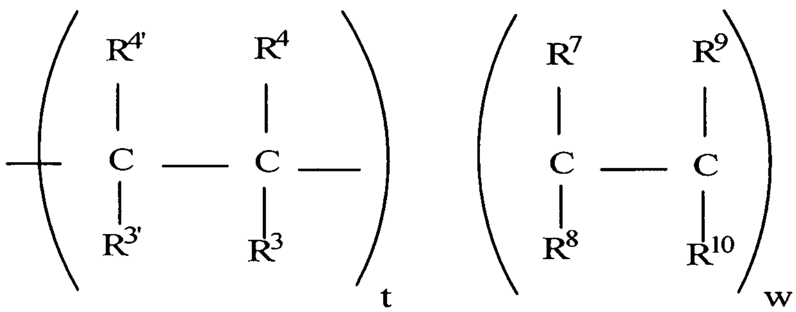

V

umfasst, wobei $R^3$, $R^{3'}$, $R^4$ und $R^{4'}$ gemäß Anspruch 1 definiert sind, $R^7$, $R^8$, $R^9$ und $R^{10}$ unabhängig aus der Gruppe bestehend aus Hydrogen, Halogen, Alkyl und Haloalkyl ausgewählt werden, t eine Zahl von 2 bis 200 ist, w eine Zahl von 0 bis 500 ist und wobei die Bausteine als Blöcke oder willkürlich verteilt vorliegen können.

**14.** Eine polymerisierbare Verbindung gemäß Anspruch 3, wobei das Oligomer R aus den Gruppen der folgenden Formeln (i) bis (iv) ausgewählt wird:

(i)

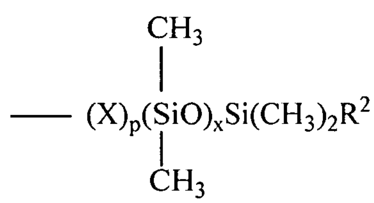

(ii)

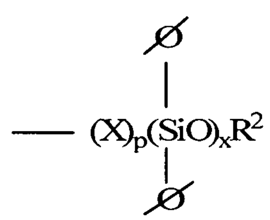

wobei Ø Alkyl oder Aryl ist und mindestens einen Anteil an Arylgruppen enthält, und

(iii) 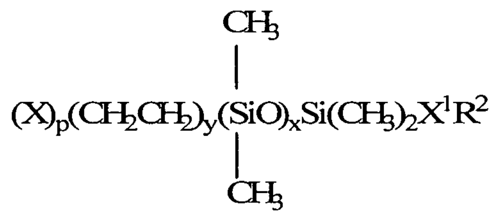

(iv) 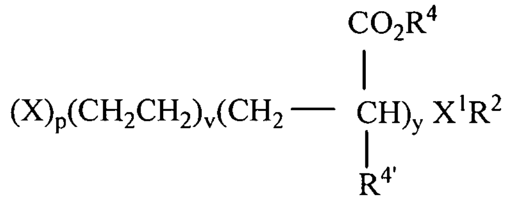

wobei X und $R^2$, $R^4$, $R^{4'}$ und p vorstehend definiert wurden x, v und y die Anzahlen der sich wiederholenden Bausteine sind und wobei mindestens eine Oligomergruppe vorhanden ist, wobei die Anzahl der Monomer-Bausteine (x oder y+v in den obigen Beispielen) mindestens 5 ist, und
wobei die Monomer-Bausteine willkürlich verteilt sind oder in Blockform vorliegen.

**15.** Eine polymerisierbare Verbindung gemäß Anspruch 1 oder 2, wobei das Farbstoffmonomer mindestens eines aus der Gruppe bestehend aus den Formeln VIa bis Vif umfasst:

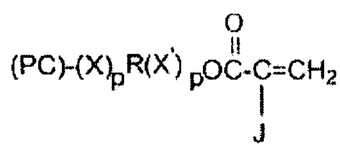 VIa

$(PCF(X)_pR(X')_p\text{-}CH{=}CH_2$ VIb

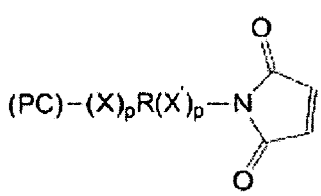 VIc

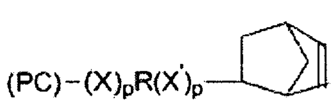 VId

$(PC)\text{-}(X)_pR(X')_p(YH)_w$ VIe

$(PC)\text{-}X_pR(X')_p(NR'R'')_w$ VIf

wobei

X eine Verbindungsgruppe für das Oligomer ist,
X' eine Bindungs- oder Anlagerungsgruppe für die eine mehrere reaktionsfähigen Gruppen ist und aus der Gruppe bestehend aus $C_1$ bis $C_4$ Alkylenen ausgewählt wird,
wo Y Sauerstoff oder Schwefel ist,
w die Anzahl von Hydroxyl- oder Thiol-Gruppen am Ende des Oligomers ist und 1 bis 3 beträgt,
p unabhängig aus 0 und 1 ausgewählt wird,
PC ein photochromer Rest ist,
J Hydrogen oder $C_1$ bis $C_4$ Alkyl ist,
R ein Oligomer ist,
R' Hydrogen, $C_1$ bis $C_4$ Alkyl oder substituiertes ($C_1$ bis $C_6$) Alkyl ist
und
R" Hydrogen, ($C_1$ bis $C_6$) Alkyl oder substituiertes ($C_1$ bis $C_6$) Alkyl ist.

**16.** Eine polymerisierbare Verbindung gemäß Anspruch 3, wobei das Oligomer R mithilfe einer Koppelgruppe mit einer der Formeln gemäß VI-Ia bis VIIp an den photochromen Rest (PC) gekoppelt ist:

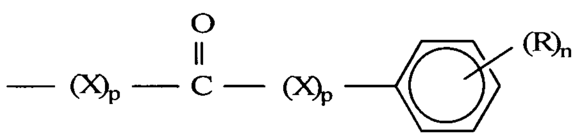

VIIa

wobei n eine Zahl von 1 bis 3 ist,

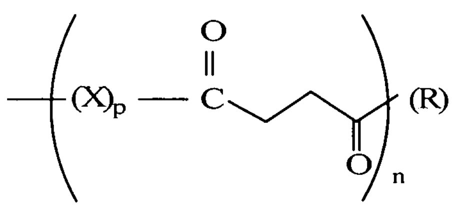

VIIb

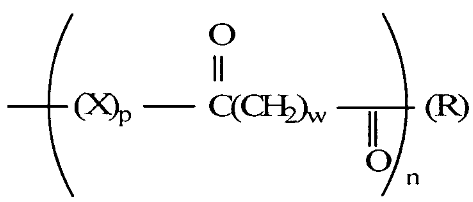

VIIc

$-(X)_p(CH_2)_nCHR^{11}(R)$ VIId

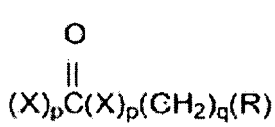

VIIe

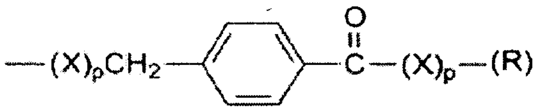

VIIf

$-(X)_p(C_2$ to $C_6$ alkylene$)$ $-(X)_p$ $-(R)$ VIIg

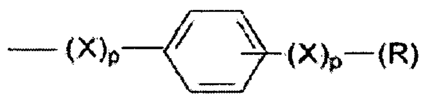

VIIh

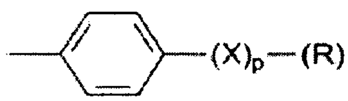

VIIi

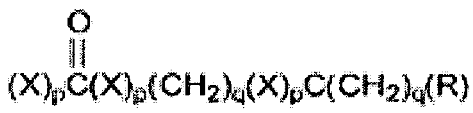

VIIj

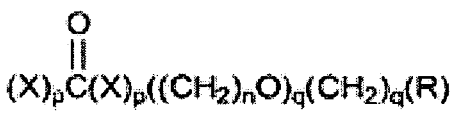

VIIk

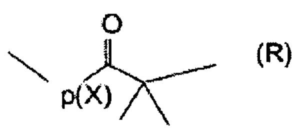

VIIl

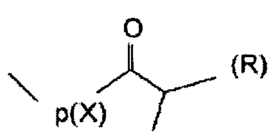

VIIm

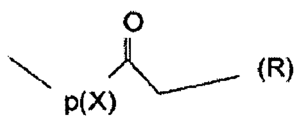

VIIn

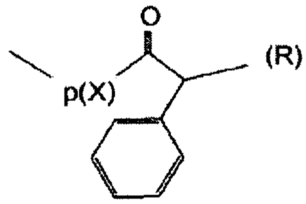

VIIo

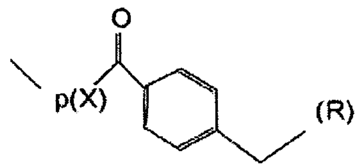

VIIp

wobei in der Formel VIIa bis VIIp
X, das gleich oder unterschiedlich sein kann, so vorliegt wir vorstehend definiert,
$R^{11}$ aus der Gruppe bestehend aus Hydroxy, Alkoxy, Amino und substituiertem Amino wie z.B. Alkylamino ausgewählt wird,
n eine ganze Zahl von 1 bis 3 ist,
w eine ganze Zahl von 1 bis 4 ist,
q eine ganze Zahl von 0 bis 15 ist, p, das gleich oder ähnlich sein kann, wenn es mehr als eins gibt, 0 oder 1 beträgt, und
(R) das Radial für die Anbindung des Oligomers R zeigt.

**17.** Eine polymerisierbare Verbindung gemäß Anspruch 2, wobei der Monomer-Baustein mindestens ein Vernetzungsmonomer umfasst.

**18.** Eine polymerisierbare Verbindung gemäß Anspruch 2, wobei das resultierende Polymer mindestens eines aus der Gruppe bestehend aus Polyester, Urethanen, Polycarbonaten, Polyamiden, Epoxiden und Thiolenpolymeren umfasst.

**19.** Eine polymerisierbare Verbindung gemäß Anspruch 2, wobei die polymerisierbare Matrix Monomere umfasst, die aus der Gruppe bestehend aus Polyol(Allylcarbonat)Monomeren, multifunktionalen Acrylat- und Methacrylatmonomeren, Acrylaten, Alkylacrylaten, Celluloseacetat, Cellulosetriacetat, Celluloseacetatpropionat, Nitrocellulose-Celluloseacetat, Cellulosetriacetat, Celluloseacetatpropionat, Nitrocellulose-Celluloseacetatbutyrat, Poly(vinylacetat), Vinylalkohol, Vinylchlorid, Vinylidenchlorid, Polyurethanen, Polycarbonaten, Poly(ethylen-terephthalat), Polystyren, Copoly(styren-methylmethacrylat), Copoly(styren-acrylateonitril), Poly(vinylbutryal) sowie Homopolymere und Copolymere aus Diacyliden Pentaerythriol, insbesondere Copolymere mit Polyol(allylcarbonat) Monomeren.

**20.** Eine polymerisierbare Verbindung gemäß Anspruch 3, wobei der photochrome Rest (PC) aus der Gruppe bestehend aus Chromenen, Spiropyranen, Spirooxazinen, Fulgiden, Fulgimiden, Anilen, Perimidinspirocyclohexadienonen, Stilbenen, Thioindigoiden, Azofarbstoffen and Diaryltethenen sowie Diarylperfluorcyciopentenen ausgewählt wird.

**21.** Eine polymerisierbare Verbindung gemäß Anspruch 3, wobei der photochrome Rest (PC) aus der Gruppe bestehend aus Naphthopyranen, Benzopyranen, Indenonaphthopyranen, Phenanthropyranen, Spiro(benzindolin)Naphthopyranen, Spiro(indolin)Benzopyranen, Spiro(indolin)Naphthopyranen, Spiroquinopyranen, Spiro(indolin)Pyranen, Spiro(indolin)Naphthoxazinen, Spiro(indolin)Pyridobenzoaxinen, Spiro(benzindolin)Pyridobenzoxazinen, Spiro(benzindolin)Naphthoxazinen,Spiro(indolin)Benzoxazinen, Fulgiden und Fulgimiden ausgewählt wird.

**22.** Die polymerisierbare Verbindung gemäß Anspruch 4, wobei der Monomer-Bestandteil Diethylenglycol-Bis(allylcarbonat) umfasst.

**23.** Eine polymerisierbare Verbindung gemäß Anspruch 1, wobei das Monomer mindestens eines aus der Gruppe bestehend aus Allyl-Diglycol-Carbonat-Monomer(en), Monomere bildendende Polycarbonate, Monomere für die Bildung von Polyurea-Urethanen sowie polyfunktionale(n) Isocyanat(en) und Polythiol oder Polyepisulfid-Monomer(en) umfasst.

**24.** Eine polymerisierbare Verbindung gemäß Anspruch 1 oder 2, wobei das photochrome Gemisch eine oder mehrere reaktionsfähige Endgruppen umfassend aktive Hydrogengruppen (wie z.B. Hydroxyl, Amin und Alkylamin) umfasst, und die Monomerverbindung ein Polyisocyanat- oder Epoxid-Vernetzungs-Monomer umfasst.

**25.** Eine polymerisierbare Verbindung gemäß Anspruch 14, die ein Polymer bildet, das eine Tg von mindestens 70˚C beim Aushärten aufweist.

**26.** Ein photochromer Gegenstand gemäß Anspruch 26 mit einer Tg von mindestens 50˚C, umfassend eine Polymermatrix aus einer polymerisierbaren Verbindung gemäß Anspruch 1.

**27.** Ein photochromer Gegenstand gemäß Anspruch 26, wobei der photochrome Rest (PC) ausgewählt wird aus der Gruppe bestehend aus:

(a) Spirooxazinen der Formel III

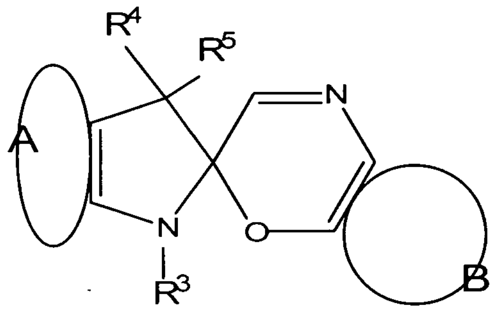

III

In der allgemeinen Formel können $R^3$, $R^4$ und $R^5$ gleich oder unterschiedlich sein und sind jeweils eine Alkylgruppe, eine Cycloalkylgruppe, eine Cycloarylalkylgruppe, eine Alkoxygruppe, eine Alkylenoxyalkylgruppe, eine Alkoxycarbonylgruppe, ein Cyano, ein Alkoxycarbonylalkyl, eine Arylgruppe, eine Arylalkylgruppe, eine Aryloxygruppe, eine Alkylenthioalkylgruppe, eine Acylgruppe, eine Acyloxygruppe oder eine Aminogruppe, $R^4$ und $R^5$ können zusammen einen Ring bilden, und $R^3$, $R^4$ und $R^5$ können wahlweise jeweils einen Substituenten aufweisen;

(b) Chromene der Formel XX

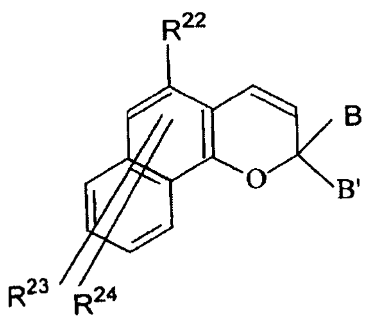

XX

wobei B und B' wahlweise substituiertes Phenylaryl und Heteroaryl sind, und $R^{22}$, $R^{23}$ und $R^{24}$ unabhängig ausgewählt werden aus Hydrogen, Halogen, $C_1$ bis $C_3$ Alkyl, der Gruppe $L(R)_n$ und der Gruppe mit der Formel COW, wobei W gleich $OR^{25}$, $NR^{26}R^{27}$, Piperidino oder Morpholino ist, wobei $R^{25}$ aus der Gruppe bestehend aus $C_1$ bis $C_6$ Alkyl, Phenyl, ($C_1$ bis $C_6$ Alkyl)Phenyl, $C_1$ bis $C_6$ Alkoxyphenyl, Phenyl $C_1$ bis $C_6$ Alkyl, ($C_1$ bis $C_6$ Alkoxy)Phenyl, $C_1$ bis $C_6$ Alkoxy $C_2$ bis $C_4$ Alkyl und der Gruppe $L(R)_n$ ausgewählt wird; $R^{26}$ und $R^{27}$ werden jeweils aus der Gruppe bestehend aus $C_1$ bis $C_6$ Alkyl, $C_5$ bis $C_7$ Cycloalkyl, Phenyl, Phenyl substituiert mit einer oder zwei Gruppen, die aus $C_1$ bis $C_6$ Alkyl und $C_1$ bis $C_6$ Alkoxy sowie der Gruppe $L(R)_n$

ausgewählt werden;
$R^{22}$ und $R^{23}$ können wahlweise einen Ring aus 5 oder 6 Ringmitgliedem bilden, der wahlweise mit einem wahlweise substituierten Benzen verschmolzen ist und wobei mindestens einer der Substituenten, die ausgewählt wurden aus der Gruppe von Substituenten bestehend aus B und B', $R^{22}$, $R^{23}$, $R^{24}$, $R^{25}$, $R^{26}$ und $R^{27}$, die Gruppe $L(R)_n$ ist;

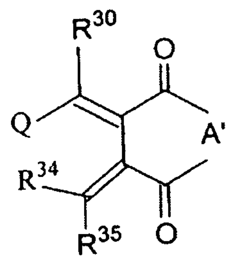

XXX

XXX Fulgide und Fulgimide der Formel XXX:
wobei
Q aus der Gruppe bestehend aus wahlweise substituiertem Aromaten, wahlweise substituiertem Heteroaromaten (wobei dieser Aromat/Heteroaromat mono- oder polycyclisch aromatisch/heteroaromatisch sein kann);
$R^{30}$ aus der Gruppe bestehend aus einem $C_1$ bis $C_4$ Alkyl, $C_1$ bis $C_4$ Alkoxyphenyl, phenoxymono- und di($C_1$ - $C_4$) alkyl-substituiertem Phenyl oder Phen($C_1$ bis $C_4$) Alkyl ausgewählt wird;
A' aus der Gruppe bestehend aus Sauerstoff oder =N-$R^{36}$, wobei $R^{36}$ $C_1$-$C_4$ Alkyl oder wahlweise substituiertes Phenyl ist;
$R^{34}$ und $R^{35}$ unabhängig ein $C_1$ bis $C_4$ Alkyl, Phenyl oder Phen($C_1$ bis $C_4$) Alkyl darstellen, oder es handelt sich bei einem von $R^{34}$ oder $R^{35}$ um Wasserstoff und bei dem anderen um eines aus den oben genannten Gruppen, oder $R^{34}R^{35}$= stellt eine Adamantyliden-Gruppe dar;
wobei mindestens eines von Q, $R^{30}$, $R^{34}$, $R^{35}$ und $R^{36}$ die Gruppe $L(R)_n$ umfasst;
Azofarbstoffe mit der Formel XL

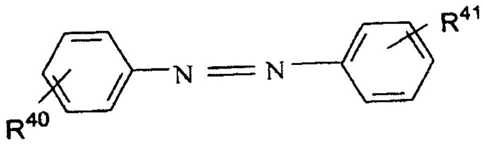

XL

wobei
$R^{40}$ und $R^{41}$ unabhängig aus der Gruppe ausgewählt werden, die aus Wasserstoff, $C_1$ bis $C_6$ Alkyl, $C_1$ bis $C_6$ Alkoxy, -$NR^{42}R^{43}$, wobei $R^{42}$ und $R^{43}$ wie $R^{26}$ und $R^{27}$ definiert sind, Aryl (z.B. Phenyl), Aryl substituiert mit einem oder mehreren Substituenten, die aus $C_1$ bis $C_6$ Alkyl und $C_1$ bis $C_6$ Alkoxy ausgewählt wurden, substituiertes $C_1$ bis $C_6$ Alkyl, wobei der Substituent aus Aryl und $C_1$ bis $C_6$ Alkoxy ausgewählt wurde, substituiertes $C_1$ bis $C_6$ Alkoxy, wobei der Substituent aus $C_1$ bis $C_6$ Alkoxyaryl und Aryloxy ausgewählt wurde, sowie Diarylperfluorcyclopentene mit der folgenden Formel:

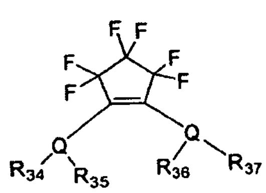

XXXV

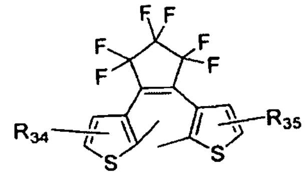

XXXVI

wobei
Substituierter Aromat, wahlweise substituierte Heteroaromat (wobei dieser Aromat/Heteroaromat mono- oder polycyclisch aromatisch/heteroaromatisch sein kann);
$R^{34}$, $R^{35}$, $R^{36}$, $R^{37}$ unabhängig ein $C_1$ bis $C_4$ Alkyl, Phenyl oder Phen($C_1$ bis $C_4$) Alkyl darstellen, oder es sich bei einem von $R^{34}$, $R^{35}$, $R^{36}$, $R^{37}$ um Wasserstoff und bei den anderen um eine der oben genannten Gruppen handelt; und wobei mindestens eines von Q, $R^{34}$, $R^{35}$, $R^{36}$ und $R^{37}$ die Gruppe $L(R)_n$ umfasst.

**28.** Ein photochromer Gegenstand gemäß Anspruch 26, wobei das Oligomer R aus den Gruppen der folgenden Formeln (i) bis (vii) ausgewählt wird:

(ii)

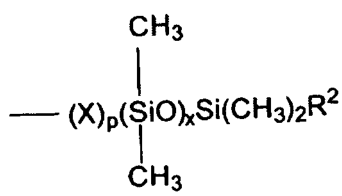

(iii)

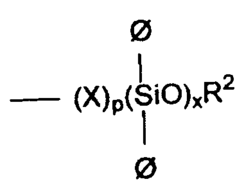

wobei Ø Alkyl oder Aryl ist und mindestens einen Anteil an Arylgruppen enthält;
(vi)

$$-X_p(CF_2CF_2O)_x-(CF_2)_nR^2$$

(v)

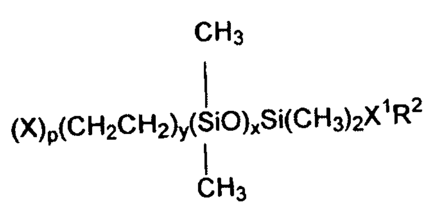

(vi)

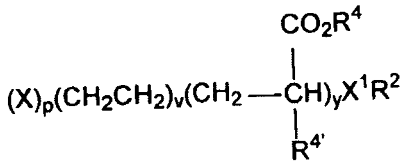

wobei X, X' und $R^2$ und p vorstehend definiert wurden und x, v und y die Anzahl der sich wiederholenden Bausteine ist, und Alkyl $C_1$ bis $C_{20}$ Alkyl ist, vorzugsweise $C_1$ bis $C_{10}$ Alkyl wie z.B. Methyl, Ethyl, Propyl, Butyl, Pentyl oder Hexyl.

**29.** Ein photochromer Gegenstand gemäß Anspruch 28, wobei die Anzahl an Monomer-Bausteinen (x oder y+v in den obigen Beispielen) mindestens 5 beträgt.

**30.** Ein Verfahren zur Herstellung eines photochromen Gegenstandes, umfassend:

(a) Bildung einer polymerisierbaren Verbindung gemäß Anspruch 2,
(b) Gießen der polymerisierbaren Verbindung oder Auftragen als Schicht auf ein Substrat, und
(c) Polymerisieren der polymerisierbaren Verbindung zur Schaffung einer Polymermatrix mit einem photochromen Monomer-Baustein umfassend einen photochromen Rest, der über ein Oligomer kovalent an das Matrix-Polymer gebunden ist, wobei das Oligomer mindestens 7 Monomer-Bausteine aus der Gruppe bestehend aus Alkylenyloxy, Fluoralkylenyloxy und Di-(hydrocarbyl)Siloxan umfasst.

**Revendications**

**1.** Composition polymérisable pour former un article photochrome dont la température de transition vitreuse est d'au moins 50°C lors de sa cuisson, la composition comprenant :

(a) une composition polymérisable comprenant un composant monomère ou une résine formée à partir de celui-ci ; et
(b) un monomère colorant photochrome comprenant un groupe caractéristique photochrome et au moins un groupe oligomérique ayant au moins un groupe réagissant avec le composant monomère durant ou après la cuisson où le groupe oligomère comprend au moins trois unités monomères sélectionnées parmi du siloxane et de l'alcylène substitué répondant à la formule III

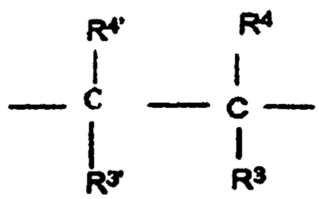

III

où
$R^3$ est sélectionné du groupe composé d'hydroxy, d'alcoxy, d'aryloxy, hétérocyclique, de carboxyle, de nitrile, d'alcoxycarbonyle, d'alcoxycarbonyle substitué, de carbamoyle, de N-carbamoyle, de N,N-dialkyl-carbamoyle, de carbaniloyle, d'alkylphénylaminocarbonyle, d'alcoxyphénylaminocarbonyle, d'acyle, d'acyle substitué et les groupes répondant à la formule :-

-L'-$(O)_q$-$(Z\text{-}O)_p$-ZY';

and

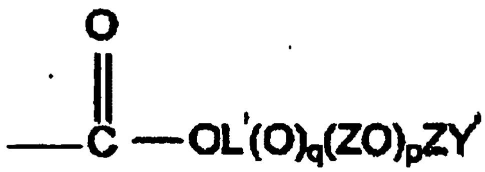

où

p va de 1 à 20 et de préférence 2 à 15, q est 0 ou 1, Z est sélectionné du groupe composé d'alcylène en $C_2$-$C_4$, de dialkylsilyle, de diarylsilyle, de diaryloxysilyle ; L'est une liaison ou un groupe de liaison tel qu'un alcylène en $C_2$ à $C_6$, , un aryle, un alkaryle et un aralkyle ; et Y' est un groupe terminal sélectionné du groupe composé d'hydrogène, d'alkyle, d'hydroxyle et d'alcoxy, d'alcoxyalcoxy, d'hydroxyalcoxy et d'aryloxy, de trisilane(alkyle en $C_1$ à $C_6$), de diphénylsilane (alkyle en $C_1$ à $C_6$);

$R^{3'}$ est l'hydrogène et $R^3$ et $R^{3'}$ peuvent former ensemble un groupe répondant à la formule

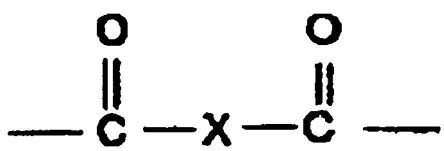

où

X est sélectionné du groupe composé d'oxygène et du groupe $NR^7R^8$ où $R^7$ et $R^8$ sont indépendamment sélectionnés du groupe composé d'hydrogène, d'alkyle, d'aryle, d'alkyle substitué, et d'aryle substitué ;

$R^4$ est sélectionné du groupe composé d'hydrogène, d'halogène, d'alkyle, d'hydroxy, d'hydroxyalkyle, de nitrile et d'alcoxy ; et

$R^{4'}$ est sélectionné du groupe composé d'hydrogène et d'halogène.

**2.** Composition polymérisable selon la revendication 1 dans laquelle la composition polymérisable comprend un composant monomère.

**3.** Composition polymérisable selon la revendication 1 ou la revendication 2 dans laquelle le monomère colorant photochrome est de la formule I :

$$(PC)_q\text{-}(L(R)_n)_m \qquad \text{I}$$

où :

PC est un groupe caractéristique photochrome ;
L est une liaison ou un groupe de liaison ;
R est le groupe oligomérique selon la revendication 1 ;
m et n sont des entiers indépendamment sélectionnés allant de 1 à 3 :
q est 1 ou 2 ;
et
où au moins un oligomère R comprend au moins un groupe qui peut réagir avec la composition de monomère lors de la cuisson de la composition polymérisable.

**4.** Composition polymérisable selon la revendication 1 ou la revendication 2 dans laquelle le groupe réactif est sélectionné du groupe composé d'un gorupe amino ; aminoalkyle (y compris les groupes mono et di-aminoalkyle) ; hydroxyle halogéné; thio ; mercapto ; époxy ; carbamate ; alkyle halogéné ; de groupes insaturés (tel qu'un acryloyle,

méthacryloyle, acryloyloxy, allyloxy d'allyle, et méthacryloyloxy), maléimides ; le groupe de la formule $-SiX^1X^2X^3$ où $X^1$, $X^2$ et $X^3$ sont indépendamment sélectionnés du groupe composé d'hydrogène, d'halogène, d'hydrocarbyle, et d'hydrocarbyloxy et où au moins l'un de $X^1$, de $X^2$ et de $X^3$ est sélectionné parmi l'hydrogène, halogène et un hydrocarbyloxy ; di-thioester (-S-C=S-R) ; tri-thiocarbonate (-S-C=S-S-R) ; di-thiocarbamate (-S-C=S-NRR) ; xanthate (-S-C=S-O-R) ; des acides carboxyliques ; des esters carboxyliques ; et un alkyle en $C_1$ à $C_6$ substitué par un groupe sélectionné parmi un groupe hydroxy, thio, amino, aminoalkyle, carboxyle, (alcoxy en $C_1$ à $C_6$)carboxyle, acryloyle, méthacryloyle, acryloyloxy, méthacryloyloxy.

**5.** Composition polymérisable selon la revendication 3 dans laquelle ledit au moins un groupe réactif comprend un groupe radical couvert par un radical adapté pour être clivé de manière réversible du composé sous des conditions d'activation afin de fournir un radical réactif durant la cuisson de la composition.

**6.** Composition polymérisable selon la revendication 5 dans laquelle l'oligomère comprend un groupe réactif sélectionné du groupe composé de di-thioesters (-S-C=S-R) ; de tri-thiocarbonates (-S-C=S-S-R) ; de di-thiocarbamates (-S-C=S-NRR) ; de xanthates (-S-C=S-O-R); d'acides carboxyliques ; d'esters carboxyliques et nitroxydes.

**7.** Composition polymérisable selon la revendication 3 dans laquelle au moins l'un des oligomères R comprend un groupe réactif terminal.

**8.** Composition polymérisable selon la revendication 3 dans laquelle l'au moins un groupe réactif est un groupe terminal insaturé sélectionné du groupe composé de (méth) acrylole, de (méth) acryloyloxy, d'allyle et d'allyloxy.

**9.** Composition polymérisable selon la revendication 1 ou la revendication 2 dans laquelle l'oligomère comprend au moins 3 unités monomères sélectionnées du groupe composé d'unités monomères de di siloxane (alkyl en $C_1$ à $C_6$) , et d'unités monomères d'acrylate d'alkyle en $C_1$ à $C_6$ et de méthacrylate d'alkyle en $C_1$ à $C_6$.

**10.** Composition polymérisable selon la revendication 1 ou la revendication 2 dans laquelle l'oligomère comporte au moins 5 unités monomères sélectionnées du groupe composé d'alcylènyloxy, d'acrylate d'alkyle en $C_1$ à $C_6$, de méthacrulate d'alkyle en $C_1$ à $C_6$ et d'acrylate d'alkyle en $C_1$ à $C_6$ halogéné ou de méthacrylates d'alkyle en $C_1$ à $C_6$ halogénés.

**11.** Composition polymérisable selon la revendication 1 ou la revendication 2 dans laquelle l'au moins un oligomère est sélectionné des groupes de la formule II :

$$\mathbf{-(X)p\ (R1)q\ -\ X1R2} \qquad \text{II}$$

où
X est sélectionné parmi l'oxygène, le soufre, un amino, un amino substitué et un alcylène en $C_1$-$C_9$ ;
$X^1$ est une liaison ou un groupe d'attachement pour un ou plusieurs groupes réactifs ;
p est 0 ou 1 ;
q est le nombre d'unités monomères et est d'au moins 3 ;
$R^1$ qui peuvent être identiques ou différents sont sélectionnés du groupe composé de :

alcylène en $C_2$ à $C_4$ substitué de la formule III définie selon la revendication 1 et un dihydrocarbylsiloxane en ($C_1$ à $C_{10}$) ; et
$R^2$ est sélectionné du groupe composé d'un groupe amino ; aminoalkyle (y compris mono et di-aminoalkyle) ; d' hydroxyle halogéné ; thio ; mercapto ; époxy ; carbamate ; alkyle halogéné ; de groupes insaturés (tel qu'un acryloyle, méthacryloyle, acryloyloxy, allyloxy d'allyle, et méthacryloyloxy), de maléimides ; le groupe de la formule $-SiX^1X^2X^3$ où $X^1$, $X^2$ et $X^3$ sont indépendamment sélectionnés du groupe composé d'hydrogène, d'halogène, d'hydrocarbyle, et d'hydrocarbyloxy et où au moins l'un de $X^1$, de $X^2$ et de $X^3$ est sélectionné parmi l'hydrogène, halogène et hydrocarbyloxy ; di-thioester (-S-C=S-R) ; tri-thiocarbonate (-S-C=S-S-R) ; di-thiocarbamate (-S-C=S-NRR) ; xanthate (-S-C=S-O-R) ; des acides carboxyliques ; des esters carboxyliques ; et un alkyle en $C_1$ à $C_6$ substitué avec un groupe sélectionné parmi un groupe hydroxy, thio, amino, amino alkyle, carboxyle, (alcoxy en $C_1$ à $C_6$) carboxyle, acryloyle, méthacryloyle, acryloyloxy, et méthacryloyloxy.

**12.** Composition polymérisable selon la revendication 1 dans laquelle l'unité monomère de la formule III forme un oligomère qui est un copolymère à blocs.

**13.** Composition polymérisable selon la revendication 12 dans laquelle l'oligomère comprend un groupe de la formule

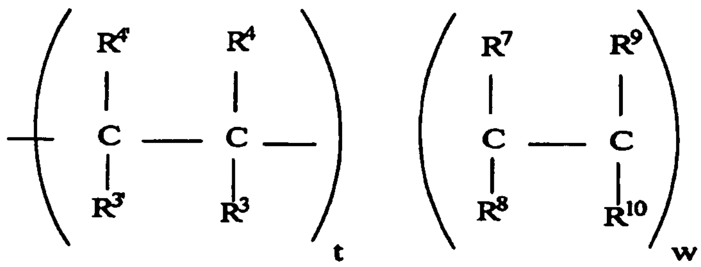

V

où $R^3$ $R^{3'}$, $R^4$ et $R^{4'}$ sont définis selon la revendication 1 ; $R^7$, $R^8$, $R^9$ et $R^{10}$ sont indépendamment sélectionnés du groupe composé d'hydrogène, d'halogène, d'alkyle, et d'haloalkyle ; t est de 2 à 200 ; w est de 0 à 500 et où les unités peuvent être présentes en tant que blocs ou distribuées de manière aléatoire.

**14.** Composition polymérisable selon la revendication 3 dans laquelle l'oligomère R est sélectionné des groupes répondant aux formules (i) à (iv) suivantes :

(i) 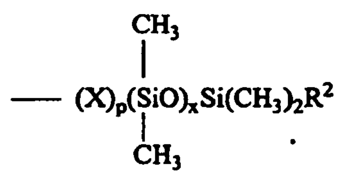

(ii) 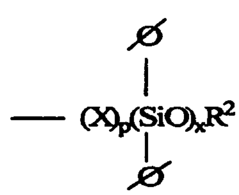

où ø est un alkyle ou un aryle et comporte au moins une partie de groupes aryle ; et

(iii) 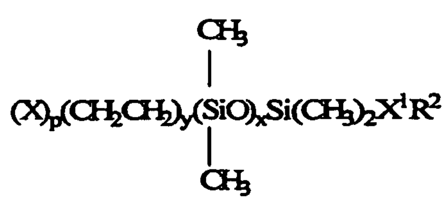

(iv) 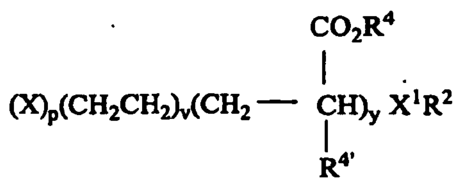

où X et $R^2$, $R^4$, $R^{4'}$ et p sont définis ci-dessus et x, v et y sont le nombre d'unités de répétition, et où au moins un

groupe oligomère est présent où le nombre d'unités monomères (x ou y+v dans les exemples ci-dessus) est d'au moins 5 et où les d'unités monomères sont distribuées de manière aléatoire ou sous forme de blocs.

**15.** Composition polymérisable selon la revendication 1 ou la revendication 2 dans laquelle le monomère colorant comprend au moins l'un sélectionné du groupe consistant en les formules VIa à VIf :

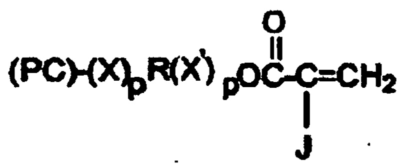

**VIa**

**$(PC)\text{-}(X)_pR(X')_p\text{-}CH{=}CH_2$** **VIb**

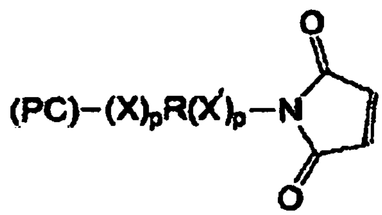

**VIc**

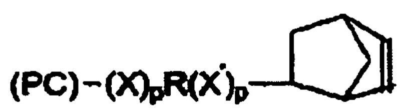

**VId**

**$(PC)\text{-}(X)_pR(X')_p(YH)_w$** **VIe**

**$(PC)\text{-}X_pR(X')_p(NR'R'')_w$** **VIf**

où
X est un groupe de liaison pour l'oligomère ;
X' est une liaison ou un groupe d'attachement pour les groupes réactifs supplémentaires et est sélectionné du groupe composé d'alcylène en $C_1$ à $C_4$ ;
où Y est l'oxygène ou le soufre ;
w est le nombre de groupes hydroxyle ou thiol à l'extrémité terminale de l'oligomère et est de 1 à 3 ;
p est indépendamment sélectionné de 0 à 1 ;
PC est un groupe caractéristique photochrome ;
J est l'hydrogène ou un alkyle en $C_1$ à $C_4$ ;
R est un oligomère ;
R' est l'hydrogène, un alkyle en $C_1$ à $C_6$ ou un alkyle en ($C_1$ à $C_6$) substitué ; et
R'' est l'hydrogène, un alkyle en ($C_1$ à $C_6$) ou un alkyle en ($C_1$ à $C_6$) substitué.

**16.** Composition polymérisable selon la revendication 3 dans laquelle l'oligomère R est lié au groupe caractéristique photochrome (PC) par un groupe liant de l'une quelconque des formules sélectionnées de VIIa à VIIp :

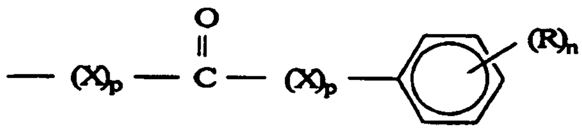

VIIa

où n est de 1 à 3 :

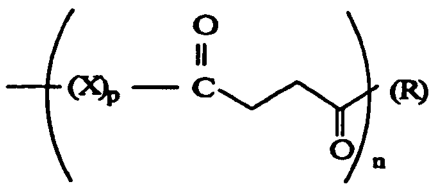

VIIb

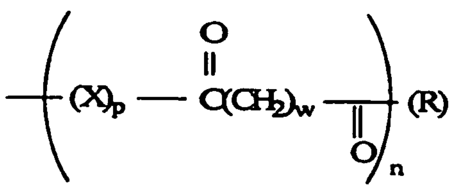

VIIc

-(X)p (CH2)nCHR11 (R) VIId

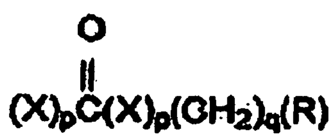

VIIe

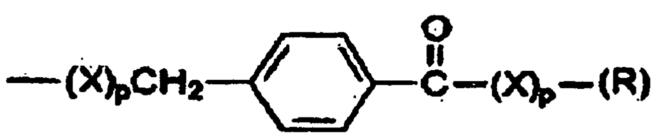

VIIf

-(X)p (C2 to C6 alkylene) -(X)p -(R) VIIg

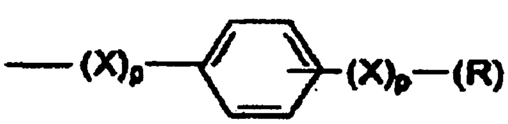

VIIh

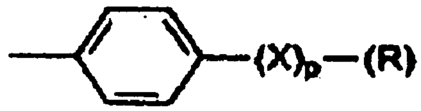

VIIi

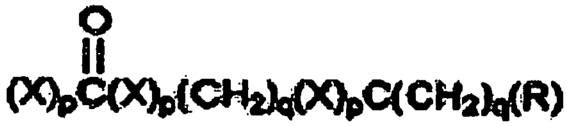

VIIj

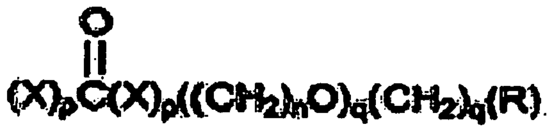

VIIk

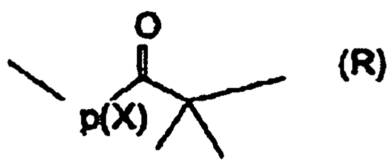

VIIl

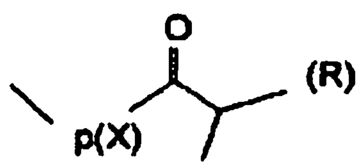

VIIm

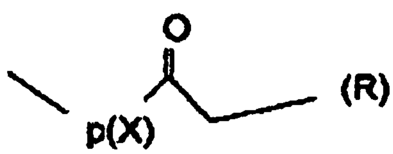

VIIn

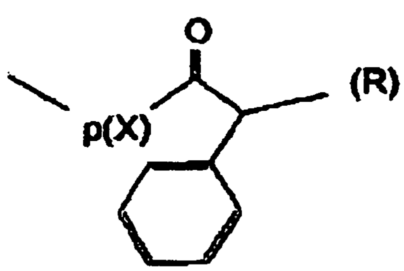

VIIo

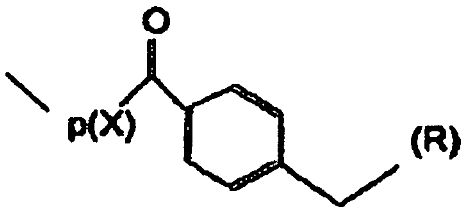

VIIp

où dans la formule VIIa à VIIp :
X qui peut être identique ou différent est tel que défini ci-dessus ;
$R^{11}$ est sélectionné du groupe composé d'hydroxy, d'alcoxy, d'amino et d'amino substitué tel qu'un amino alkyle ;
n est un entier allant de 1 à 3 ;
w est un entier allant de 1 à 4 ;
q est une entier allant de 0 à 15 ;
p qui, lorsqu'il y en a plus d'un, peut être identique ou différent, est de 0 ou 1 ; et
(R) montre le radicale pour l'attachement de l'oligomère R.

**17.** Composition polymérisable selon la revendication 2 dans laquelle le composant monomère comprend au moins un monomère réticulé.

**18.** Composition polymérisable selon la revendication 2 dans laquelle le polymère résultant comprend au moins l'un sélectionné du groupe composé de polyester, d'uréthanes, de polycarbonates, de polyamides, d'époxydes et de polymères de thiolène.

**19.** Composition polymérisable selon la revendication 2 dans laquelle la matrice polymérisable comprend des monomères sélectionnés du groupe composé de monomères de polyol(carbonate d'allyle), de monomères de méthacrylate et d'acrylate multifonctionnels, d'acrylates, d'acrylates d'alkyle, d'acétate de cellulose, de triacétate de cellulose, d'acétate propionate de cellulose, d'acétate butyrate de cellulose et de nitrocellulose, polyacétate de vinyle, d'alcool vinylique, de chlorure de vinyle, de chlorure de vinyldiène, de polyuréthanes, de polycarbonates, de polytéréphtalate d'éthylène, de polystyrène, de copolymère styrène-méthacrylate de méthyle, de copolymère styrène-acrylonitrile, de poly(butyral de vinyle), et d'homopolymères et de copolymères de pentaérythriol de diacylidène, de copolymères particuliers avec des monomères de polyol(carbonate d'allyle).

**20.** Composition polymérisable selon la revendication 3 dans laquelle le groupe caractéristique photochrome (PC) est sélectionné du groupe composé de chromènes, de spyropiranes, de spiro-oxazines, de fulgides, de fulgimides, d'anils, de périmidinespirocyclohexadiènones, de stibènes, de thioindigoïdes, de colorants azoïques et de diaryléthylène et de diarylperfluorocyclopentène.

**21.** Composition polymérisable selon la revendication 3 dans laquelle le groupe caractéristique photochrome (PC) est sélectionné du groupe composé de naphtopyranes, de benzopyranes, d'indénonaphthopyranes, de phénanthropyranes, de spiro (benzindoline) naphtopyranes, de spiro(indoline)benzopyranes, de spiro(indoline)naphtopyranes, de spiroquinopyranes, de spiro(indoline)pyranes, de spiro(indoline)naphthoxazines, de spiro(indoline) pyridobenzoxazines, de spiro(benzindoline)pyridobenzoxazines, de spiro(benzindoline)naphthoxazines, de spiro(indoline) benzoxazines, de fulgides et de fulgimides.

**22.** Composition polymérisable de la revendication 4 dans laquelle le composant monomère comprend du diéthylène glycol bis(carbonate d'allyle).

**23.** Composition polymérisable selon la revendication 1 dans laquelle le monomère comprend au moins l'un sélectionné du groupe composé de monomère(s) allyle diglycol carbonate, de monomères formant des polycarbonates, de monomères pour former des polyurée uréthanes et des isocyanate(s) polyfonctionnel(s) et des monomère(s) de polyépisulfure ou de polythiol.

**24.** Composition polymérisable selon la revendication 1 ou la revendication 2 dans laquelle le composé photochrome comprend un ou plusieurs groupes terminaux réactifs comprenant des groupes ayant un hydrogène actif (tel qu'un hydroxyle, une amine et un alkylamine) et la composition de monomère comprend un polyisocyanate ou un monomère réticulé époxyde.

**25.** Composition polymérisable selon la revendication 14 qui forme un polymère ayant une Tg d'au moins 70°C lors de la cuisson.

**26.** Article photochrome ayant une Tg d'au moins 50°C comprenant une matrice polymérique formée à partir d'une composition polymérisable selon la revendication 1.

**27.** Article photochrome selon la revendication 26 dans lequel le groupe caractéristique photochrome (PC) est sélectionné du groupe composé de :

(a) spiro-oxazines de la formule III

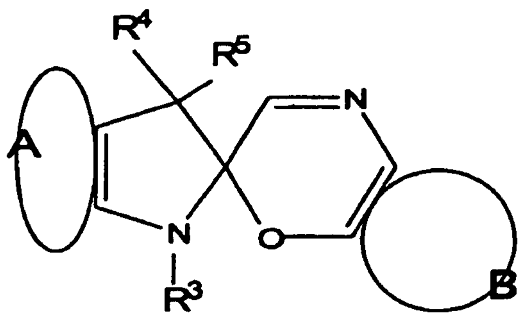

III

dans la formule générale III, $R^3$, $R^4$ et $R^5$ peuvent être identiques ou différents et sont chacun un groupe alkyle, un groupe cycloalkyle, un groupe cycloarylalkyle, un groupe alcoxy, un groupe alkylèneoxyalkyle, un groupe alcoxycarbonyle, un cyano, un alcoxycarbonylalkyle, un groupe aryle, un groupe arylalkyle, un groupe aryloxy, un groupe alkylènethioalkyle, un groupe acyle, un groupe acyloxy ou un groupe amino, $R^4$ et $R^5$ peuvent former ensemble un cycle, et $R^3$, $R^4$ et $R^5$ peuvent éventuellement avoir chacun un substituant(s) ;
(c) chromènes de la formule XX

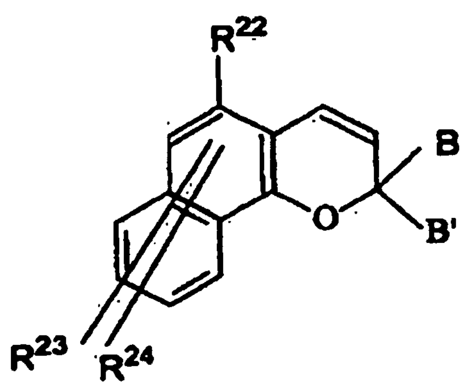

XX

où
B et B' sont éventuellement un phénylaryle substitué et un hétéroaryle; et
$R^{22}$, $R^{23}$ et $R^{24}$ sont indépendamment sélectionnés parmi l'hydrogène ; un halogène ; un alkyle en $C_1$ à $C_3$ ; le groupe $L(R)_n$ ; et le groupe de la formule COW où W est $OR^{25}$, $NR^{26}R^{27}$,
pipéridino ou morpholino où $R^{25}$ est sélectionné du groupe composé d'alkyle en $C_1$ à $C_6$, de phényle, de phényle (alkyle en $C_1$ à $C_6$), d'alcoxyphényle en $C_1$ à $C_6$, de phényle (alcoxy en $C_1$ à $C_6$) alkyle en $C_1$ à $C_6$ phényle, d'alkyle en $C_2$ à $C_4$ alcoxy en $C_1$ à $C_6$ et le groupe $L(R)_n$; $R^{26}$ et $R^{27}$ sont chacun sélectionnés du groupe composé d'alkyle en $C_1$ à $C_6$, de cycloalkyle en $C_5$ à $C_7$, de phényle, de phényle substitué avec un ou deux groupes sélectionnés parmi un alkyle en $C_1$ à $C_6$ et un alcoxy en $C_1$ à $C_6$ et le groupe $L(R)_n$ ; $R^{22}$ et $R^{23}$ peuvent éventuellement former

un cycle de 5 à 6 éléments de cycle éventuellement fusionnés avec un benzène éventuellement substitué et où au moins l'un des substituants sélectionnés du groupe de substituants composé de B et B', $R^{22}$, $R^{23}$, $R^{24}$, $R^{25}$, $R^{26}$ et $R^{27}$ est le groupe $L(R)_n$ ;

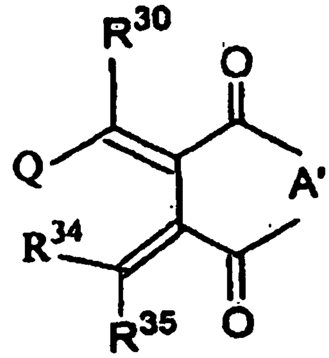

XXX

XXX fulgides et fulgimides de la formule XX :

où

Q est sélectionné du groupe composé d'aromatique éventuellement substitué, d'hétéroaromatique éventuellement substitué (où ledit aromatique/hétéroaromatique peut être un aromatique/hétéroaromatique mono ou polycyclique) ;

$R^{30}$ est sélectionné du groupe composé d'un alkyle en $C_1$ à $C_4$, d'un alcoxy phényle en $C_1$ à $C_4$, d'un phényle substitué par un phénoxy mono- et di alkyle en ($C_1$-$C_4$) ou un phénalkyle en ($C_1$ à $C_4$) ;

A' est sélectionné du groupe composé d'oxygène ou de =N-$R^{36}$, dans lequel $R^{36}$ est un alkyle en $C_1$-$C_4$ ou un phényle éventuellement substitué ;

$R^{34}$ et $R^{35}$ représente indépendamment un alkyle en $C_1$ à $C_4$, un phényle ou un phénalkyle en ($C_1$ à $C_4$) ou l'un de $R^{34}$ et de $R^{35}$ est l'hydrogène et l'autre est l'un des groupes mentionnés ci-dessus, ou $R^{34}$ $R^{35}$= représente un groupe adamantylidène ;

où au moins l'un de Q, $R^{30}$, $R^{34}$, $R^{35}$ et $R^{36}$ comprend le groupe $L(R)_n$ ;

des colorants azoïques de la formule XL

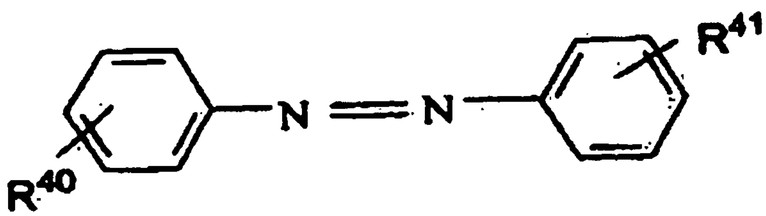

XL

où

$R^{40}$ et $R^{41}$ sont indépendamment sélectionnés du groupe composé d'hydrogène, d'alkyle en $C_1$ à $C_6$ ; d'alcoxy en $C_1$ à $C_6$, de -$NR^{42}R^{43}$ où $R^{42}$ et $R^{43}$ sont comme définis pour $R^{26}$ et $R^{27}$ ; d'aryle (tel qu'un phényle), d'aryle substitué avec un ou plusieurs substituants sélectionnés parmi un alkyle en $C_1$ à $C_6$ et un alcoxy en $C_1$ à $C_6$, un alkyle en $C_1$ à $C_6$ substitué où le substituant est sélectionné parmi un aryle et un alcoxy en $C_1$ à $C_6$, un alcoxy en $C_1$ à $C_6$ substitué où le substituant est sélectionné parmi un alcoxy aryle en $C_1$ à $C_6$ et un aryloxy ; et

des diarylperfluorocyclopentènes répondant à la formule suivante

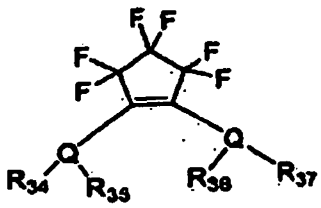

XXXV

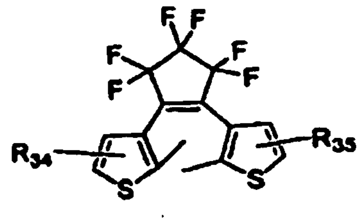

XXXVI

où

un aromatique substitué, un hétéroaromatique éventuellement substitué (où ledit aromatique/hétéroaromatique peut être un aromatique/hétéroaromatique mono ou polycyclique) ;
$R^{34}$, $R^{35}$, $R^{36}$, $R^{37}$ représente indépendamment un alkyle en $C_1$ à $C_4$, un phényle ou un phénalkyle en ($C_1$ à $C_4$) de ou l'un de $R^{34}$, de $R^{35}$, de $R^{36}$, de $R^{37}$ est l'hydrogène et les autres sont l'un des groupes mentionnés ci-dessus ; et où au moins l'un de Q, de $R^{34}$, de $R^{35}$, de $R^{36}$, de $R^{37}$ comprend le groupe $L(R)_n$.

**28.** Article photochrome selon la revendication 26 dans lequel l'oligomère R est sélectionné parmi les groupes des formules (I) à (ii) suivantes :

(i)

**-(X)p (CH2 (CF2CF2)xR2;**

(ii)

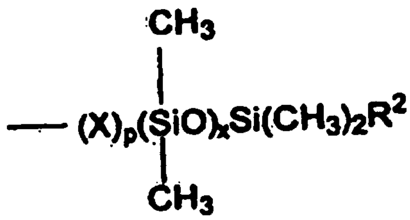

(iii)

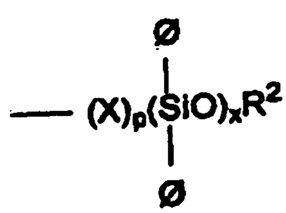

où ø est un alkyle ou un aryle et comporte au moins une partie de groupes aryle ;
(vi)

**-Xp (CF2CF2O)x-(CF2)nR2**

(v)

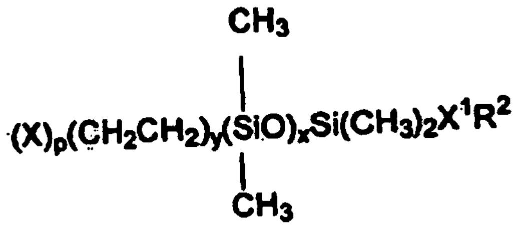

(vi)

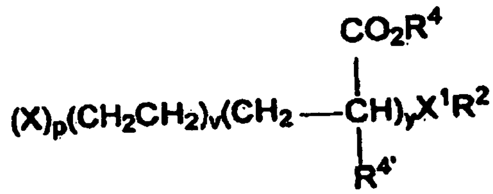

où X, X' et $R^2$ et p sont définis ci-dessus et x, v et y sont le nombre d'unités de répétition, et l'alkyle est un alkyle en $C_1$ à $C_{20}$, de préférence un alkyle en $C_1$ à $C_{10}$ tel qu'un méthyle, un éthyle, un propyle, un butyle, un pentyle ou un héxyle.

**29.** Article photochrome selon la revendication 28 dans lequel le nombre d'unités monomères (x ou y+v dans les exemples ci-dessus) est au moins 5.

**30.** Procédé pour la préparation d'un article photochrome comprenant le fait de :

(a) former une composition polymérisable selon la revendication 2 ;
(b) couler la composition polymérisable ou l'appliquer en tant que revêtement à un substrat ; et
(c) polymériser la composition polymérisable afin de fournir une matrice polymérique incorporant une unité monomérique photochrome comprenant un groupe caractéristique photochrome attaché de manière covalente au polymère de matrice à travers un oligomère comprenant au moins 7 unités monomères sélectionnées du groupe composé d'alkylènyloxy, de fluoroalkylènyloxy et de di-(hydrocarbyl)siloxane.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 9705213 A
- WO 0115629 A
- US 20030141490 A
- WO 2004041961 A1
- US 9712540 W
- WO 9801478 A
- US 5362826 A
- US 5324879 A
- WO 9731030 A
- US 6100350 A
- US 9514428 W
- WO 960704 A
- US 5756605 A
- US 6291620 B
- US 4581429 A, Solomon
- US 5776376 A
- US 4062865 A
- US 4912155 A
- US 781392 A
- AU 5058193
- AU 5058293
- EP 453159 A2
- AU 8121687
- AU 7516091
- US 2370567 A
- US 2403113 A
- AU 0301453 W
- WO 2004041961 A


### Non-patent literature cited in the description


- **Hu et al.** *Pure Appl. Chem. AA,* 1996, 803-810
- **Matyjaszewski ; Xia.** *Chemical Reviews,* 2001, vol. 101, 2921-2990
- **Piirma et al.** *J. Appl. Poly. Sci.,* 1979, vol. 24, 2051
- *J. Appl. Polym. Sci,* 1981, vol. 26, 3013
- *J. Appl. Polym. Sci,* 1987, vol. 33, 717
- **Reeb et al.** *Eur. Polym. J.,* 1976, vol. 12, 317
- *Poym. Prepr., Am. Chem. Soc., Div. Polym., Chem.,* 1980, vol. 21, 55
- **Riess et al.** *Eur. Polym. J.,* 1975, vol. 11, 301
- *Inf. Chim.,* 1973, vol. 116, 117
- **Yoshida et al.** Synthesis of Polystyrene having an Aminoxy Terminal by the Reactions of Living Polystyrene with Oxoaminium Salt and with Corresponding Nitroxyl Radical. *Macromolecules,* vol. 27 (12), 3119-3124
- **Vinchon et al.** Preparation de Promoteurs Azoiques Macromoleculaires Par Voie Anionique. *European Polymer Journal,* vol. 12, 317-321
- **Gale ; Wiltshire.** *J. Soc. Dye and Colourants,* 1974, vol. 90, 97-00
- **Gale ; Lin.** *Aust. J. Chem.,* 1977, vol. 30, 689-94
- *Tetrahedron Lett.,* 1973, vol. 12, 903-6
- **Giles ; Hay ; Howdle ; Winder.** *Polymer,* 2000, vol. 42, 6715-6721
- **T.W. Greene ; P.G. M. Wuts.** Protective Groups in Organic Synthesis. John Wiley and Sons
- **Perrier et al.** *Macromolecules,* 2005, vol. 38, 2033-2036
- **A. Bongini ; G. Cardillo ; M. Orena ; S. Sandri.** *Synthesis,* 1979, 618
- **T. W. Greene ; P.G.M Wuts.** Protective Groups in Organic Synthesis. Wiley-interscience, 32-33